# EUROPÄISCHE PATENTSCHRIFT

(11) **EP 1 651 044 B1**
(45) Veröffentlichungstag und Bekanntmachung des Hinweises auf die Patenterteilung: **02.01.2008**
(21) Anmeldenummer: 04763234.4
(22) Anmeldetag: 15.07.2004
(51) Int. Cl.: A01N 47/36, A01N 25/00

(54) **FLÜSSIGE FORMULIERUNG**
LIQUID FORMULATION
FORMULATION LIQUIDE

(30) Priorität: 28.07.2003 DE 10334301
(43) Veröffentlichungstag der Anmeldung: 03.05.2006
(73) Patentinhaber: Bayer CropScience AG, 40789 Monheim (DE)
(72) Erfinder: HAASE, Detlev, 65929 Frankfurt (DE); KRAUSE, Hans-Peter, 65719 Hofheim (DE); SCHNABEL, Gerhard, 63820 Elsenfeld (DE); DECKWER, Roland, 65929 Frankfurt (DE)
(86) Internationale Anmeldenummer: PCT/EP2004/007835
(87) Internationale Veröffentlichungsnummer: WO 2005/011382

(56) Entgegenhaltungen:
- EP-A- 0 554 015
- WO-A-01/30156
- WO-A-01/82693
- WO-A-02/067676
- WO-A-20/04054360
- WO-A-20/04054364
- US-A- 5 731 264

## Beschreibung

Die vorliegende Erfindung betrifft das Gebiet der Pflanzenschutzmittelformulierungen. Insbesondere betrifft die Erfindung flüssige Formulierungen, welche herbizide Wirkstoffe aus der Gruppe der Sulfonamide (Acetolactatsynthetase-Hemmer) enthalten.

Wirkstoffe für den Pflanzenschutz werden im allgemeinen nicht in ihrer reinen Form eingesetzt. In Abhängigkeit von dem Anwendungsgebiet und der Anwendungsart, sowie von physikalischen, chemischen und biologischen Parametern wird der Wirkstoff in Mischung mit üblichen Hilfs- und Zusatzstoffen als Wirkstoffformulierung eingesetzt. Auch die Kombinationen mit weiteren Wirkstoffen zur Erweiterung des Wirkungsspektrum und/oder zum Schutz der Kulturpflanzen (z.B. durch Safener, Antidote) sind bekannt.

Formulierungen von Wirkstoffen für den Pflanzenschutz sollten im allgemeinen eine hohe chemische und physikalische Stabilität, eine gute Applizierbarkeit und Anwenderfreundlichkeit und eine breite biologische Wirkung mit hoher Selektivität aufweisen.

Herbizide Wirkstoffe aus der Gruppe der ALS-Inhibitoren (Acetolactatsynthetase-Hemmer), wie Sulfonylharnstoffe, können ein hohes Maß an chemischer Reaktivität aufweisen und zum chemischen Abbau, z.B. durch Hydrolyse neigen.

Eine Möglichkeit chemisch labile Wirkstoffe zu formulieren, ist die Herstellung fester Formulierungen. So sind z.B. Formulierungen von ALS-Inhibitoren wie Wirkstoffen aus der Gruppe der Sulfonylharnstoffe in Form von Pulvern, Granulaten und Tabletten bekannt (z. B. in EP 764404, WO 9834482, WO 9313658). Die Verfahren zur Herstellung von festen Formulierungen, z.B. in Form von Granulaten und Tabletten sind jedoch im allgemeinen aufwendig, insbesondere wenn niedrig schmelzende Wirkstoffe oder Hilfs- und Zusatzstoffe eingearbeitet werden. Außerdem sind feste Formulierungen im allgemeinen schwieriger zu applizieren und weniger anwenderfreundlich.

Flüssige Formulierungen von ALS-Inhibitoren wie Sulfonylharnstoffen sind z.B. beschrieben in US 4599412, US 4683000, US 4671817, EP 0245058, US 5731264 WO 01/82693, EP 0313317, EP 0514768, EP 0163598 und EP 0514769.

Die Aufgabe der vorliegenden Erfindung bestand darin, eine verbesserte Pflanzenschutzmittelformulierung zur Verfügung zu stellen, welche eine hohe chemische und physikalische Stabilität sowie eine hohe biologische Effektivität und Kulturpflanzenverträglichkeit aufweist.

Diese Aufgabe wird gelöst durch die spezielle flüssige Formulierung der vorliegenden Erfindung.

Die vorliegende Erfindung betrifft somit eine Flüssigformulierung, enthaltend
a) ein oder mehrere herbizide Wirkstoffe aus der Gruppe der Sulfonamide,
b) ein oder mehrere organische Lösungsmittel, und
c) ein oder mehrere anorganische Salze.
   Darüber hinaus kann die erfindungsgemäße Flüssigformulierung gegebenenfalls noch weitere Komponenten enthalten, z.B.:
d) einen oder mehrere von a) verschiedene agrochemische Wirkstoffe,
e) ein oder mehrere Sulfosuccinate, und/oder
f) übliche Hilfs- und Zusatzstoffe.

Die erfindungsgemäße Flüssigformulierung ist auf Basis organischer Lösungsmittel b) aufgebaut. Dabei können die weiteren Komponenten der Flüssigformulierung in den organischen Lösungsmitteln vollständig gelöst, teilweise gelöst und teilweise suspendiert, oder auch vollständig suspendiert sein. Die Flüssigformulierung kann z.B. ein Emulsionskonzentrat (EC) oder ein Ölsuspensionskonzentrat (OD), bevorzugt ein Ölsuspensionskonzentrat sein.

Als Sulfonamide a) kommen beispielsweise Verbindungen in Frage aus der Gruppe der

Triazolopyrimidinsulfonamide oder Sulfonylaminocarbonyltriazolinone, vorzugsweise Phenylsulfonylaminocarbonyltriazolinone, z.B. Flucarbazone oder Propoxycarbazone und/deren Salze, oder wie Sulfonylharnstoffe, vorzugsweise Phenylsulfonylharnstoffe.

Bevorzugte Sulfonamide entstammen aus der Reihe der Sulfonylharnstoffe, z.B. Pyrimidin- oder Triazinylaminocarbonyl-[benzol-, pyridin-, pyrazol-, thiophen- und (alkylsulfonyl)-alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen- oder (Alkylsulfonyl)-alkylamino-Teil sind Alkyl, Alkoxy, Halogen wie F, Cl, Br oder J, Amino, Alkylamino, Dialkylamino, Acylamino wie Formylamino, Nitro, Alkoxycarbonyl, Aminocarbonyl, Alkylaminocarbonyl, Dialkylaminocarbonyl, Alkoxyaminocarbonyl, Halogenalkoxy, Halogenalkyl, Alkylcarbonyl, Alkoxyalkyl, Alkylsulfonylaminoalkyl, (Alkansulfonyl)alkylamino. Solche geeigneten Sulfonylharnstoffe sind beispielsweise
A1) Phenyl- und Benzylsulfonylharnstoffe und verwandte Verbindungen, z.B. 1-(2-Chlorphenylsuffonyl)-3-(4-methoxy-6-methyl-1,3,5-triazin-2-yl)harnstoff (Chlorsulfuron),
   1-(2-Ethoxycarbonylphenylsulfonyl)-3-(4-chlor-6-methoxypyrimidin-2-yl)hamstoff (Chlorimuron-ethyl),
   1-(2-Methoxyphenylsulfonyl)-3-(4-methoxy-6-methyl-1,3,5-triazin-2-yl)hamstoff (Metsulfuron-methyl),
   1-(2-Chlorethoxyphenylsulfonyl)-3-(4-methoxy-6-methyl-1,3,5-triazin-2-yl)harn-stoff (Triasulfuron),
   1-(2-Methoxycarbonylphenylsulfonyl)-3-(4,6-dimethylpyrimidin-2-yl)hamstoff (Sulfumeturon-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylbenzylsulfonyl)-3-(4,6-dimethoxypyrimidin-2-yl)harnstoff (Bensulfuron-methyl),
   1-(2-Methoxycarbonylphenylsulfonyl)-3-(4,6-bis-(diftuormethoxy)pyrimidin-2-yf)-harnstoff, (Primisulfuron-methyl),
   3-(4-Ethyl-6-methoxy-1,3, 5-triazin-2-yl)-1-(2,3-dihydro-1,1-dioxo-2-methylbenzo-[b]thiophen-7-sulfonyl)harnstoff (EP-A 0 796 83),
   3-(4-Ethoxy-6-ethyl-1,3,5-triazin-2-yl)-1-(2,3-dihydro-1,1-dioxo-2-methylbenzo[b]-thiophen-7-sulfonyl)harnstoff (EP-A 0 079 683),
   3-(4-Methoxy-6-methyl-1,3,5-triazin-2-yl)-1-(2-methoxycarbonyl-5-jod-phenylsulfonyl)-hamstoff (lodosulfuron-methyl und dessen Salze wie das Natriumsalz, WO 92/13845),
   DPX-66037, Triflusulfuron-methyl (s. Brighton Crop Prot. Conf. - Weeds - 1995, S. 853),
   CGA-277476, (s. Brighton Crop Prot. Conf. - Weeds - 1995, S. 79),
   Methyl-2-[3-(4,6-dimethoxypyrimidin-2-yl)ureidosulfonyl]-4-methansulfon-amido-methyl-benzoat (Mesosulfuron-methyl und dessen Salze wie das Natriumsalz, WO 95/10507),
   N,N-Dimethyl-2-[3-(4,6-dimethoxypyrimidin-2-yl)ureidosulfonyl]-4-formylamino-benzamid (Foramsulfuron und dessen Salze wie das Natriumsalz, WO 95/01344);
A2) Thienylsulfonylhamstoffe, z.B.
   1-(2-Methoxycarbonylthiophen-3-yl)-3-(4-methoxy-6-methyl-1,3,5-triazin-2-yl)harnstoff (Thifensulfuron-methyl);
A3) Pyrazolylsulfonylhamstoffe, z.B.
   1-(4-Ethoxycarbonyl-1-methylpyrazol-5-yl-sulfonyl)-3-(4,6-dimethoxypyrimidin-2-yl)harnstoff (Pyrazosulfuron-methyl);
   Methyl-3-chlor-5-(4,6-dimethoxypyrimidin-2-ylcarbamoylsulfamoyl)-1-methyl-pyrazol-4-carboxylat (EP-A 0 282 613);
   5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference'Weeds' 1991, Vol. 1, S. 45 ff.),
   DPX-A8947, Azimsulfuron, (s. Brighton Crop Prot. Conf. 'Weeds' 1995, S. 65);
A4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und dessen Strukturanaloge (EP-A 0 131 258 und Z. Pfl. Krankh. Pfl. Schutz, Sonderheft XII, 489-497 (1990));
A5) Pyridylsulfonylharnstoffe, z.B.
   1-(3-N,N-Dimethylaminocarbonylpyridin-2-ylsulfonyl)-3-(4,6-dimethoxypyrimidin-2-yl)harnstoff (Nicosulfuron),
   1-(3-Ethylsulfonylpyridin-2-ylsulfonyl)-3-(-(4,6-dimethoxypyrimidin-2-yl)harnstoff (Rimsulfuron),
   2-[3-(4,6-Dimethoxypyrimidin-2-yl)ureidosulfonyl]-6-trifluormethyl-3-pyridin-carbonsäuremethylester, Natriumsalz (DPX-KE 459, Flupyrsulfuron, s. Brighton Crop Prot. Conf. Weeds, 1995, S. 49),
   Pyridylsulfonylharnstoffe, wie sie z.B. in DE-A 40 00 503 und DE-A 40 30 577 beschrieben sind, vorzugsweise solche der Formel 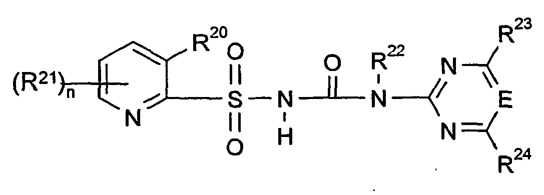 worin
   - E: CH oder N, vorzugsweise CH,
   - R²⁰: Jod oder NR²⁵R²⁶,
   - R²¹: Wasserstoff, Halogen, Cyano, (C₁-C₃)-Alkyl, (C₁-C₃)-Alkoxy, (C₁-C₃)-Halogenalkyl, (C₁-C₃)-Halogenalkoxy, (C₁-C₃)-Alkylthio, (C₁-C₃)-Alkoxy-(C₁-C₃)-alkyl, (C₁-C₃)-Alkoxy-carbonyl, Mono- oder Di-((C₁-C₃)-alkyl)-amino, (C₁-C₃)-Alkylsulfinyl oder -sulfonyl, SO₂-NR^{x}R^{y} oder CO-NR^{x}R^{y}, insbesondere Wasserstoff,
   - R^{x}, R^{y}: unabhängig voneinander Wasserstoff, (C₁-C₃)-Alkyl, (C₁-C₃)-Alkenyl, (C₁-C₃)-Alkinyl oder zusammen -(CH₂)₄-, -(CH₂)₅- oder -(CH₂)₂-O-(CH₂)₂-,
   - n: 0,1,2 oder 3, vorzugsweise 0 oder 1 ist,
   - R²²: Wasserstoff oder CH₃,
   - R²³: Halogen, (C₁-C₂)-Alkyl, (C₁-C₂)-Alkoxy, (C₁-C₂)-Halogenalkyl, insbesondere CF₃, (C₁-C₂)-Halogenalkoxy, vorzugsweise OCHF₂ oder OCH₂CF₃,
   - R²⁴: (C₁-C₂)-Alkyl, (C₁-C₂)-Halogenalkoxy, vorzugsweise OCHF₂, oder (C₁-C₂)-Alkoxy,
   - R²⁵: (C₁-C₄)-Alkyl,
   - R²⁶: (C₁-C₄)-Alkylsulfonyl oder
   - R²⁵ und R²⁶: gemeinsam eine Kette der Formel -(CH₂)₃SO₂- oder -(CH₂)₄SO₂-bedeuten, z.B. 3-(4,6-Dimethoxypyrimiden-2-yl)-1-(3-N-methylsulfonyl-N-methyl-aminopyridin-2-yl)-sulfonylharnstoff, oder deren Salze;
A6) Alkoxyphenoxysulfonylharnstoffe, wie sie z.B. in EP-A 0 342 569 beschrieben sind, vorzugsweise solche der Formel 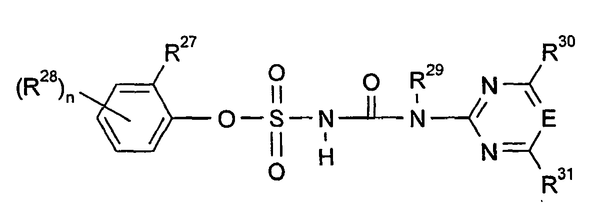 worin
   - E: CH oder N, vorzugsweise CH,
   - R²⁷: Ethoxy, Propoxy oder Isopropoxy,
   - R²⁸: Halogen, NO₂, CF₃, CN, (C₁-C₄)-Alkyl, (C₁-C₄)-Alkoxy, (C₁-C₄)-Alkylthio oder (C₁-C₃)-Alkoxy)-carbonyl, vorzugsweise in 6-Position am Phenylring,
   - n: 0, 1, 2 oder 3, vorzugsweise 0 oder 1,
   - R²⁹: Wasserstoff, (C₁-C₄)-Alkyl oder (C₃-C₄)-Alkenyl,
   - R³⁰, R³¹: unabhängig voneinander Halogen, (C₁-C₂)-Alkyl, (C₁-C₂)-Alkoxy, (C₁-C₂)-Halogenalkyl, (C₁-C₂)-Halogenalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfonythamstoff, oder deren Salze;
A7) Imidazolylsulfonylhamstoffe, z.B.
   MON 37500, Sulfosulfuron (s. Brighton Crop Prot. Conf. 'Weeds', 1995, S: 57), und andere verwandte Sulfonylharnstoff-Derivate und Mischungen daraus.

Typische Vertreter dieser Wirkstoffe sind unter anderem die nachfolgend aufgeführten Verbindungen: Amidosulfuron, Azimsulfuron, Bensulfuron-methyl, Chlorimuron-Ethyl, Chlorsulfuron, Cinosulfuron, Cyclosulfamuron, Ethametsulfuronmethyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, lodosuffuron-Methyl und dessen Natriumsalz (WO 92/13845), Mesosulfuron-Methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd. 1999)).

Die vorstehend aufgeführten Wirkstoffe sind z.B. bekannt aus "The Pesticide Manual", 13. Auflage (2003), The British Crop Protection Council oder den nach den einzelnen Wirkstoffen aufgeführten Literaturstellen.

Weitere geeignete Sulfonamide sind z.B.

### C) Triazolopyrimidinsulfonamide, z.B.

N-(2,6-Difluorphenyl)-7-methyl-1,2,4-triazolo[1,5-c]pyrimidin-2-sulfonamid (Flumetsulam),
N-(2,6-Dichlor-3-methylphenyl)-5,7-dimethoxy-1,2,4-triazolo[1,5-c]pyrimidin-2-sulfonamid,
N-(2,6-Difluorphenyl)-7-fluor-5-methoxy-1,2,4-triazolo[1,5-c]pyrimidin-2-sulfonamid,
N-(2,6-Dichlor-3-methylphenyl)-7-chlor-5-methoxy-1,2,4-triazolo[1,5-c]pyrimidin-2-sulfonamid,
N-(2-Chlor-6-methoxycarbonyl)-5,7-dimethyl-1,2,4-triazolo[1,5-c]pyrimidin-2-sulfonamid (EP-A 0 343 752, US-A 4,988,812);

Als Sulfonamide kommen vorzugsweise Sulfonamide der allgemeinen Formel (1) und/oder deren Salze in Frage,

R^{α}-(A)ₘ-SO₂-NR^{β}-CO-(NR^{γ})ₙ-R^{δ} (I)

worin
- R^{α}: ein Kohlenwasserstoffrest, vorzugsweise ein Arylrest wie Phenyl, der unsubstituiert oder substituiert ist, oder ein heterocyclischer Rest, vorzugsweise ein Heteroarylrest wie Pyridyl, der unsubstituiert oder substituiert ist, und wobei die Reste inklusive Substituenten 1-30 C-Atome, vorzugsweise 1-20 C-Atome aufweisen, oder R^{α} eine elektronenziehende Gruppe wie ein Sulfonamidrest ist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂, O oder NH, vorzugsweise O, ist,
- m: gleich Null oder 1,
- n: gleich Null oder 1, vorzugsweise gleich 1, und
- R^{δ}: ein heterocyclischer Rest wie ein Pyridylrest, Triazinylrest oder ein Triazolinonrest ist.

Beispiele für Sulfonamide der Formel (1) sind Sulfonylharnstoffe der Formel (11) und/oder deren Salze, 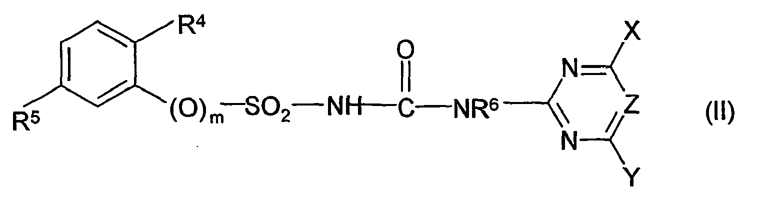 worin
- R⁴: C₁-C₄-Alkoxy, vorzugsweise C₂-C₄-Alkoxy, oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
- R⁵: Halogen, vorzugsweise Iod, oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acylrest wie Formyl oder C₁-C₄-Alkyl-Sulfonyl ist, und R⁵ für den Fall, daß R⁴ gleich C₁-C₄-Alkoxy, vorzugsweise C₂-C₄-Alkoxy, bedeutet auch H sein kann,
- R⁶: H oder C₁-C₄-Alkyl ist,
- m: gleich Null oder 1 ist,
- X und Y: unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy, und
- Z: gleich CH oder N ist.

Bevorzugt sind Sulfonylharnstoffe der allgemeinen Formel (II) und/oder deren Salze, worin
a) R⁴ gleich CO-(C₁-C₄-Alkoxy) ist, R⁵ gleich Halogen, vorzugsweise Jod ist, oder R⁵ gleich CH₂-NHR^{e} ist, worin R^{e} ein Acylrest, vorzugsweise C₁-C₄-Alkyl-Sulfonyl ist, und m gleich Null ist,
b) R⁴ gleich CO-N(C₁-C₄-Alkyl)₂, R⁵ gleich NHR^{e} ist, worin R^{e} ein Acylrest, vorzugsweise Formyl ist, und m gleich Null ist, oder
c) R⁴ gleich C₂-C₄-Alkoxy, R⁵ gleich H und m gleich 1 ist.

Besonders bevorzugte Sulfonamide sind: lodosulfuron-methyl (A1) und dessen Natriumsalz (A2), Mesosulfuron-methyl (A3) und dessen Natriumsalz (A4), Foramsulfuron (A5) und dessen Natriumsalz (A6), Flucarbazone (A7) und dessen Natriumsalz (A8), Propoxycarbazone (A9) und dessen Natriumsalz (A10), Ethoxysulfuron (A11) und dessen Natriumsalz (A12), und Amidosulfuron (A13) und dessen Natriumsalz (A14).

Die vorstehend aufgeführten Wirkstoffe sind z.B. bekannt aus "The Pesticide Manual", 13. Auflage (2003), The British Crop Protection Council oder den nach den einzelnen Wirkstoffen aufgeführten Literaturstellen.

Die herbiziden Wirkstoffe aus der Reihe der Sulfonamide sind in den erfindungsgemäßen Flüssigformulierungen im allgemeinen in Mengen von 0,01 bis 50 Gew.%, bevorzugt 0,1 bis 30 Gew.% enthalten, dabei bezieht sich die Angabe "Gew.%" hier und in der gesamten Beschreibung, wenn nicht anders definiert, auf das relative Gewicht der jeweiligen Komponente bezogen auf das Gesamtgewicht der Formulierung.

Soweit in dieser Beschreibung der Begriff Acylrest verwendet wird, bedeutet dieser den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestem, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀-Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.
Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren.

Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.

Ein aromatischer Rest oder Aromat (Aryl) bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.

Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo, z.B. im Triazolinonrest. Die Oxogruppe kann auch an den Heteroringatomen, die in verschiedenen Oxidationsstufen existieren können, z.B. bei N und S, auftreten.

Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyl, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl.

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Halogen bedeutet beispielsweise Fluor, Chlor, Brom oder Iod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl ; Haloalkoxy ist z.B. OCF₃, OCHF₂, OCH₂F, CF₃CF₂O, OCH₂CF₃ und OCH₂CH₂Cl ; entsprechendes gilt für Haloalkenyl und andere durch Halogen substituierte Reste.

Wenn im Rahmen dieser Beschreibung die Kurzform des "common name" eines Wirkstoffs verwendet wird, so sind damit jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfaßten Verbindungen, häufig eine bevorzugte Verbindung.

Unter den in den erfindungsgemäßen Flüssigformulierungen als Komponente a) enthaltenen Sulfonamide sind im Sinne der vorliegenden Erfindung neben den neutralen Verbindungen, insbesondere stets auch deren Salze mit anorganischen und/oder organischen Gegenionen zu verstehen. So können Sulfonamide z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.

Als optionale agrochemische Wirkstoffe d) können beispielsweise von Komponente a) verschiedene agrochemische Wirkstoffe wie Herbizide, Fungizide, Insektizide, Pflanzenwachstumsregulatoren, Safener und dergleichen enthalten sein. Die agrochemischen Wirkstoffe d) können in dem organischen Lösungsmittel in suspendierter und/oder gelöster Form vorliegen.

Geeignete von Komponente a) verschiedene Wirkstoffe, die in den erfindungsgemäßen Flüssigformulierungen als Komponente d) enthalten sein können, sind vorzugsweise herbizide Wirkstoffe, beispielsweise aus der Gruppe der Carbamate, Thiocarbamate, Halogenacetanilide, substituierte Phenoxy-, Naphthoxy- und Phenoxyphenoxycarbonsäure-Derivate sowie Heteroaryloxyphenoxyalkancarbonsäure-Derivate, wie Chinolyloxy-, Chinoxalyloxy-, Pyridyloxy-, Benzoxazolyloxy- und Benzthiazolyloxyphenoxyalkancarbonsäureester, Cyclohexandion-Derivate, Phosphor-haltige Herbizide, z.B. vom Glufosinate-Typ oder vom Glyphosate-Typ, sowie S-(N-Aryl-N-alkylcarbamoylmethyl)-dithiophosphorsäureester. Bevorzugt sind dabei Phenoxyphenoxy- und Heteroaryloxyphenoxycarbonsäureester und -salze wie Fenoxaprop sowie Herbizide wie Bentazon, Cyanazin, Atrazin, Diflufenican, Dicamba, 2,4-D oder Hydroxybenzonitrile wie Bromoxynil und loxynil und andere Blattherbizide, z.B.:
E) Herbizide vom Typ der Phenoxyphenoxy- und Heteroaryloxyphenoxycarbonsäure-Derivate, wie
   E1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl),
      2-(4-(4-Brom-2-chlorphenoxy)phenoxy)propionsäuremethylester (DE-A 26 01 548),
      2-(4-(4-Brom-2-fluorphenoxy)phenoxy)propionsäuremethylester (US-A 4,808,750),
      2-(4-(2-Chlor-4-trifluormethylphenoxy)phenoxy)propionsäuremethylester (DE-A 24 33 067),
      2-(4-(2-Fluor-4-trifluormethylphenoxy)phenoxy)propionsäuremethylester (US-A 4,808,750),
      2-(4-(2,4-Dichlorbenzyl)phenoxy)propionsäuremethylester (DE-A 24 17 487),
      4-(4-(4-Trifluormethylphenoxylphenoxy)pent-2-en-säureethylester,
      2-(4-(4-Trifluormethylphenoxy)phenoxy)propionsäuremethylester (DE-A 24 33 067);
   E2) "Einkernige" Heteroaryloxyphenoxy-alkancarbonsäure-Derivate, z.B.
      2-(4-(3,5-Dichlorpyridyl-2-oxy)phenoxy)propionsäureethylester (EP-A 0 002 925),
      2-(4-(3,5-Dichlorpyridyl-2-oxy)phenoxy)propionsäurepropargylester (EP-A 0 003 114),
      2-(4-(3-Chlor-5-trifluormethyl-2-pyridyloxy)phenoxy)propionsäure-methylester (EP-A 0 003 890),
      2-(4-(3-Chlor-5-trifluormethyl-2-pyridyloxy)phenoxy)propionsäureethylester (EP-A 0 003 890),
      2-(4-(5-Chlor-3-fluor-2-pyridyloxy)phenoxy)propionsäurepropargylester (EP-A 0 191 736),
      2-(4-(5-Trifluormethyl-2-pyridyloxy)phenoxy)propionsäurebutylester (Fluazifop-butyl);
   E3) "Zweikernige" Heteroaryloxyphenoxy-alkancarbonsäure-Derivate, z.B.
      2-(4-(6-Chlor-2-chinoxalyloxy)phenoxy)propionsäuremethylester und -ethylester (Quizalofopmethyl und Quizalofopethyl),
      2-(4-(6-Fluor-2-chinoxalyloxy)phenoxy)propionsäuremethylester (s. J. Pest. Sci. Vol. 10, 61 (1985)),
      2-(4-(6-Chlor-2-chinoxalyloxy)phenoxy)propionsäure-2-isopropylidenaminooxyethylester (Propaquizafop),
      2-(4-(6-Chlorbenzoxazol-2-yl-oxy)phenoxy)propionsäureethylester (Fenoxapropethyl) und dessen D(+) Isomer (Fenoxaprop-P-ethyl, EX) und 2-(4-(6-Chlorbenzthiazol-2-yloxy)phenoxy)propionsäureethylester (DE-A 26 40 730),
      2-(4-(6-Chlorchinoxalyloxy)phenoxy)propionsäure-tetrahydro-2-furylmethylester (EP-A 0 323 727);
F) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
G) Thiocarbamate, z.B.
   S-Ethyl-N,N-dipropylthiocarbamat (EPTC),
   S-Ethyl-N,N-diisobutylthiocarbamat (Butylate);
H) Cyclohexandionoxime, z.B.
   3-(1-Allyloxyiminobutyl)-4-hydroxy-6,6-dimethyl-2-oxocyclohex-3-encarbonsäuremethylester, (Alloxydim),
   2-(1-Ethoxyiminobutyl)-5-(2-ethylthiopropyl)-3-hydroxy-cyclohex-2-en-1-on (Sethoxydim),
   2-(1-Ethoxyiminobutyl)-5-(2-phenylthiopropyl)-3-hydroxy-cyclohex-2-en-1-on (Cloproxydim),
   2-(1-(3-Chlorallyloxy)iminobutyl)-5-(2-ethylthiopropyl)-3-hydroxy-cyclohex-2-en-1-on,
   2-(1-(3-Chlorallyloxy)iminopropyl)-5-(2-ethylthiopropyl)-3-hydroxy-cyclohex-2-en-1-on (Clethodim),
   2-(1-Ethoxyiminobutyl)-3-hydroxy-5-(thian-3-yl)-cyclohex-2-enon (Cycloxydim), 2-(1-Ethoxyiminopropyl)-5-(2,4,6-trimethylphenyl)-3-hydroxy-cyclohex-2-en-1-on (Tralkoxydim);
I) Benzoylcyclohexandione, z.B.
   2-(2-Chlor-4-methylsulfonylbenzoyl)-cyclohexan-1,3-dion (SC-0051, EP-A 0 137 963,
   Sylcotrione), 2-(2-Nitrobenzoyl)-4,4-dimethyl-cyclohexan-1,3-dion (EP-A 0 274 634),
   2-(2-Nitro-4-methylsulfonylbenzoyl)-4,4-dimethylcyclohexan-1,3-dion (WO 91/13548, Mesotrione);
J) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
K) Alkylazine, z.B. wie beschrieben in WO-A 97/08156, WO-A-97/31904, DE-A-19826670, WO-A-98/15536, WO-A-8/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (K) 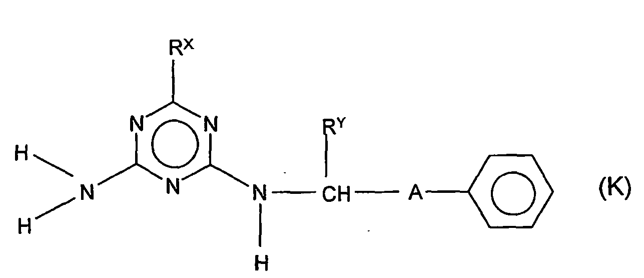 worin
   - R^{X}: (C₁-C₄)-Alkyl oder (C₁-C₄)-Haloalkyl;
   - R^{Y}: (C₁-C₄)-Alkyl, (C₃-C₆)-Cycloalkyl oder (C₃-C₆)-Cycloalkyl-(C₁-C₄)-Alkyl und
   - A: -CH₂-, -CH₂-CH₂-, -CH₂-CH₂-CH₂-, -O-, -CH₂-CH₂-O-, -CH₂-CH₂-CH₂-O-
   bedeuten, besonders bevorzugt solche der Formel K1-K7 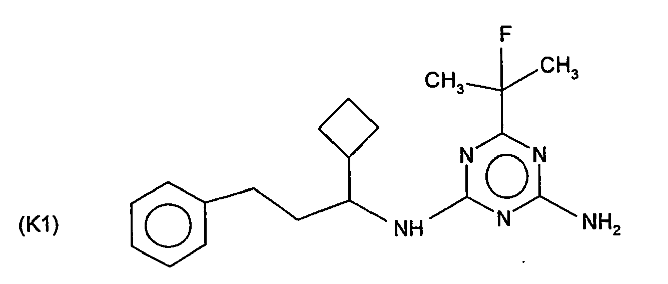 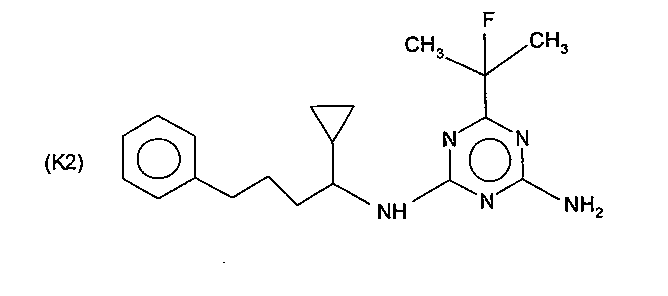 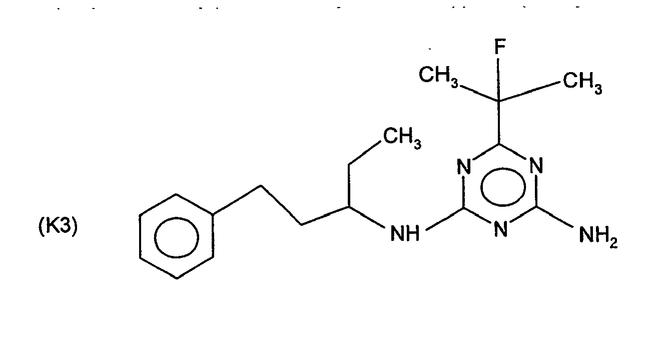 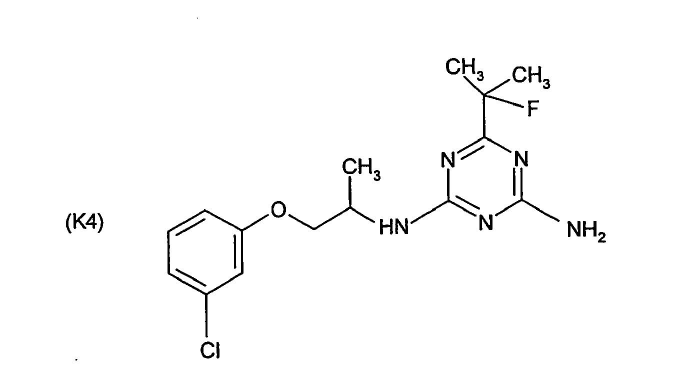 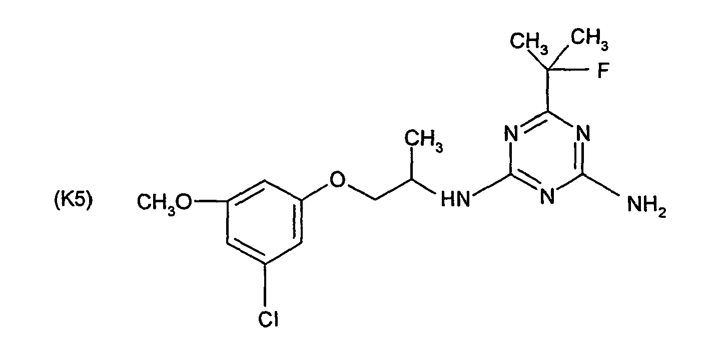 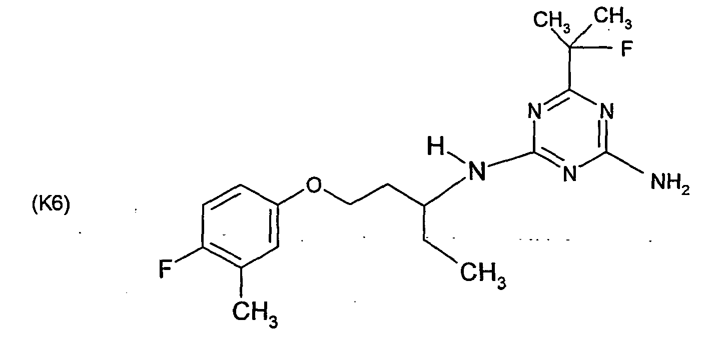 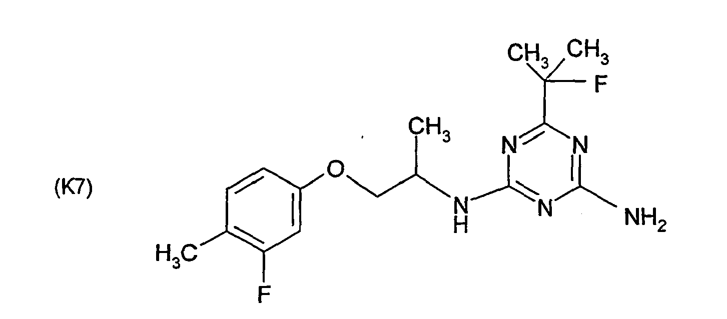
L) Phosphor-haltige Herbizide, z.B. vom Glufosinate-Typ wie Glufosinate im engeren Sinne, d. h. D,L-2-Amino-4-[hydroxy(methyl)phosphinyl]-butansäure, Glufosinate-monoammoniumsalz, L-Glufosinate, L- oder (2S)-2-Amino-4-[hydroxy(methyl)phosphinyl]-butansäure, L-Glufosinate-monoammoniumsalz oder Bialaphos (oder Bilanafos), d.h. L-2-Amino-4-[hydroxy(methyl)phosphinyl]-butanoyl-L-alanyl-L-alanin, insbesondere dessen Natriumsalz,
   oder vom Glyphosate-Typ wie Glyphosate, d. h. N-(Phosphonomethyl)-glycin, Glyphosate-monoisopropylammoniumsalz, Glyphosate-natriumsalz, oder Sulfosate, d. h. N-(Phosphonomethyl)-glycin-trimesiumsalz = N-(Phosphonomethyl)-glycintrimethylsulfoxoniumsalz.

Die Herbizide der Gruppen E bis L sind beispielsweise aus den oben jeweils genannten Schriften und aus "The Pesticide Manual", 12. Auflage, 2000, The British Crop Protection Council, "Agricultural Chemicals Book II - Herbicides -", by W.T. Thompson, Thompson Publications, Fresno CA, USA 1990 und "Farm Chemicals Handbook '90", Meister Publishing Company, Willoughby OH, USA,1990, bekannt.

Als Komponente d) können in den erfindungsgemäßen Flüssigformulierungen auch Safener enthalten sein, die geeignet sind, Schäden an der Kulturpflanze zu reduzieren oder zu vermeiden. Geeignete Safener sind z.B. aus WO-A-96/14747 und der dort zitierten Literatur bekannt.

Folgende Gruppen von Verbindungen sind beispielsweise als Safener geeignet:
1) Verbindungen vom Typ der Dichlorphenylpyrazolin-3-carbonsäure (S1), vorzugsweise Verbindungen wie
   1-(2,4-Dichlorphenyl)-5-(ethoxycarbonyl)-5-methyl-2-pyrazolin-3-carbonsäureethylester (S1-1, Mefenpyr-diethyl, PM S. 781 - 782), und verwandte Verbindungen, wie sie in der WO 91/07874 beschrieben sind,
2) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.
3) Verbindungen vom Typ der Triazolcarbonsäuren (S1), vorzugsweise Verbindungen wie Fenchlorazol, d.h.
   1-(2,4-Dichlorphenyl)-5-trichlormethyl-(1 H)-1,2,4-triazol-3-carbonsäureethylester (S1-6), und verwandte Verbindungen (siehe EP-A-174 562 und EP-A-346 620);
4) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäure und deren Ethylester (S1-9, Isoxadifen-ethyl) oder -n-Propylester (S1-10) oder der 5-(4-Fluorphenyl)-5-phenyl-2-isoxazolin-3-carbonsäureethylester (S1-11), wie sie in der Patentanmeldung (WO-A-95/07897) beschrieben sind.
5) Verbindungen vom Typ der 8-Chinolinoxyessigsäure (S2), vorzugsweise
   (5-Chlor-8-chinolinoxy)-essigsäure-(1-methyl-hex-1-yl)-ester (S2-1 Cloquintocet-mexyl, PM S. 263 - 264),
   (5-Chlor-8-chinolinoxy)-essigsäure-(1,3-dimethyl-but-1-yl)-ester (S2-2),
   (5-Chlor-8-chinolinoxy)-essigsäure-4-allyl-oxy-butylester (S2-3),
   (5-Chlor-8-chinolinoxy)-essigsäure-1-allyloxy-prop-2-ylester (S2-4),
   (5-Chlor-8-chinolinoxy)-essigsäureethylester (S2-5),
   (5-Chlor-8-chinolinoxy)-essigsäuremethylester (S2-6),
   (5-Chlor-8-chinolinoxy)-essigsäureallylester (S2-7),
   (5-Chlor-8-chinolinoxy)-essigsäure-2-(2-propyliden-iminoxy)-1-ethylester (S2-8),
   (5-Chlor-8-chinolinoxy)-essigsäure-2-oxo-prop-1-ylester (S2-9)
   und verwandte Verbindungen, wie sie in EP-A-86 750, EP-A-94 349 und EP-A-191 736 oder EP-A-0 492 366 beschrieben sind.
6) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
7) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
8) Wirkstoffe vom Typ der Pyrimidine, wie "Fenclorim" (PM, S. 512-511) (= 4,6-Dichlor-2-phenylpyrimidin),
9) Wirkstoffe vom Typ der Dichloracetamide, die häufig als Vorauflaufsafener (bodenwirksame Safener) angewendet werden, wie z.B.
   "Dichlormid" (PM, S. 363-364) (= N,N-Diallyl-2,2-dichloracetamid),
   AR-29148" (= 3-Dichloracetyl-2,2,5-trimethyl-1,3-oxazolidon von der Firma Stauffer),
   "Benoxacor" (PM, s. 102-103) (= 4-Dichloracetyl-3,4-dihydro-3-methyl-2H-1,4-benzoxazin).
   APPG-1292" (= N-Allyl-N[(1,3-dioxolan-2-yl)-methyl]dichloracetamid von der Firma PPG Industries),
   ADK-24" (= N-Allyl-N-[(allylaminocarbonyl)-methyl]-dichloracetamid von der Firma Sagro-Chem),
   AAD-67" oder AMON 4660" (= 3-Dichloracetyl-1-oxa-3-aza-spiro[4,5]decan von der Firma Nitrokemia bzw. Monsanto),
   "Diclonon" oder ABAS145138" oder ALAB145138" (= (= 3-Dichloracetyl-2,5,5-trimethyl-1,3-diazabiclyco[4.3.0]nonan von der Firma BASF) und
   "Furilazol" oder AMON 13900" (siehe PM, 637-638) (= (RS)-3-Dichloracetyl-5-(2-furyl)-2,2-dimethyloxazolidon)
10) Wirkstoffe vom Typ der Dichloracetonderivate, wie z.B.
   AMG 191" (CAS-Reg. Nr. 96420-72-3) (= 2-Dichlormethyl-2-methyl-1,3-dioxolan von der Firma Nitrokemia),
11) Wirkstoffe vom Typ der Oxyimino-Verbindungen, die als Saatbeizmittel bekannt sind, wie z.B.
   "Oxabetrinil" (PM, S. 902-903) (= (Z)-1,3-Dioxolan-2-ylmethoxyimino(phenyl)acetonitril), das als Saatbeiz-Safener gegen Schäden von Metolachlor bekannt ist,
   "Fluxofenim" (PM, S. 613-614) (= 1-(4-Chlorphenyl)-2,2,2-trifluor-1-ethanon-O-(1,3-dioxolan-2-ylmethyl)-oxim, das als Saatbeiz-Safener gegen Schäden von Metolachlor bekannt ist, und
   "Cyometrinil" oder A-CGA-43089" (PM, S. 1304) (= (Z)-Cyanomethoxyimino (phenyl)acetonitril), das als Saatbeiz-Safener gegen Schäden von Metolachlor bekannt ist,
12) Wirkstoffe vom Typ der Thiazolcarbonsäureester, die als Saatbeizmittel bekannt sind, wie z.B.
   "Flurazol" (PM, S. 590-591) (= 2-Chlor-4-trifluormethyl-1,3-thiazol-5-carbonsäurebenzylester), das als Saatbeiz-Safener gegen Schäden von Alachlor und Metolachlor bekannt ist,
13) Wirkstoffe vom Typ der Napthalindicarbonsäurederivate, die als Saatbeizmittel bekannt sind, wie z.B.
   "Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,
14) Wirkstoffe vom Typ Chromanessigsäurederivatre, wie z.B.
   ACL 304415" (CAS-Reg. Nr. 31541-57-8) (= 2-84-Carboxy-chroman-4-yl)-essigsäure von der Firma American Cyanamid),
15) Wirkstoffe, die neben einer herbiziden Wirkung gegen Schadpflanzen auch Safenerwirkung an Kulturpflanzen aufweisen, wie z.B.
   "Dimepiperate" oder AMY-93" (PM, S. 404-405) (= Piperidin-1-thiocarbonsäure-S-1-methyl-1-phenylethylester),
   "Daimuron" oder ASK 23" (PM, S. 330) (= 1-(1-Methyl-1-phenylethyl)-3-p-tolylharnstoff),
   "Cumyluron" = AJC-940" (= 3-(2-Chlorphenylmethyl)-1-(1-methyl-1-phenylethyl)-harnstoff, siehe JP-A-60087254),
   "Methoxyphenon" oder ANK 049" (= 3,3'-Dimethyl-4-methoxybenzophenon),
   "CSB" (= 1-Brom-4-(chlormethylsulfonyl)-benzol) (CAS-Reg. Nr. 54091-06-4 von Kumiai),
   Verbindungen von Typ der Acylsulfamoylbenzoesäureamide, z.B. der nachfolgenden Formel (VIII), die z.B. bekannt sind aus WO 99/16744.

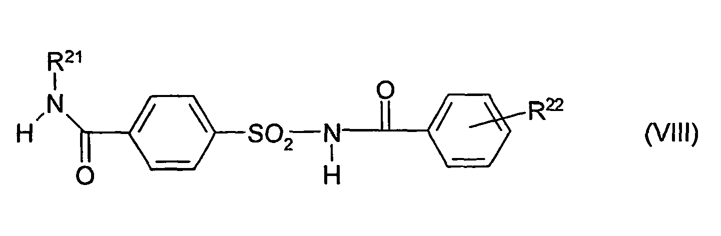

| Verbindung Nr. | R²¹ | R²² |
|---|---|---|
| S3-1 | Cyclo-Propyl | 2-OCH₃ |
| S3-2 | Cyclo-Propyl | 2-OCH₃, 5-Cl |
| S3-3 | Ethyl | 2-OCH₃ |
| S3-4 | iso-Propyl | 2-OCH₃, 5-Cl |
| S3-5 | iso-Propyl | 2-OCH₃ |

Bevorzugte Safener sind Mefenpyr, Fenchlorazol, Isoxadifen, Cloquintocet, und deren C₁-C₁₀-Alkylester, sowie die Safener (S3-1), (S3-5) und Benoxacor (S-4), insbesondere Mefenpyr-diethyl (S1-1), Fenchlorazol-ethyl (S1-6), Isoxadifen-ethyl (S1-9), Cloquintocet-mexyl (S2-1), (S3-1), (S3-5) und Benoxacor (S-4).

Soweit in den erfindungsgemäßen Flüssigformulierungen agrochemische Wirkstoffe d) enthalten sind, beträgt deren Gewichtsanteil im allgemeinen 0,1 bis 60 Gew.-%, insbesondere 0,5 bis 40 Gew.-%. Im Falle flüssiger Wirkstoffe d) kann deren Gewichtsanteil auch höher liegen, beispielsweise bis 80 Gew.-%. Der in den erfindungsgemäßen Flüssigformulierungen enthaltene Gesamtwirkstoffgehalt (Summe der Komponenten a) + d)) liegt im allgemeinen zwischen 1 und 80 Gew.-%, insbesondere zwischen 3 und 60 Gew.-%.

Als organische Lösungsmittel (Komponente b) kommen z.B. in Frage:
1) Kohlenwasserstoffe (siehe z.B. Römpp Lexikon Chemie, 10. Auflage, Band 3, Seite 2202 (1997), Georg Thieme Verlag Stuttgart / New York), bevorzugt solche, die bei Normalbedingungen flüssig sind. Die Kohlenwasserstoffe können acyclische (aliphatische) Kohlenwasserstoffe sein, oder cyclische Kohlenwasserstoffe, z.B. aromatische oder alicyclische (cycloaliphatische) Kohlenwasserstoffe. Beispiele für Kohlenwasserstoffe b) sind:
   1a) aromatische Kohlenwasserstoffe, z.B.
      · ein- oder mehrfach alkyl-substituierte (z.B. ein-, zwei- oder dreifach (C₁-C₁₀)alkyl-substituierte) Aromaten, z.B. Benzole wie Toluol, Xylole, Mesitylen, Ethylbenzol, oder
      · Kohlenwasserstoffe mit kondensierten aromatischen Ringsystemen wie Naphthaline, z.B. 1-Methylnaphthalin, 2-Methylnaphthalin oder Dimethylnaphtalin, oder andere kondensierte aromatische Kohlenwasserstoffe wie Indan oder Tetralin,
   1b) cycloaliphatische Kohlenwasserstoffe, z.B.
      gesättigte oder ungesättigte, gegebenenfalls ein oder mehrfach alkyl-substituierte (z.B. ein-, zwei- oder dreifach (C₁-C₁₀)alkyl-substituierte) Cycloaliphaten wie Cycloalkane, Cycloalkene oder Cycloalkine, z.B. Cyclohexan oder Methylcyclopentan,
   1c) aliphatische Kohlenwasserstoffe, z.B.
      lineare oder verzweigte, gesättigte oder ungesättigte Aliphaten, bevorzugt C₅-C₁₆-Aliphaten, z.B. Alkane, Alkene oder Alkine, wie Pentan, Hexan, Octan, 2-Methylbutan oder 2,2,4-Trimethylpentan.

   Als Komponente b) können auch Gemische eines oder mehrerer aromatischer Kohlenwasserstoffe und/oder eines oder mehrerer cycloaliphatischer Kohlenwasserstoffe und/oder eines oder mehrerer aliphatischer Kohlenwasserstoffe enthalten sein. Beispiele sind Gemische mehrerer aliphatischer Kohlenwasserstoffe, z.B. kommerziell erhältliche Lösungsmittel der EXXSOL^{®}D-Reihe, ISOPAR^{®}-Reihe oder BAYOL^{®}-Reihe z.B. Bayol^{®}82 (EXXONMOBIL CHEMICALS) oder der ISANE^{®}IP-Reihe oder HYDROSEAL^{®}-Reihe (TOTALFINAELF), oder Gemische von aromatischen und aliphatischen Kohlenwasserstoffen, z.B. kommerziell erhältliche Lösungsmittel der SOLVESSO^{®}-Reihe z.B. Solvesso^{®}100, Solvesso^{®}150 oder Solvesso^{®}200 (EXXONMOBIL CHEMICALS), der SOLVAREX^{®}/SOLVARO^{®}-Reihe (TOTALFINAELF) oder der Caromax^{®}-Reihe z.B. Caromax^{®}28 (Petrochem Carless).
2) Halogenierte Kohlenwasserstoffe wie halogenierte aromatische und aliphatische Kohlenwasserstoffe, wie Chlorbenzol oder Methylenchlorid.
3) Polare Lösungsmittel, z.B. aprotische polare Lösungsmittel wie Ether, Ester von C₁-C₉-Alkansäuren, die mono-, di- oder polyfunktional sein können, wie deren Mono-, Di- oder Triester, z.B. mit C₁-C₁₈-Alkylalkoholen, Ketone mit geringer Tautomerietendenz, Phophorsäureester, Amide, Nitrile oder Sulfone, z.B. Diisobutyladipat, RHODIASOLV^{®} RPDE (RHODIA), Cyclohexanon, JEFFSOL^{®}PC (HUNTSMAN), γ-Butyrolacton, N-Methylpyrrolidon, Dimethylsulfoxid, Acetonitril, Tributylphosphatam oder HOSTAREX^{®}PO-Reihe (Clariant), oder protische polare Lösungsmittel wie Alkohole, z.B. Hexanol, Heptanol, 2-Ethylhexanol, Glycerin, Ethanolamin, Fettalkohole wie Agnique^{®} FOH-Reihe (Clariant), oder Polyalkylenglykole wie Polyethylenglykole, z.B. aus der Pluriol^{®} E-Reihe oder Pluriol^{®} AE-Reihe (BASF), Carbonsäuren, z.B. Essigsäure, Adipinsäure oder Agnique^{®} FAC-Reihe (Clariant), oder Amine, z.B. Diethylamin oder Isobutylamin.
4) Fettsäureester, z.B. natürlichen Ursprungs, z.B. natürliche Öle wie tierische Öle oder Pflanzenöle, oder synthetischen Ursprungs, z.B. Edenor^{®}-Reihe z.B. Edenor^{®}MEPa oder Edenor^{®}MESU oder AGNIQUE^{®}ME-Reihe oder AGNIQUE^{®}AE-Reihe (COGNIS), SALIM^{®}ME-Reihe (SALIM), Radia^{®}-Reihe z.B. Radia^{®}30167 (ICI), Prilube^{®}-Reihe z.B. Prilube^{®}1530 (Petrofina), STEPAN^{®}C-Reihe (STEPAN) oder WITCONO^{®}23-Reihe (WITCO). Die Fettsäureester sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Fettsäureester wie C₁₀-C₂₂-Fettsäure-Ester sind Glycerin- und Glykolester von Fettsäuren wie C₁₀-C₂₂-Fettsäuren oder deren Umesterungsprodukte, z.B. Alkyl-Fettsäureester wie C₁-C₂₀-Alkyl-C₁₀-C₂₂-FettsäureEster, wie sie z.B. durch Umesterung der vorgenannten Glycerin- oder Glykol-Fettsäureester wie C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als Alkyl-Fettsäureester wie C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-Fettsäureester wie C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Tierische Öle b) sind allgemein bekannt und kommerziell erhältlich. Unter dem Begriff tierische Öle im Sinne der vorliegenden Erfindung werden z.B. Öle tierischen Ursprungs verstanden wie Waltranöl, Lebertranöl, Moschusöl oder Nerzöl.

Pflanzenöle b) sind allgemein bekannt und kommerziell erhältlich. Unter dem Begriff Pflanzenöle im Sinne der vorliegenden Erfindung werden z.B. Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Pflanzenöle sind C₁₀-C₂₂-Fettsäure-Ester von Glycerin oder Glykol mit den C₁₀-C₂₂-Fettsäuren, oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Die Pflanzenöle können in den erfindungsgemäßen Flüssigformulierungen z.B. in Form kommerziell erhältlicher Pflanzenöle, insbesondere Rapsöle wie Rapsölmethylester, z.B. Phytorob®B (Novance, Frankreich), Edenor® MESU und Agnique®ME-Reihe (Cognis, Deutschland) Radia^{®}-Reihe (ICI), Prilube^{®}-Reihe (Petrofina) oder Biodiesel oder in Form kommerziell erhältlicher pflanzenölhaltiger Lösungsmittel, insbesondere solcher auf Basis von Rapsölen wie Rapsölmethylester, z.B. Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Beispiele für synthetische Fettsäureester sind z.B. solche die sich von Fettsäuren mit ungerader Kohlenstoffatomanzahl ableiten, wie C₁₁-C₂₁-Fettsäureester.

Bevorzugte organische Lösungsmittel sind Kohlenwasserstoffe, insbesondere aromatische Kohlenwasserstoffe und/oder aliphatische Kohlenwasserstoffe, und Fettsäureester wie pflanzliche Öle wie Triglyceride von Fettsäuren mit 10 bis 22 C-Atomen, die sowohl gesättigt als auch ungesättigt, linear oder verzweigt sein können und gegebenenfalls weitere funktionelle Gruppen tragen, wie Maiskeimöl, Rapsöl, Sonnenblumenkernöl, Baumwollsaatöl, Leinöl, Sojaöl, Kokosöl, Palmöl, Distelöl oder Rizinusöl, und deren Umesterungsprodukte wie Fettsäurealkylester, sowie Mischungen hieraus.

Der Gesamtanteil an organischen Lösungsmitteln b) in den erfindungsgemäßen Flüssigformulierungen liegt im allgemeinen zwischen 5 und 95 Gew.-%, bevorzugt im Bereich zwischen 20 und 90 Gew.-%. Im Falle der Verwendung flüssiger Wirkstoffe d) kann der Gesamtlösemittelanteil auch unter 5 Gew.-% liegen.

Bei den in den erfindungsgemäßen Flüssigformulierungen enthaltenen anorganischen Salzen c) handelt es sich vorzugsweise um basische anorganische Salze. Hierunter werden Salze verstanden, welche in 1 %iger wässriger Lösung einen pH-Wert > 7 aufweisen, vorzugsweise schwach basische Salze mit einem pH-Wert zwischen 7 und 11. Beispiele solcher Salze c) sind Salze, die nicht als Düngemittel eingesetzt werden, insbesondere Salze, die verschieden sind von Sulfaten, Hydrogensulfaten, Phosphaten, Hydrogenphosphaten und Nitraten. Bevorzugte Salze c) sind Carbonate, Hydrogencarbonate, Hydroxide, Oxide, Hypochlorite und Sulfite, bevorzugt Carbonate und Hydrogencarbonate. Als Kationen enthalten die Salze c) bevorzugt Metallionen, insbesondere Alkali-, Erdalkali- und Übergangsmetallionen, vorzugsweise Alkali- und Erdalkalimetallionen wie Natrium, Kalium, Magnesium oder Calcium. Besonders bevorzugte Salze c) sind somit Alkalimetallcarbonate, -hydrogencarbonate, -hydroxide, -oxide, -hypochlorite und -sulfite, Erdalkalimetallcarbonate, -hydrogencarbonate, -hydroxide, -oxide,-hypochlorite und -sulfite, sowie Übergangsmetallcarbonate, -hydrogencarbonate,-hydroxide, -oxide, -hypochlorite und -sulfite. Ganz besonders bevorzugt sind Alkalimetallsalze, insbesondere Alkalimetallcarbonate und Alkalimetallhydrogencarbonate wie Na₂CO₃, K₂CO₃, NaHCO₃ und KHCO₃. Die anorganischen Salze c) können allein oder im Gemisch enthalten sein.

Der Gesamtteil an Komponente c) in den erfindungsgemäßen Flüssigformulierungen liegt im allgemeinen zwischen 0,01 und 20 Gew.%, bevorzugt im Bereich zwischen 0,01 und 10 Gew.%, besonders bevorzugt im Bereich zwischen 0,05 und 5 Gew.-%.

Die in den erfindungsgemäßen Ölsuspensionskonzentraten optional enthaltenen Sulfosuccinate (Komponente e) können z.B. Mono- oder Diester der Sulfobemsteinsäure sein, vorzugsweise solche der allgemeinen Formel (III)

R¹-(X₁)ₙ-O-CO-CH₂-CH(SO₃M)-CO-O-(X₂)ₘ-R² (III),

worin
- R¹: H oder ein unsubstituierter oder substituierter C₁-C₃₀-Kohlenwasserstoffrest wie C₁-C₃₀-Alkyl oder C₇-C₃₀-Alkylaryl bedeutet,
- R²: H oder ein unsubstituierter oder substituierter C₁-C₃₀-Kohlenwasserstoffrest wie C₁-C₃₀-Alkyl oder C₇-C₃₀-Alkylaryl bedeutet, oder ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenylammoniumkation,
- X¹, X²: unabhängig voneinander gleich oder verschieden eine Spacereinheit wie eine Polyethereinheit oder eine Polyestereinheit bedeuten,
- n,m: unabhängig voneinander gleich oder verschieden Null oder 1 sind, vorzugsweise Null sind, und
- M: ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenyl-ammoniumkation.

Bevorzugt sind Sulfosuccinate der Formel (III), worin R¹ und R² unabhängig voneinander gleich oder verschieden lineare, verzweigte oder cyclische, gesättigte oder ungesättigte C₁-C₂₀- vorzugsweise C₄-C₁₈-Alkylreste sind, wie Methyl-, Ethyl-, Butyl-, Hexyl-, Cyclohexyl-, Octyl wie 2-Ethylhexyl-, Decyl-, Tridecyl- oder Octadecyl-Reste, oder R¹ und R² sind C₇-C₂₀-Alkylarylreste, wie Nonylphenyl, 2,4,6-Tri-*sec*butylphenyl, 2,4,6-Tris-(1-phenylethyl)-phenyl, Alkylbenzyl oder ein Hydrozimtrest, X₁ und X₂ unabhängig voneinander gleich oder verschieden Polyethereinheiten sind, wie Polyethylenglykole -(C₂H₄O)ₚ- oder Polypropylenglykole -(C₃H₆O)ₚ- mit p=1 bis p=20, insbesondere p=1 bis p=12, oder Polyestereinheiten sind, wie Polyhydroxybuttersäure -(CH[CH₃]-CH₂-COO)_{q}- oder Polymilchsäure -(CH[CH₃]-COO)q- mit q=1 bis q=15, insbesondere q=1 bis q=8,
n, m unabhängig voneinander gleich oder verschieden Null oder 1 sind, vorzugsweise Null sind, und M ein Kation ist, z.B. ein Metallkation, wie Alkali- oder Erdalkalimetallkation, oder ein Ammoniumkation, welches alkyl-substituiert sein kann.

Erfindungsgemäß enthaltene Sulfosuccinate sind, beispielsweise
a1) ein- oder zweifach mit linearen, cyclischen oder verzweigten aliphatischen, cycloaliphatischen und/oder aromatischen Alkoholen verestertes Sulfosuccinat, beispielsweise mit 1 bis 22 C-Atomen im Alkylrest, vorzugsweise ein- oder zweifach mit Methanol, Ethanol, (Iso)propanol, (Iso)butanol, (Iso)pentanol, (Iso)hexanol, Cyclohexanol, (Iso)heptanol, (Iso)octanol (insbesondere: Ethylhexanol), (Iso)nonanol, (Iso)decanol, (Iso)undecanol, (Iso)dodecanol oder (Iso)tridecanol verestertes Mono- oder Dialkalisulfosuccinat, insbesondere Mono- oder Dinatriumsulfosuccinat,
a2) ein- oder zweifach mit (Poly) Alkylenoxidaddukten von Alkoholen verestertes Sulfosuccinat, beispielsweise mit 1 bis 22 C-Atomen im Alkylrest und 1 bis 200, vorzugsweise 2 bis 200 Alkylenoxideinheiten im (Poly) Alkylenoxidanteil, vorzugsweise ein- oder zweifach mit Dodecyl/Tetradecyl-Alkohol +2-5 mol Ethylenoxid oder mit i-Tridecyl+3mol Ethylenoxid verestertes Mono- oder Dialkalisulfosuccinat, insbesondere Mono- oder Dinatriumsulfosuccinat,
a3) das Dialkali, vorzugsweise das Dinatriumsalz von einfach mit Aminen oder aminoterminierten (Poly) Alkylenoxidaddukten von Alkoholen, Aminen, Fettsäuren, Estern oder Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alkylenoxy-Einheiten im (Poly) Alkylenoxidteil, vorzugsweise das Dinatriumsalz von einfach mit Kokosfettamin umgesetztem und nachfolgend sulfoniertem Maleinsäureanhydrid,
a4) das Dialkali, vorzugsweise das Dinatriumsalz von einfach mit Amiden oder (Poly) Alkylenoxidaddukten von Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alykylenoxy-Einheiten im (Poly) Alkylenoxidteil, vorzugsweise das Dinatriumsalz von einfach mit Oleylamid+2 mol Ethylenoxid umgesetztem und nachfolgend sulfoniertem Maleinsäureanhydrid und/oder
a5) das Tetraalkali, vorzugsweise das Tetranatriumsalz von N-(1,2-dicarboxyethyl-)-N-Octadecylsulfo-succinamat.

Beispiele kommerziell erhältlicher und im Rahmen der vorliegenden Erfindung bevorzugter Sulfosuccinate der Gruppen a1) bis a5) sind nachfolgend aufgeführt:
a1) Natrium-Dialkylsulfosuccinat, z.B. Natrium-Di(C₄-C₁₈)alkylsulfosuccinat wie Natrium-DÜsooctylsulfosuccinat, vorzugsweise Natrium-Di(2-ethylhexyl)sulfosuccinat, kommerziell beispielsweise in Form der Aerosol^{®}-Marken (Cytec), der Agrilan^{®}- oder Lankropol^{®}-Marken (Akzo Nobel), der Empimin^{®}-Marken (Albright&Wilson), der Cropol^{®}-Marken (Croda), der Lutensit^{®}-Marken (BASF) der Triton^{®}-Marken (Union Carbide), der Geropon^{®}-Marken (Rhodia) oder der Imbirol^{®}-, Madeol^{®}- oder Polirol^{®}-Marken (Cesalpinia) erhältlich,
a2) Natrium- Alkoholpolyethylenglykolethersulfosuccinat, kommerziell beispielsweise in Form von Geropon^{®} ACR-Marken erhältlich,
a3) Dinatrium-Alkoholpolyethylenglykolethersemisulfosuccinat, kommerziell beispielsweise in Form der Aerosol^{®}-Marken (Cytec), der Marlinat^{®}- oder Sermul^{®}-Marken (Condea), der Empicol^{®}-Marken (Albright&Wilson), der Secosol^{®}-Marken (Stepan), der Geropon^{®}-Marken (Rhodia), der Disponil^{®}- oder Texapon^{®}-Marken (Cognis) oder der Rolpon^{®}-Marken (Cesalpinia) erhältlich,
a4) Dinatrium-N-Alkylsulfosuccinamat, kommerziell beispielsweise in Form der Aerosol^{®}-Marken (Cytec), der Rewopol^{®}- oder Rewoderm^{®}-Marken (Rewo), der Empimin^{®}-Marken (Albright&Wilson), der Geropon^{®}-Marken (Rhodia) oder der Polirol^{®}-Marken (Cesalpinia) erhältlich,
a5) Dinatrium-Fettsäureamidpolyethylenglykolethersemisulfosuccinat, kommerziell beispielsweise in Form der Elfanol^{®}- oder Lankropol^{®}-Marken (Akzo Nobel), der Rewoderm^{®}-, Rewocid^{®}- oder Rewopol^{®}-Marken (Rewo), der Emcol^{®}-Marken (Witco), der Standapol^{®}-Marken (Cognis) oder der Rolpon^{®}-Marken (Cesalpinia) erhältlich, und
a6) Tetranatrium-N-(1,2-dicarboxyethyl)-N-Octadecyt-sulfosuccinamat, kommerziell beispielsweise in Form von Aerosol 22^{®}- (Cytec) erhältlich.

Kommerziell sind Sulfosuccinate zum Beispiel als AEROSOL^{®}- (CYTEC), AGRILAN^{®}- oder LANKROPOL^{®}- (AKZO NOBEL), EMPIMIN^{®}- (HUNTSMAN), CROPOL^{®}- (CRODA), LUTENSIT^{®}- (BASF), TRITON^{®}GR-REIHE (UNIONCARBIDE), IMBIROL^{®}-/MADEOL^{®}-/POLIROL^{®}- (CESALPINIA); GEROPON^{®}AR-Reihe oder GEROPON^{®}SDS (RHODIA) erhältlich.

Bevorzugte Sulfosuccinate sind z.B. die Natrium-, Kalium- und Ammoniumsalze von Di(alkyl)sulfosuccinaten, wobei die Alkylreste gleich oder verschieden 4 bis 16 Kohlenstoffatome enthalten und linear oder verzweigt sein können, z.B. Butyl-, Hexyl-, Octyl- wie 2-Ethylhexyl- oder Decyl-Reste. Besonders bevorzugt sind Alkali-di(octyl)-sulfosuccinate wie Natrium-di(2-ethylhexyl)sulfosuccinat.

Soweit in den erfindungsgemäßen flüssigen Formulierungen Sulfosuccinate enthalten sind, beträgt deren Gewichtsanteil im allgemeinen 0,1 - 60 Gew.-%, insbesondere 1-40 Gew.-%.

Als übliche Hilfs- und Zusatzstoffe (Komponente f) können in den erfindungsgemäßen Flüssigformulierungen z.B. noch enthalten sein: Tenside wie Emulgatoren und Dispergatoren, Verdickungs- und Thixotropiermittel, Adjuvantien, Netz-, Anti-Drift-, Haft-, Penetrations-, Konservierungs- und Frostschutzmittel, Antioxidantien, Lösungsvermittler, Füll-, Träger- und Farbstoffe, Entschäumer, Düngemittel, Verdunstungshemmer, sowie den pH-Wert und die Viskosität beeinflussende Mittel.

Als Emulgatoren und Dispergatoren kommen z.B. nichtionische Emulgatoren und Dispergatoren in Frage, z.B.:
1) polyalkoxylierte, vorzugsweise polyethoxylierte, gesättigte und ungesättigte aliphatische Alkohole,
   · mit 8 bis 24 C-Atomen im Alkylrest, der sich von den entsprechenden Fettsäuren oder aus petrochemischen Produkten ableitet, und
   · mit 1 bis 100, vorzugsweise 2 bis 50, Ethylenoxideinheiten (EO), wobei die freie Hydroxy-Gruppe gegebenenfalls alkoxyliert ist,
   · die z. B. kommerziell als Genapol^{®}X- und Genapol^{®}O-Reihe (Clariant), Crovol^{®}M-Reihe (Croda) oder Lutensol^{®}Reihe (BASF) erhältlich sind, oder daraus durch Veretherung erhältlich sind, z.B. Genapol^{®}X060 Methylether.
2) polyalkoxylierte, vorzugsweise polyethoxylierte Arylalkylphenole, wie z. B. 2,4,6-Tris-(1-phenylethyl)-phenol (Tristyrylphenol) mit einem mittleren Ethoxylierungsgrad zwischen 10 und 80, bevorzugt 16 bis 40, wie z. B. SOPROPHOR^{®}BSU (RHODIA) oder HOE S 3474 (CLARIANT),
3) polyalkoxylierte, vorzugsweise polyethoxylierte Alkylphenole mit einem oder mehreren Alkylresten, wie z. B. Nonylphenol oder Tri-sec-butylphenol, und einem Ethoxylierungsgrad zwischen 2 und 40, bevorzugt 4 bis 15, wie z. B. ARKOPAL^{®}N-Reihe oder SAPOGENAT^{®}T-Reihe (CLARIANT),
4) polyalkoxylierte, vorzugsweise polyethoxylierte Hydroxyfettsäuren oder Hydroxyfettsäuren enthaltene Glyceride, wie z. B. Ricinin bzw. Rizinusöl, mit einem Ethoxylierungsgrad zwischen 10 und 80, bevorzugt 25 bis 40, wie z. B. EMULSOGEN^{®}EL-Reihe (CLARIANT) oder AGNIQUE^{®}CSO-Reihe (COGNIS),
5) polyalkoxylierte, vorzugsweise polyethoxylierte Sorbitanester, wie z. B. Atplus^{®}309 F (UNIQEMA) oder Alkamuls^{®}-Reihe (Rhodia)
6) Di- und Tri-block-copolymere, z.B. aus Alkylenoxiden, z.B. aus Ethylen- und Propylenoxid mit mittleren Molmassen zwischen 200 und 10000, vorzugsweise 1000 bis 4000 g/mol, wobei der Massenanteil des polyethoxylierte Blocks zwischen 10 und 80% variiert, wie z. B. GENAPOL^{®}PF-Reihe (CLARIANT), PLURONIC^{®}-Reihe (BASF), oder SYNPERONIC^{®}PE-Reihe (UNIQEMA),

Bevorzugte nichtionische Emulgatoren und Dispergatoren sind z.B. polyethoxylierte Alkohole, polyethoxylierte Triglyceride, die Hydroxyfettsäuren enthalten und Polyethylenoxid-Polypropylenoxid-Block-Copolymere.

Der Gesamtanteil an nichtionischen Emulgatoren und Dispergatoren in den erfindungsgemäßen Flüssigformulierungen liegt im allgemeinen zwischen 0 und 20 Gew.%. Werden nichtionische Emulgatoren und Dispergatoren, neben ihren emulgierenden/dispergierenden Eigenschaften, auch zur Erhöhung der biologischen Effektivität, z. B. als Penetrations- oder Haftmittel, eingesetzt, kann sich ihr Anteil in den erfindungsgemäßen Flüssigformulierungen auf bis zu 60 Gew.% erhöhen.

Es kommen auch ionische Emulgatoren und Dispergatoren in Frage, z.B.:
1) polyalkoxylierte, vorzugsweise polyethoxylierte Emutgatoren/Dispergatoren (vgl. Komponente e), die ionisch modifiziert sind, z. B. durch Umsetzung der endständigen freien Hydroxylfunktion des Polyethylenoxidblocks zu einem Sulfat- oder Phosphatester (z. B. als Alkali- und Erdalkalimetallsalze), wie z. B. Genapol^{®}LRO oder Dispergiermittel 3618 (Clariant), Emulphor^{®} (BASF) oder Crafol^{®}AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox^{®} 3377BM (ICI), Empiphos^{®}TM-Reihe (Huntsman)
3) Polyelektrolyte, wie Ligninsulfonate, Kondensationsprodukte aus Naphthalinsulfonat und Formaldehyd, Polystyrolsulfonat oder sulfonierte ungesättigte oder aromatische Polymere (Polystyrole, Polybutadiene oder Polyterpene), wie Tamol^{®}-Reihe (BASF), MorweeD425 (Witco), Kraftsperse^{®}-Reihe (Westvaco), Borresperse^{®}-Reihe (Borregard).

Bevorzugte ionische Emulgatoren/Dispergatoren sind z.B. Salze von Alkylarylsulfonsäuren und Polyelektrolyte aus der Polykondensation von Naphthalinsulfonat und Formaldehyd.

Der Gesamtanteil an ionischen Emulgatoren und Dispergatoren der Komponente f) in den erfindungsgemäßen Flüssigformulierungen liegt im allgemeinen zwischen 0 und 20 Gew.%, insbesondere zwischen 0 und 8 Gew.%.

Als Verdickungs- und Thixotropiermittel kommen z.B. in Frage:
1) modifizierte natürliche Silikate, wie chemisch modifizierte Bentonite, Hectorite, Attapulgite, Montmorillonite, Smektite oder andere Silikatmineralien, wie BENTONE^{®} (ELEMENTIS), ATTAGEL^{®} (ENGELHARD), AGSORB^{®} (OIL-DRI CORPORATION) oder HECTORITE^{®} (AKZO NOBEL)
2) synthetische Silikate, wie Silikate der SIPERNAT^{®}-, AEROSIL^{®}- oder DUROSIL^{®}-Reihe (DEGUSSA), der CAB-O-SIC^{®}-Reihe (CABOT) oder der VAN GEL-Reihe (R.T. VANDERBILT),
3) Verdicker auf Basis synthetischer Polymere, wie Verdicker der THIXIN^{®}- oder THIXATRoL^{®}-Reihe (ELEMENTIS).
4) Verdicker auf Basis natürlicher Polymere und natürlicher Öle, z.B. aus der THIXIN^{®}- oder THIXATROL^{®}-Reihe (ELEMENTIS).

Bevorzugte Verdickungs- und Thixotropiermittel sind z.B. modifizierte Schichtsilikate und Verdicker auf Basis synthetischer Polymere.

Der Anteil an Verdickungs- und Thixotropiermitteln in den erfindungsgemäßen Flüssigformulierungen liegt im allgemeinen zwischen 0 und 5 Gew.%, insbesondere zwischen 0,2 und 4 Gew.%.

Bevorzugt sind erfindungsgemäße Flüssigformulierungen, enthaltend:
a) 0,1 bis 50 Gew.-%, vorzugsweise 0,1 bis 30 Gew.-%, eines oder mehrerer herbizider Wirkstoffe aus der Gruppe der Sulfonamide,
b) 20 bis 90 Gew.-% eines oder mehrerer organische Lösungsmittel, vorzugsweise aus der Gruppe der Kohlenwasserstoffe oder der Fettsäureester,
c) 0,01 bis 10 Gew.-% eines oder mehrerer anorganischer Salze, vorzugsweise basischer anorganische Salze,
d) 0 bis 40 Gew.-%, vorzugsweise 0,1 bis 40 Gew.-%, eines oder mehrerer von a) verschiedener agrochemischer Wirkstoffe,
e) 0 bis 40 Gew.-%, vorzugsweise 0,1 - 40 Gew.-%, eines oder mehrerer Sulfosuccinate, vorzugsweise Di(alkyl)sulfosuccinate
f) 0-60 Gew.-%, vorzugsweise 1 - 60 Gew.-%, übliche Hilfs- und Zusatzstoffe, insbesondere 0 bis 30 Gew.-% eines oder mehrerer nichtionischer Emulgatoren und Dispergatoren, 0 bis 8 Gew.-% eines oder mehrerer ionischer Emulgatoren und Dispergatoren 0 bis 4 Gew.-% eines oder mehrerer Verdickungs- und Thixotriopiermittel.

In einer bevorzugten Ausführungsform enthält die erfindungsgemäße Flüssigformulierung
a) ein oder mehrere Sulfonamide der Formel (I) und/oder deren Salze, vorzugsweise A1, A2, A3, A4, A5, A6, A7, A8, A9, A10, A11, A12, A13 und/oder A14,
b) ein organisches Lösungsmittel aus der Gruppe der aliphatischen Kohlenwasserstoffe, der Gemische von aromatischen und aliphatischen Kohlenwasserstoffe und der Pflanzenöle wie Rapsölmethylester,
c) ein oder mehrere Carbonate und/oder Hydrogencarbonate, vorzugsweise ein Alkalimetallcarbonat und/oder Alkalimetallhydrogencarbonat wie Na₂CO₃, K₂CO₃, NaHCO₃ oder KHCO₃,
d) optional einen oder mehrere von a) verschiedene agrochemische Wirkstoffe, z.B. einen Safener aus der Gruppe S1-1, S1-9 und S2-1, und/oder einen herbiziden Wirkstoff aus der Gruppe Diflufenican, Bromoxynil (insbesondere Bromoxynil-octanoat), 2,4-D (insbesondere 2,4-D-Ester wie 2,4-D-isobutylester) und Fenoxaprop-P-ethyl,
e) optional ein Sulfosuccinat, z.B. Natrium-di(2-ethylhexyl)sulfosuccinat, und
f) optional einen oder mehrere übliche Hilfs- und Zusatzstoffe.

Als besonders bevorzugte Beispiele seien erfindungsgemäße Flüssigformulierungen genannt, welche die nachfolgend genannten Komponenten enthalten, ohne dass dadurch eine Einschränkung erfolgen soll. Dabei bedeutet Solvesso ein Lösungsmittel aus der Solvesso^{®}-Reihe, vorzugsweise Solvesso^{®}200, Bayol ein Lösungsmittel aus der Bayol^{®}-Reihe, vorzugsweise Bayol^{®}82, Edenor = Edenor^{®}MESU und Actirob = Actirob^{®}B.
A1 + Solvesso + Na₂CO₃, A1 + Bayol + Na₂CO₃, A1 + Rapsölmethylester z.B. Edenor oder Actirob + Na₂CO₃, A2 + Solvesso + Na₂CO₃, A2 + Bayol + Na₂CO₃, A2 + Rapsölmethylester z.B. Edenor oder Actirob + Na₂CO₃, A3 + Solvesso + Na₂CO₃, A3 + Bayol + Na₂CO₃, A3 + Rapsölmethylester z.B. Edenor oder Actirob + Na₂CO₃, A4 + Solvesso + Na₂CO₃, A4 + Bayol + Na₂CO₃, A4 + Rapsölmethylester z.B. Edenor oder Actirob + Na₂CO₃, A5 + Solvesso + Na₂CO₃, A5 + Bayol + Na₂CO₃, A5 + Rapsölmethylester z.B. Edenor oder Actirob + Na₂CO₃, A6 + Solvesso + Na₂CO₃, A6 + Bayol + Na₂CO₃, A6 + Rapsölmethylester z.B. Edenor oder Actirob + Na₂CO₃, A7 + Solvesso + Na₂CO₃, A7 + Bayol + Na₂CO₃, A7 + Rapsölmethylester z.B. Edenor oder Actirob + Na₂CO₃, A8 + Solvesso + Na₂CO₃, A8 + Bayol + Na₂CO₃, A8 + Rapsölmethylester z.B. Edenor oder Actirob + Na₂CO₃, A9 + Solvesso + Na₂CO₃, A9 + Bayol + Na₂CO₃, A9 + Rapsölmethylester z.B. Edenor oder Actirob + Na₂CO₃, A10 + Solvesso + Na₂CO₃, A10 + Bayol + Na₂CO₃, A10 + Rapsölmethylester z.B. Edenor oder Actirob + Na₂CO₃, A11 + Solvesso + Na₂CO₃, A11 + Bayol + Na₂CO₃, A11 + Rapsölmethylester z.B. Edenor oder Actirob + Na₂CO₃, A12 + Solvesso + Na₂CO₃, A12 + Bayol + Na₂CO₃, A12 + Rapsölmethylester z.B. Edenor oder Actirob + Na₂CO₃, A13 + Solvesso + Na₂CO₃, A13 + Bayol + Na₂CO₃, A13 + Rapsölmethylester z.B. Edenor oder Actirob + Na₂CO₃, A14 + Solvesso + Na₂CO₃, A14 + Bayol + Na₂CO₃, A14 + Rapsölmethylester z.B. Edenor oder Actirob + Na₂CO₃,
   A1 + Solvesso + K₂CO₃, A1 + Bayol + K₂CO₃, A1 + Rapsölmethylester z.B. Edenor oder Actirob + K₂CO₃, A2 + Solvesso + K₂CO₃, A2 + Bayol + K₂CO₃, A2 + Rapsölmethylester z.B. Edenor oder Actirob + K₂CO₃, A3 + Solvesso + K₂CO₃, A3 + Bayol + K₂CO₃, A3 + Rapsölmethylester z.B. Edenor oder Actirob + K₂CO₃, A4 + Solvesso + K₂CO₃, A4 + Bayol + K₂CO₃, A4 + Rapsölmethylester z.B. Edenor oder Actirob + K₂CO₃, A5 + Solvesso + K₂CO₃, A5 + Bayol + K₂CO₃, A5 + Rapsölmethylester z.B. Edenor oder Actirob + K₂CO₃, A6 + Solvesso + K₂CO₃, A6 + Bayol + K₂CO₃, A6 + Rapsölmethylester z.B. Edenor oder Actirob + K₂CO₃, A7 + Solvesso + K₂CO₃, A7 + Bayol + K₂CO₃, A7 + Rapsölmethylester z.B. Edenor oder Actirob + K₂CO₃, A8 + Solvesso + K₂CO₃, A8 + Bayol + K₂CO₃, A8 + Rapsölmethylester z.B. Edenor oder Actirob + K₂CO₃, A9 + Solvesso + K₂CO₃, A9 + Bayol + K₂CO₃, A9 + Rapsölmethylester z.B. Edenor oder Actirob + K₂CO₃, A10 + Solvesso + K₂CO₃, A10 + Bayol + K₂CO₃, A10 + Rapsölmethylester z.B. Edenor oder Actirob + K₂CO₃, A11 + Solvesso + K₂CO₃, A11 + Bayol + K₂CO₃, A11 + Rapsölmethylester z.B. Edenor oder Actirob + K₂CO₃, A12 + Solvesso + K₂CO₃, A12 + Bayol + K₂CO₃, A12 + Rapsölmethylester z.B. Edenor oder Actirob + K₂CO₃, A13 + Solvesso + K₂CO₃, A13 + Bayol + K₂CO₃, A13 + Rapsölmethylester z.B. Edenor oder Actirob + K₂CO₃, A14 + Solvesso + K₂CO₃, A14 + Bayol + K₂CO₃, A14 + Rapsölmethylester z.B. Edenor oder Actirob + K₂CO₃,
   A1 + Solvesso + NaHCO₃, A1 + Bayol + NaHCO₃, A1 + Rapsölmethylester z.B. Edenor oder Actirob + NaHCO₃, A2 + Solvesso + NaHCO₃, A2 + Bayol + NaHCO₃, A2 + Rapsölmethylester z.B. Edenor oder Actirob + NaHCO₃, A3 + Solvesso + NaHCO₃, A3 + Bayol + NaHCO₃, A3 + Rapsölmethylester z.B. Edenor oder Actirob + NaHCO₃, A4 + Solvesso + NaHCO₃, A4 + Bayol + NaHCO₃, A4 + Rapsölmethylester z.B. Edenor oder Actirob + NaHCO₃, A5 + Solvesso + NaHCO₃, A5 + Bayol + NaHCO₃, A5 + Rapsölmethylester z.B. Edenor oder Actirob + NaHCO₃, A6 + Solvesso + NaHCO₃, A6 + Bayol + NaHCO₃, A6 + Rapsölmethylester z.B. Edenor oder Actirob + NaHCO₃, A7 + Solvesso + NaHCO₃, A7 + Bayol + NaHCO₃, A7 + Rapsölmethylester z.B. Edenor oder Actirob + NaHCO₃, A8 + Solvesso + NaHCO₃, A8 + Bayol + NaHCO₃, A8 + Rapsölmethylester z.B. Edenor oder Actirob + NaHCO₃, A9 + Solvesso + NaHCO₃, A9 + Bayol + NaHCO₃, A9 + Rapsölmethylester z.B. Edenor oder Actirob + NaHCO₃, A10 + Solvesso + NaHCO₃, A10 + Bayol + NaHCO₃, A10 + Rapsölmethylester z.B. Edenor oder Actirob + NaHCO₃, A11 + Solvesso + NaHCO₃, A11 + Bayol + NaHCO₃, A11 + Rapsölmethylester z.B. Edenor oder Actirob + NaHCO₃, A12 + Solvesso + NaHCO₃, A12 + Bayol + NaHCO₃, A12 + Rapsölmethylester z.B. Edenor oder Actirob + NaHCO₃, A13 + Solvesso + NaHCO₃, A13 + Bayol + NaHCO₃, A13 + Rapsölmethylester z.B. Edenor oder Actirob + NaHCO₃, A14 + Solvesso + NaHCO₃, A14 + Bayol + NaHCO₃, A14 + Rapsölmethylester z.B. Edenor oder Actirob + NaHCO₃,
   A1 + Solvesso + KHCO₃, A1 + Bayol + KHCO₃, A1 + Rapsölmethylester z.B. Edenor oder Actirob + KHCO₃, A2 + Solvesso + KHCO₃, A2 + Bayol + KHCO₃, A2 + Rapsölmethylester z.B. Edenor oder Actirob + KHCO₃, A3 + Solvesso + KHCO₃, A3 + Bayol + KHCO₃, A3 + Rapsölmethylester z.B. Edenor oder Actirob + KHCO₃, A4 + Solvesso + KHCO₃, A4 + Bayol + KHCO₃, A4 + Rapsölmethylester z.B. Edenor oder Actirob + KHCO₃, A5 + Solvesso + KHCO₃, A5 + Bayol + KHCO₃, A5 + Rapsölmethylester z.B. Edenor oder Actirob + KHCO₃, A6 + Solvesso + KHCO₃, A6 + Bayol + KHCO₃, A6 + Rapsölmethylester z.B. Edenor oder Actirob + KHCO₃, A7 + Solvesso + KHCO₃, A7 + Bayol + KHCO₃, A7 + Rapsölmethylester z.B. Edenor oder Actirob + KHCO₃, A8 + Solvesso + KHCO₃, A8 + Bayol + KHCO₃, A8 + Rapsölmethylester z.B. Edenor oder Actirob + KHCO₃, A9 + Solvesso + KHCO₃, A9 + Bayol + KHCO₃, A9 + Rapsölmethylester z.B. Edenor oder Actirob + KHCO₃, A10 + Solvesso + KHCO₃, A10 + Bayol + KHCO₃, A10 + Rapsölmethylester z.B. Edenor oder Actirob + KHCO₃, A11 + Solvesso + KHCO₃, A11 + Bayol + KHCO₃, A11 + Rapsölmethylester z.B. Edenor oder Actirob + KHCO₃, A12 + Solvesso + KHCO₃, A12 + Bayol + KHCO₃, 12 + Rapsölmethylester z.B. Edenor oder Actirob + KHCO₃, A13 + Solvesso + KHCO₃, A13 + Bayol + KHCO₃, A13 + Rapsölmethylester z.B. Edenor oder Actirob + KHCO₃, A14 + Solvesso + KHCO₃, A14 + Bayol + KHCO₃, A14 + Rapsölmethylester z.B. Edenor oder Actirob + KHCO₃;
A1 + Solvesso + Na₂CO₃ + S1-1, A1 + Bayol + Na₂CO₃+ S1-1, A1 + Rapsölmethylester z.B. Edenor oder Actirob + Na₂CO₃+ S1-1, A2 + Solvesso + Na₂CO₃+ S1-1, A2 + Bayol + Na₂CO₃ + S1-1, A2 + Rapsölmethylester z.B. Edenor oder Actirob + Na₂CO₃ + S1-1, A3 + Solvesso + Na₂CO₃ + S1-1, A3 + Bayol + Na₂CO₃ + S1-1, A3 + Rapsölmethylester z.B. Edenor oder Actirob + Na₂CO₃ + S1-1, A4 + Solvesso + Na₂CO₃ + S1-1, A4 + Bayol + Na₂CO₃ + S1-1, A4 + Rapsölmethylester z.B. Edenor oder Actirob + Na₂CO₃ + S1-1, A5 + Solvesso + Na₂CO₃ + S1-1, A5 + Bayol + Na₂CO₃ + S1-1, A5 + Rapsölmethylester z.B. Edenor oder Actirob + Na₂CO₃ + S1-1, A6 + Solvesso + Na₂CO₃ + S1-1, A6 + Bayol + Na₂CO₃ + S1-1, A6 + Rapsölmethylester z.B. Edenor oder Actirob + Na₂CO₃ + S1-1, A7 + Solvesso + Na₂CO₃ + S1-1, A7 + Bayol + Na₂CO₃ + S1-1, A7 + Rapsölmethylester z.B. Edenor oder Actirob + Na₂CO₃ + S1-1, A8 + Solvesso + Na₂CO₃ + S1-1, A8 + Bayol + Na₂CO₃ + S1-1, A8 + Rapsölmethylester z.B. Edenor oder Actirob + Na₂CO₃ + S1-1, A9 + Solvesso + Na₂CO₃ + S1-1, A9 + Bayol + Na₂CO₃ + S1-1, A9 + Rapsölmethylester z.B. Edenor oder Actirob + Na₂CO₃ + S1-1, A10 + Solvesso + Na₂CO₃ + S1-1, A10 + Bayol + Na₂CO₃ + S1-1, A10 + Rapsölmethylester z.B. Edenor oder Actirob + Na₂CO₃ + S1-1, A11 + Solvesso + Na₂CO₃ + S1-1, A11 + Bayol + Na₂CO₃ + S1-1, A11 + Rapsölmethylester z.B. Edenor oder Actirob + Na₂CO₃ + S1-1, A12 + Solvesso + Na₂CO₃ + S1-1, A12 + Bayol + Na₂CO₃ + S1-1, A12 + Rapsölmethylester z.B. Edenor oder Actirob + Na₂CO₃ + S1-1, A13 + Solvesso + Na₂CO₃ + S1-1, A13 + Bayol + Na₂CO₃ + S1-1, A13 + Rapsölmethylester z.B. Edenor oder Actirob + Na₂CO₃ + S1-1, A14 + Solvesso + Na₂CO₃ + S1-1, A14 + Bayol + Na₂CO₃ + S1-1, A14 + Rapsölmethylester z.B. Edenor oder Actirob + Na₂CO₃ + S1-1,
   A1 + Solvesso + K₂CO₃ + S1-1, A1 + Bayol + K₂CO₃ + S1-1, A1 + Rapsölmethylester z.B. Edenor oder Actirob + K₂CO₃ + S1-1, A2 + Solvesso + K₂CO₃ + S1-1, A2 + Bayol + K₂CO₃ + S1-1, A2 + Rapsölmethylester z.B. Edenor oder Actirob + K₂CO₃ + S1-1, A3 + Solvesso + K₂CO₃ + S1-1, A3 + Bayol + K₂CO₃ + S1-1, A3 + Rapsölmethylester z.B. Edenor oder Actirob + K₂CO₃ + S1-1, A4 + Solvesso + K₂CO₃ + S1-1, A4 + Bayol + K₂CO₃ + S1-1, A4 + Rapsölmethylester z.B. Edenor oder Actirob + K₂CO₃ + S1-1, A5 + Solvesso + K₂CO₃ + S1-1, A5 + Bayol + K₂CO₃ + S1-1, A5 + Rapsölmethylester z.B. Edenor oder Actirob + K₂CO₃ + S1-1, A6 + Solvesso + K₂CO₃ + S1-1, A6 + Bayol + K₂CO₃ + S1-1, A6 + Rapsölmethylester z.B. Edenor oder Actirob + K₂CO₃ + S1-1, A7 + Solvesso + K₂CO₃ + S1-1, A7 + Bayol + K₂CO₃ + S1-1, A7 + Rapsölmethylester z.B. Edenor oder Actirob + K₂CO₃ + S1-1, A8 + Solvesso + K₂CO₃ + S1-1, A8 + Bayol + K₂CO₃ + S1-1, A8 + Rapsölmethylester z.B. Edenor oder Actirob + K₂CO₃ + S1-1, A9 + Solvesso + K₂CO₃ + S1-1, A9 + Bayol + K₂CO₃ + S1-1, A9 + Rapsölmethylester z.B. Edenor oder Actirob + K₂CO₃ + S1-1, A10 + Solvesso + K₂CO₃ + S1-1, A10 + Bayol + K₂CO₃ + S1-1, A10 + Rapsölmethylester z.B. Edenor oder Actirob + K₂CO₃ + S1-1, A11 + Solvesso + K₂CO₃ + S1-1, A11 + Bayol + K₂CO₃ + S1-1, A11 + Rapsölmethylester z.B. Edenor oder Actirob + K₂CO₃ + S1-1, A12 + Solvesso + K₂CO₃ + S1-1, A12 + Bayol + K₂CO₃ + S1-1, A12 + Rapsölmethylester z.B. Edenor oder Actirob + K₂CO₃ + S1-1, A13 + Solvesso + K₂CO₃ + S1-1, A13 + Bayol + K₂CO₃ + S1-1, A13 + Rapsölmethylester z.B. Edenor oder Actirob + K₂CO₃ + S1-1, A14 + Solvesso + K₂CO₃ + S1-1, A14 + Bayol + K₂CO₃ + S1-1, A14 + Rapsölmethylester z.B. Edenor oder Actirob + K₂CO₃ + S1-1,
   A1 + Solvesso + NaHCO₃ + S1-1, A1 + Bayol + NaHCO₃ + S1-1, A1 + Rapsölmethylester z.B. Edenor oder Actirob + NaHCO₃ + S1-1, A2 + Solvesso + NaHCO₃ + S1-1, A2 + Bayol + NaHCO₃ + S1-1, A2 + Rapsölmethylester z.B. Edenor oder Actirob + NaHCO₃ + S1-1, A3 + Solvesso + NaHCO₃ + S1-1, A3 + Bayol + NaHCO₃ + S1-1, A3 + Rapsölmethylester z.B. Edenor oder Actirob + NaHCO₃ + S1-1, A4 + Solvesso + NaHCO₃ + S1-1, A4 + Bayol + NaHCO₃ + S1-1, A4 + Rapsölmethylester z.B. Edenor oder Actirob + NaHCO₃ + S1-1, A5 + Solvesso + NaHCO₃ + S1-1, A5 + Bayol + NaHCO₃ + S1-1, A5 + Rapsölmethylester z.B. Edenor oder Actirob + NaHCO₃ + S1-1, A6 + Solvesso + NaHCO₃ + S1-1, A6 + Bayol + NaHCO₃ + S1-1, A6 + Rapsölmethylester z.B. Edenor oder Actirob + NaHCO₃ + S1-1, A7 + Solvesso + NaHCO₃ + S1-1, A7 + Bayol + NaHCO₃ + S1-1, A7 + Rapsölmethylester z.B. Edenor oder Actirob + NaHCO₃ + S1-1, A8 + Solvesso + NaHCO₃ + S1-1, A8 + Bayol + NaHCO₃ + S1-1, A8 + Rapsölmethylester z.B. Edenor oder Actirob + NaHCO₃ + S1-1, A9 + Solvesso + NaHCO₃ + S1-1, A9 + Bayol + NaHCO₃ + S1-1, A9 + Rapsölmethylester z.B. Edenor oder Actirob + NaHCO₃ + S1-1, A10 + Solvesso + NaHCO₃ + S1-1, A10 + Bayol + NaHCO₃ + S1-1, A10 + Rapsölmethylester z.B. Edenor oder Actirob + NaHCO₃ + S1-1, A11 + Solvesso + NaHCO₃ + S1-1, A11 + Bayol + NaHCO₃ + S1-1, A11 + Rapsölmethylester z.B. Edenor oder Actirob + NaHCO₃ + S1-1, A12 + Solvesso + NaHCO₃ + S1-1, A12 + Bayol + NaHCO₃ + S1-1, A12 + Rapsölmethylester z.B. Edenor oder Actirob + NaHCO₃ + S1-1, A13 + Solvesso + NaHCO₃ + S1-1, A13 + Bayol + NaHCO₃ + S1-1, A13 + Rapsölmethylester z.B. Edenor oder Actirob + NaHCO₃ + S1-1, A14 + Solvesso + NaHCO₃ + S1-1, A14 + Bayol + NaHCO₃ + S1-1, A14 + Rapsölmethylester z.B. Edenor oder Actirob + NaHCO₃ + S1-1,
   A1 + Solvesso + KHCO₃ + S1-1, A1 + Bayol + KHCO₃ + S1-1, A1 + Rapsölmethylester z.B. Edenor oder Actirob + KHCO₃ + S1-1, A2 + Solvesso + KHCO₃ + S1-1, A2 + Bayol + KHCO₃ + S1-1, A2 + Rapsölmethylester z.B. Edenor oder Actirob + KHCO₃+S1-1, A3 + Solvesso + KHCO₃ + S1-1, A3 + Bayol + KHCO₃ + S1-1, A3 + Rapsölmethylester z.B. Edenor oder Actirob + KHCO₃ + S1-1, A4 + Solvesso + KHCO₃ + S1-1, A4 + Bayol + KHCO₃ + S1-1, A4 + Rapsölmethylester z.B. Edenor oder Actirob + KHCO₃ + S1-1, A5 + Solvesso + KHCO₃ + S1-1, A5 + Bayol + KHCO₃ + S1-1, A5 + Rapsölmethylester z.B. Edenor oder Actirob + KHCO₃ + S1-1, A6 + Solvesso + KHCO₃ + S1-1, A6 + Bayol + KHCO₃ + S1-1, A6 + Rapsölmethylester z.B. Edenor oder Actirob + KHCO₃ + S1-1, A7 + Solvesso + KHCO₃ + S1-1, A7 + Bayol + KHCO₃ + S1-1, A7 + Rapsölmethylester z.B. Edenor oder Actirob + KHCO₃ + S1-1; A8 + Solvesso + KHCO₃ + S1-1, A8 + Bayol + KHCO₃ + S1-1, A8 + Rapsölmethylester z.B. Edenor oder Actirob + KHCO₃ + S1-1; A9 + Solvesso + KHCO₃ + S1-1, A9 + Bayol + KHCO₃ + S1-1, A9 + Rapsölmethylester z.B. Edenor oder Actirob + KHCO₃ + S1-1; A10 + Solvesso + KHCO₃ + S1-1, A10 + Bayol + KHCO₃ + S1-1, A10 + Rapsölmethylester z.B. Edenor oder Actirob + KHCO₃ + S1-1; A11 + Solvesso + KHCO₃ + S1-1, A11 + Bayol + KHCO₃ + S1-1, A11 + Rapsölmethylester z.B. Edenor oder Actirob + KHCO₃ + S1-1; A12 + Solvesso + KHCO₃ + S1-1, A12 + Bayol + KHCO₃ + S1-1, A12 + Rapsölmethylester z.B. Edenor oder Actirob + KHCO₃ + S1-1; A13 + Solvesso + KHCO₃ + S1-1, A13 + Bayol + KHCO₃ + S1-1, A13 + Rapsölmethylester z.B. Edenor oder Actirob + KHCO₃ + S1-1; A14 + Solvesso + KHCO₃ + S1-1, A14 + Bayol + KHCO₃ + S1-1, A14 + Rapsölmethylester z.B. Edenor oder Actirob + KHCO₃ + S1-1;
A1 + Solvesso + Na₂CO₃ + S1-9, A1 + Bayol + Na₂CO₃+ S1-9, A1 + Rapsölmethylester z.B. Edenor oder Actirob + Na₂CO₃ + S1-9, A2 + Solvesso + Na₂CO₃ + S1-9, A2 + Bayol + Na₂CO₃ + S1-9, A2 + Rapsölmethylester z.B. Edenor oder Actirob + Na₂CO₃ + S1-9, A3 + Solvesso + Na₂CO₃ + S1-9, A3 + Bayol + Na₂CO₃ + S1-9, A3 + Rapsölmethylester z.B. Edenor oder Actirob + Na₂CO₃ + S1-9, A4 + Solvesso + Na₂CO₃ + S1-9, A4 + Bayol + Na₂CO₃ + S1-9, A4 + Rapsölmethylester z.B. Edenor oder Actirob + Na₂CO₃ + S1-9, A5 + Solvesso + Na₂CO₃ + S1-9, A5 + Bayol + Na₂CO₃ + S1-9, A5 + Rapsölmethylester z.B. Edenor oder Actirob + Na₂CO₃ + S1-9, A6 + Solvesso + Na₂CO₃ + S1-9, A6 + Bayol + Na₂CO₃ + S1-9, A6 + Rapsölmethylester z.B. Edenor oder Actirob + Na₂CO₃ + S1-9, A7 + Solvesso + Na₂CO₃ + S1-9, A7 + Bayol + Na₂CO₃ + S1-9, A7 + Rapsölmethylester z.B. Edenor oder Actirob + Na₂CO₃ + S1-9, A8 + Solvesso + Na₂CO₃ + S1-9, A8 + Bayol + Na₂CO₃ + S1-9, A8 + Rapsölmethylester z.B. Edenor oder Actirob + Na₂CO₃ + S1-9, A9 + Solvesso + Na₂CO₃ + S1-9, A9 + Bayol + Na₂CO₃ + S1-9, A9 + Rapsölmethylester z.B. Edenor oder Actirob + Na₂CO₃ + S1-9, A10 + Solvesso + Na₂CO₃ + S1-9, A10 + Bayol + Na₂CO₃ + S1-9, A10 + Rapsölmethylester z.B. Edenor oder Actirob + Na₂CO₃ + S1-9, A11 + Solvesso + Na₂CO₃ + S1-9, A11 + Bayol + Na₂CO₃ + S1-9, A11 + Rapsölmethylester z.B. Edenor oder Actirob + Na₂CO₃ + S1-9, A12 + Solvesso + Na₂CO₃ + S1-9, A12 + Bayol + Na₂CO₃ + S1-9, A12 + Rapsölmethylester z.B. Edenor oder Actirob + Na₂CO₃ + S1-9, A13 + Solvesso + Na₂CO₃ + S1-9, A13 + Bayol + Na₂CO₃ + S1-9, A13 + Rapsölmethylester z.B. Edenor oder Actirob + Na₂CO₃ + S1-9, A14 + Solvesso + Na₂CO₃ + S1-9, A14 + Bayol + Na₂CO₃ + S1-9, A14 + Rapsölmethylester z.B. Edenor oder Actirob + Na₂CO₃ + S1-9,
   A1 + Solvesso + K₂CO₃ + S1-9, A1 + Bayol + K₂CO₃ + S1-9, A1 + Rapsölmethylester z.B. Edenor oder Actirob + K₂CO₃ + S1-9, A2 + Solvesso + K₂CO₃ + S1-9, A2 + Bayol + K₂CO₃ + S1-9, A2 + Rapsölmethylester z.B. Edenor oder Actirob + K₂CO₃ + S1-9, A3 + Solvesso + K₂CO₃ + S1-9, A3 + Bayol + K₂CO₃ + S1-9, A3 + Rapsölmethylester z.B. Edenor oder Actirob + K₂CO₃ + S1-9, A4 + Solvesso + K₂CO₃ + S1-9, A4 + Bayol + K₂CO₃ + S1-9, A4 + Rapsölmethylester z.B. Edenor oder Actirob + K₂CO₃ + S1-9, A5 + Solvesso + K₂CO₃ + S1-9, A5 + Bayol + K₂CO₃ + S1-9, A5 + Rapsölmethylester z.B. Edenor oder Actirob + K₂CO₃ + S1-9, A6 + Solvesso + K₂CO₃ + S1-9, A6 + Bayol + K₂CO₃ + S1-9, A6 + Rapsölmethylester z.B. Edenor oder Actirob + K₂CO₃ + S1-9, A7 + Solvesso + K₂CO₃ + S1-9, A7 + Bayol + K₂CO₃ + S1-9, A7 + Rapsölmethylester z.B. Edenor oder Actirob + K₂CO₃ + S1-9, A8 + Solvesso + K₂CO₃ + S1-9, A8 + Bayol + K₂CO₃ + S1-9, A8 + Rapsölmethylester z.B. Edenor oder Actirob + K₂CO₃ + S1-9, A9 + Solvesso + K₂CO₃ + S1-9, A9 + Bayol + K₂CO₃ + S1-9, A9 + Rapsölmethylester z.B. Edenor oder Actirob + K₂CO₃ + S1-9, A10 + Solvesso + K₂CO₃ + S1-9, A10 + Bayol + K₂CO₃ + S1-9, A10 + Rapsölmethylester z.B. Edenor oder Actirob + K₂CO₃ + S1-9, A11 + Solvesso + K₂CO₃ + S1-9, A11 + Bayol + K₂CO₃ + S1-9, A11 + Rapsölmethylester z.B. Edenor oder Actirob + K₂CO₃ + S1-9, A12 + Solvesso + K₂CO₃ + S1-9, A12 + Bayol + K₂CO₃ + S1-9, A12 + Rapsölmethylester z.B. Edenor oder Actirob + K₂CO₃ + S1-9, A13 + Solvesso + K₂CO₃ + S1-9, A13 + Bayol + K₂CO₃ + S1-9, A13 + Rapsölmethylester z.B. Edenor oder Actirob + K₂CO₃ + S1-9, A14 + Solvesso + K₂CO₃ + S1-9, A14 + Bayol + K₂CO₃ + S1-9, A14 + Rapsölmethylester z.B. Edenor oder Actirob + K₂CO₃ + S1-9,
   A1 + Solvesso + NaHCO₃ + S1-9, A1 + Bayol + NaHCO₃ + S1-9, A1 + Rapsölmethylester z.B. Edenor oder Actirob + NaHCO₃ + S1-9, A2 + Solvesso + NaHCO₃ + S1-9, A2 + Bayol + NaHCO₃ + S1-9, A2 + Rapsölmethylester z.B. Edenor oder Actirob + NaHCO₃ + S1-9, A3 + Solvesso + NaHCO₃ + S1-9, A3 + Bayol + NaHCO₃ + S1-9, A3 + Rapsölmethylester z.B. Edenor oder Actirob + NaHCO₃ + S1-9, A4 + Solvesso + NaHCO₃ + S1-9, A4 + Bayol + NaHCO₃ + S1-9, A4 + Rapsölmethylester z.B. Edenor oder Actirob + NaHCO₃ + S1-9, A5 + Solvesso + NaHCO₃ + S1-9, A5 + Bayol + NaHCO₃ + S1-9, A5 + Rapsölmethylester z.B. Edenor oder Actirob + NaHCO₃ + S1-9, A6 + Solvesso + NaHCO₃ + S1-9, A6 + Bayol + NaHCO₃ + S1-9, A6 + Rapsölmethylester z.B. Edenor oder Actirob + NaHCO₃ + S1-9, A7 + Solvesso + NaHCO₃ + S1-9, A7 + Bayol + NaHCO₃ + S1-9, A7 + Rapsölmethylester z.B. Edenor oder Actirob + NaHCO₃ + S1-9, A8 + Solvesso + NaHCO₃ + S1-9, A8 + Bayol + NaHCO₃ + S1-9, A8 + Rapsölmethylester z.B. Edenor oder Actirob + NaHCO₃ + S1-9, A9 + Solvesso + NaHCO₃ + S1-9, A9 + Bayol + NaHCO₃ + S1-9, A9 + Rapsölmethylester z.B. Edenor oder Actirob + NaHCO₃ + S1-9, A10 + Solvesso + NaHCO₃ + S1-9, A10 + Bayol + NaHCO₃ + S1-9, A10 + Rapsölmethylester z.B. Edenor oder Actirob + NaHCO₃ + S1-9, A11 + Solvesso + NaHCO₃ + S1-9, A11 + Bayol + NaHCO₃ + S1-9, A11 + Rapsölmethylester z.B. Edenor oder Actirob + NaHCO₃ + S1-9, A12 + Solvesso + NaHCO₃ + S1-9, A12 + Bayol + NaHCO₃ + S1-9, A12 + Rapsölmethylester z.B. Edenor oder Actirob + NaHCO₃ + S1-9, A13 + Solvesso + NaHCO₃ + S1-9, A13 + Bayol + NaHCO₃ + S1-9, A13 + Rapsölmethylester z.B. Edenor oder Actirob + NaHCO₃ + S1-9, A14 + Solvesso + NaHCO₃ + S1-9, A14 + Bayol + NaHCO₃ + S1-9, A14 + Rapsölmethylester z.B. Edenor oder Actirob + NaHCO₃ + S1-9,
   A1 + Solvesso + KHCO₃ + S1-9, A1 + Bayol + KHCO₃ + S1-9, A1 + Rapsölmethylester z.B. Edenor oder Actirob + KHCO₃ + S1-9, A2 + Solvesso + KHCO₃ + S1-9, A2 + Bayol + KHCO₃ + S1-9, A2 + Rapsölmethylester z.B. Edenor oder Actirob + KHCO₃ + S1-9, A3 + Solvesso + KHCO₃ + S1-9, A3 + Bayol + KHCO₃ + S1-9, A3 + Rapsölmethylester z.B. Edenor oder Actirob + KHCO₃ + S1-9, A4 + Solvesso + KHCO₃ + S1-9, A4 + Bayol + KHCO₃ + S1-9, A4 + Rapsölmethylester z.B. Edenor oder Actirob + KHCO₃ + S1-9, A5 + Solvesso + KHCO₃ + S1-9, A5 + Bayol + KHCO₃ + S1-9, A5 + Rapsölmethylester z.B. Edenor oder Actirob + KHCO₃ + S1-9, A6 + Solvesso + KHCO₃ + S1-9, A6 + Bayol + KHCO₃ + S1-9, A6 + Rapsölmethylester z.B. Edenor oder Actirob + KHCO₃ + S1-9, A7 + Solvesso + KHCO₃ + S1-9, A7 + Bayol + KHCO₃ + S1-9, A7 + Rapsölmethylester z.B. Edenor oder Actirob + KHCO₃ + S1-9, A8 + Solvesso + KHCO₃ + S1-9, A8 + Bayol + KHCO₃ + S1-9, A8 + Rapsölmethylester z.B. Edenor oder Actirob + KHCO₃ + S1-9, A9 + Solvesso + KHCO₃ + S1-9, A9 + Bayol + KHCO₃ + S1-9, A9 + Rapsölmethylester z.B. Edenor oder Actirob + KHCO₃ + S1-9, A10 + Solvesso + KHCO₃ + S1-9, A10 + Bayol + KHCO₃ + S1-9, A10 + Rapsölmethylester z.B. Edenor oder Actirob + KHCO₃ + S1-9, A11 + Solvesso + KHCO₃ + S1-9, A11 + Bayol + KHCO₃ + S1-9, A11 + Rapsölmethylester z.B. Edenor oder Actirob + KHCO₃ + S1-9, A12 + Solvesso + KHCO₃ + S1-9, A12 + Bayol + KHCO₃ + S1-9, A12 + Rapsölmethylester z.B. Edenor oder Actirob + KHCO₃ + S1-9, A13 + Solvesso + KHCO₃ + S1-9, A13 + Bayol + KHCO₃ + S1-9, A13 + Rapsölmethylester z.B. Edenor oder Actirob + KHCO₃ + S1-9, A14 + Solvesso + KHCO₃ + S1-9, A14 + Bayol + KHCO₃ + S1-9, A14 + Rapsölmethylester z.B. Edenor oder Actirob + KHCO₃ + S1-9;
A1 + Solvesso + Na₂CO₃ + S2-1, A1 + Bayol + Na₂CO₃ + S2-1, A1 + Rapsölmethylester z.B. Edenor oder Actirob + Na₂CO₃+ S2-1, A2 + Solvesso + Na₂CO₃+ S2-1, A2 + Bayol + Na₂CO₃ + S2-1, A2 + Rapsölmethylester z.B. Edenor oder Actirob + Na₂CO₃ + S2-1, A3 + Solvesso + Na₂CO₃ + S2-1, A3 + Bayol + Na₂CO₃ + S2-1, A3 + Rapsölmethylester z.B. Edenor oder Actirob + Na₂CO₃ + S2-1, A4 + Solvesso + Na₂CO₃ + S2-1, A4 + Bayol + Na₂CO₃ + S2-1, A4 + Rapsölmethylester z.B. Edenor oder Actirob + Na₂CO₃ + S2-1, A5 + Solvesso + Na₂CO₃ + S2-1, A5 + Bayol + Na₂CO₃ + S2-1, A5 + Rapsölmethylester z.B. Edenor oder Actirob + Na₂CO₃ + S2-1, A6 + Solvesso + Na₂CO₃ + S2-1, A6 + Bayol + Na₂CO₃ + S2-1, A6 + Rapsölmethylester z.B. Edenor oder Actirob + Na₂CO₃ + S2-1, A7 + Solvesso + Na₂CO₃ + S2-1, A7 + Bayol + Na₂CO₃ + S2-1, A7 + Rapsölmethylester z.B. Edenor oder Actirob + Na₂CO₃ + S2-1, A8 + Solvesso + Na₂CO₃ + S2-1, A8 + Bayol + Na₂CO₃ + S2-1, A8 + Rapsölmethylester z.B. Edenor oder Actirob + Na₂CO₃ + S2-1, A9 + Solvesso + Na₂CO₃ + S2-1, A9 + Bayol + Na₂CO₃ + S2-1, A9 + Rapsölmethylester z.B. Edenor oder Actirob + Na₂CO₃ + S2-1, A10 + Solvesso + Na₂CO₃ + S2-1, A10 + Bayol + Na₂CO₃ + S2-1, A10 + Rapsölmethylester z.B. Edenor oder Actirob + Na₂CO₃ + S2-1, A11 + Solvesso + Na₂CO₃ + S2-1, A11 + Bayol + Na₂CO₃ + S2-1, A11 + Rapsölmethylester z.B. Edenor oder Actirob + Na₂CO₃ + S2-1, A12 + Solvesso + Na₂CO₃ + S2-1, A12 + Bayol + Na₂CO₃ + S2-1, A12 + Rapsölmethylester z.B. Edenor oder Actirob + Na₂CO₃ +S2-1, A13 + Solvesso + Na₂CO₃ + S2-1, A13 + Bayol + Na₂CO₃ + S2-1, A13 + Rapsölmethylester z.B. Edenor oder Actirob + Na₂CO₃ + S2-1, A14 + Solvesso + Na₂CO₃ + S2-1, A14 + Bayol + Na₂CO₃ + S2-1, A14 + Rapsölmethylester z.B. Edenor oder Actirob + Na₂CO₃ + S2-1,
   A1 + Solvesso + K₂CO₃ + S2-1, A1 + Bayol + K₂CO₃ + S2-1, A1 + Rapsölmethylester z.B. Edenor oder Actirob + K₂CO₃ + S2-1, A2 + Solvesso + K₂CO₃ + S2-1, A2 + Bayol + K₂CO₃ + 52-1, A2 + Rapsölmethylester z.B. Edenor oder Actirob + K₂CO₃ + S2-1, A3 + Solvesso + K₂CO₃ + S2-1, A3 + Bayol + K₂CO₃ + S2-1, A3 + Rapsölmethylester z.B. Edenor oder Actirob + K₂CO₃ + S2-1, A4 + Solvesso + K₂CO₃ + S2-1, A4 + Bayol + K₂CO₃ + S2-1, A4 + Rapsölmethylester z.B. Edenor oder Actirob + K₂CO₃ + S2-1, A5 + Solvesso + K₂CO₃ + S2-1, A5 + Bayol + K₂CO₃ + S2-1, A5 + Rapsölmethylester z.B. Edenor oder Actirob + K₂CO₃ + S2-1, A6 + Solvesso + K₂CO₃ + S2-1, A6 + Bayol + K₂CO₃ + S2-1, A6 + Rapsölmethylester z.B. Edenor oder Actirob + K₂CO₃ + S2-1, A7 + Solvesso + K₂CO₃ + S2-1, A7 + Bayol + K₂CO₃ + S2-1, A7 + Rapsölmethylester z.B. Edenor oder Actirob + K₂CO₃ + S2-1, A8 + Solvesso + K₂CO₃ + S2-1, A8 + Bayol + K₂CO₃ + S2-1, A8 + Rapsölmethylester z.B. Edenor oder Actirob + K₂CO₃ + S2-1, A9 + Solvesso + K₂CO₃ + S2-1, A9 + Bayol + K₂CO₃ + S2-1, A9 + Rapsölmethylester z.B. Edenor oder Actirob + K₂CO₃ + S2-1, A10 + Solvesso + K₂CO₃ +S2-1, A10 + Bayol + K₂CO₃ + S2-1, A10 + Rapsölmethylester z.B. Edenor oder Actirob + K₂CO₃ + S2-1, A11 + Solvesso + K₂CO₃ + S2-1, A11 + Bayol + K₂CO₃ + S2-1, A11 + Rapsölmethylester z.B. Edenor oder Actirob + K₂CO₃ + S2-1, A12 + Solvesso + K₂CO₃ + S2-1, A12 + Bayol + K₂CO₃ + S2-1, A12 + Rapsölmethylester z.B. Edenor oder Actirob + K₂CO₃ + S2-1, A13 + Solvesso + K₂CO₃ + S2-1, A13 + Bayol + K₂CO₃ + S2-1, A13 + Rapsölmethylester z.B. Edenor oder Actirob + K₂CO₃ + S2-1, A14 + Solvesso + K₂CO₃ + S2-1, A14 + Bayol + K₂CO₃ + S2-1, A14 + Rapsölmethylester z.B. Edenor oder Actirob + K₂CO₃ + S2-1,
   A1 + Solvesso + NaHCO₃ + S2-1, A1 + Bayol + NaHCO₃ + S2-1, A1 + Rapsölmethylester z.B. Edenor oder Actirob + NaHCO₃ + S2-1, A2 + Solvesso + NaHCO₃ + S2-1, A2 + Bayol + NaHCO₃ + S2-1, A2 + Rapsölmethylester z.B. Edenor oder Actirob + NaHCO₃ + S2-1, A3 + Solvesso + NaHCO₃ + S2-1, A3 + Bayol + NaHCO₃ + S2-1, A3 + Rapsölmethylester z.B. Edenor oder Actirob + NaHCO₃ + S2-1, A4 + Solvesso + NaHCO₃ + S2-1, A4 + Bayol + NaHCO₃ + S2-1, A4 + Rapsölmethylester z.B. Edenor oder Actirob + NaHCO₃ + S2-1, A5 + Solvesso + NaHCO₃ + S2-1, A5 + Bayol + NaHCO₃ + S2-1, A5 + Rapsölmethylester z.B. Edenor oder Actirob + NaHCO₃+S2-1, A6 + Solvesso + NaHCO₃ + S2-1, A6 + Bayol + NaHCO₃ + S2-1, A6 + Rapsölmethylester z.B. Edenor oder Actirob + NaHCO₃ + S2-1, A7 + Solvesso + NaHCO₃+S2-1, A7 + Bayol + NaHCO₃ + S2-1, A7 + Rapsölmethylester z.B. Edenor oder Actirob + NaHCO₃ + S2-1, A8 + Solvesso + NaHCO₃ + S2-1, A8 + Bayol + NaHCO₃ + S2-1, A8 + Rapsölmethylester z.B. Edenor oder Actirob + NaHCO₃ + S2-1, A9 + Solvesso + NaHCO₃ + S2-1, A9 + Bayol + NaHCO₃ + S2-1, A9 + Rapsölmethylester z.B. Edenor oder Actirob + NaHCO₃ + S2-1, A10 + Solvesso + NaHCO₃ + S2-1, A10 + Bayol + NaHCO₃ + S2-1, A10 + Rapsölmethylester z.B. Edenor oder Actirob + NaHCO₃ + S2-1, A11 + Solvesso + NaHCO₃ + S2-1, A11 + Bayol + NaHCO₃ + S2-1, A11 + Rapsölmethylester z.B. Edenor oder Actirob + NaHCO₃ + S2-1, A12 + Solvesso + NaHCO₃ + S2-1, A12 + Bayol+ NaHCO₃ + S2-1, A12 + Rapsölmethylester z.B. Edenor oder Actirob + NaHCO₃ + S2-1, A13 + Solvesso + NaHCO₃ + S2-1, A13 + Bayol + NaHCO₃ + S2-1, A13 + Rapsölmethylester z.B. Edenor oder Actirob + NaHCO₃ + S2-1, A14 + Solvesso + NaHCO₃ + S2-1, A14 + Bayol + NaHCO₃ + S2-1, A14 + Rapsölmethylester z.B. Edenor oder Actirob + NaHC0₃ + S2-1,
   A1 + Solvesso + KHCO₃ + S2-1, A1 + Bayol + KHCO₃ + S2-1, A1 + Rapsölmethylester z.B. Edenor oder Actirob + KHCO₃ + S2-1, A2 + Solvesso + KHCO₃ + S2-1, A2 + Bayol + KHCO₃ + S2-1, A2 + Rapsölmethylester z.B. Edenor oder Actirob + KHCO₃ + S2-1, A3 + Solvesso + KHCO₃ + S2-1, A3 + Bayol + KHCO₃ + S2-1, A3 + Rapsölmethylester z.B. Edenor oder Actirob + KHCO₃ + S2-1, A4 + Solvesso + KHCO₃ + S2-1, A4 + Bayol + KHCO₃ + S2-1, A4 + Rapsölmethylester z.B. Edenor oder Actirob + KHCO₃ + S2-1, A5 + Solvesso + KHCO₃ + S2-1, A5 + Bayol + KHCO₃ + S2-1, A5 + Rapsölmethylester z.B. Edenor oder Actirob + KHCO₃ + S2-1, A6 + Solvesso + KHCO₃ + S2-1, A6 + Bayol + KHCO₃ + S2-1, A6 + Rapsölmethylester z.B. Edenor oder Actirob + KHCO₃ + S2-1, A7 + Solvesso + KHCO₃ + S2-1, A7 + Bayol + KHCO₃ + S2-1, A7 + Rapsölmethylester z.B. Edenor oder Actirob + KHCO₃ + S2-1, A8 + Solvesso + KHCO₃ + S2-1, A8 + Bayol + KHCO₃ + S2-1, A8 + Rapsölmethylester z.B. Edenor oder Actirob + KHCO₃ + S2-1, A9 + Solvesso + KHCO₃ + S2-1, A9 + Bayol + KHCO₃ + S2-1, A9 + Rapsölmethylester z.B. Edenor oder Actirob + KHCO₃ + S2-1, A10 + Solvesso + KHCO₃ + S2-1, A10 + Bayol + KHCO₃ + S2-1, A10 + Rapsölmethylester z.B. Edenor oder Actirob + KHCO₃ + S2-1, A11 + Solvesso + KHCO₃ + S2-1, A11 + Bayol + KHCO₃ + S2-1, A11 + Rapsölmethylester z.B. Edenor oder Actirob + KHCO₃ + S2-1, A12 + Solvesso + KHCO₃ + S2-1, A12 + Bayol + KHCO₃ + S2-1, A12 + Rapsölmethylester z.B. Edenor oder Actirob + KHCO₃ + S2-1, A13 + Solvesso + KHCO₃ + S2-1, A13 + Bayol + KHCO₃ + S2-1, A13 + Rapsölmethylester z.B. Edenor oder Actirob + KHCO₃ + S2-1, A14 + Solvesso + KHCO₃ + S2-1, A14 + Bayol + KHCO₃ + S2-1, A14 + Rapsölmethylester z.B. Edenor oder Actirob + KHCO₃ + S2-1;
A1 + Solvesso + Na₂CO₃ + Natrium-di(2-ethylhexyl)sulfosuccinat, A1 + Bayol + Na₂CO₃ + Natrium-di(2-ethylhexyl)sulfosuccinat, A1 + Rapsölmethylester z.B. Edenor oder Actirob + Na₂CO₃ + Natrium-di(2-ethylhexyl)sulfosuccinat,
   A2 + Solvesso + Na₂CO₃ + Natrium-di(2-ethylhexyl)sulfosuccinat, A2 + Bayol + Na₂CO₃ + Natrium-di(2-ethylhexyl)sulfosuccinat, A2 + Rapsölmethylester z.B. Edenor oder Actirob + Na₂CO₃ + Natrium-di(2-ethylhexyl)sulfosuccinat,
   A3 + Solvesso + Na₂CO₃ + Natrium-di(2-ethylhexyl)sulfosuccinat, A3 + Bayol + Na₂CO₃ + Natrium-di(2-ethylhexyl)sulfosuccinat, A3 + Rapsölmethylester z.B. Edenor oder Actirob + Na₂CO₃ + Natrium-di(2-ethylhexyl)sulfosuccinat,
   A4 + Solvesso + Na₂CO₃ + Natrium-di(2-ethylhexyl)sulfosuccinat, A4 + Bayol + Na₂CO₃ + Natrium-di(2-ethylhexyl)sulfosuccinat, A4 + Rapsölmethylester z.B. Edenor oder Actirob + Na₂CO₃ + Natrium-di(2-ethylhexyl)sulfosuccinat,
   A5 + Solvesso + Na₂CO₃ + Natrium-di(2-ethylhexyl)sulfosuccinat, A5 + Bayol + Na₂CO₃ + Natrium-di(2-ethylhexyl)sulfosuccinat, A5 + Rapsölmethylester z.B. Edenor oder Actirob + Na₂CO₃ + Natrium-di(2-ethylhexyl)sulfosuccinat,
   A6 + Solvesso + Na₂CO₃ + Natrium-di(2-ethylhexyl)sulfosuccinat, A6 + Bayol + Na₂CO₃ + Natrium-di(2-ethylhexyl)sulfosuccinat, A6 + Rapsölmethylester z.B. Edenor oder Actirob + Na₂CO₃ + Natrium-di(2-ethylhexyl)sulfosuccinat,
   A7 + Solvesso + Na₂CO₃ + Natrium-di(2-ethylhexyl)sulfosuccinat, A7 + Bayol + Na₂CO₃ + Natrium-di(2-ethylhexyl)sulfosuccinat, A7 + Rapsölmethylester z.B. Edenor oder Actirob + Na₂CO₃ + Natrium-di(2-ethylhexyl)sulfosuccinat,
   A8 + Solvesso + Na₂CO₃ + Natrium-di(2-ethylhexyl)sulfosuccinat, A8 + Bayol + Na₂CO₃ + Natrium-di(2-ethylhexyl)sulfosuccinat, A8 + Rapsölmethylester z.B. Edenor oder Actirob + Na₂CO₃ + Natrium-di(2-ethylhexyl)sulfosuccinat,
   A9 + Solvesso + Na₂CO₃ + Natrium-di(2-ethylhexyl)sulfosuccinat, A9 + Bayol + Na₂CO₃ + Natrium-di(2-ethylhexyl)sulfosuccinat, A9 + Rapsölmethylester z.B. Edenor oder Actirob + Na₂CO₃ + Natrium-di(2-ethylhexyl)sulfosuccinat,
   A10 + Solvesso + Na₂CO₃ + Natrium-di(2-ethylhexyl)sulfosuccinat, A10 + Bayol + Na₂CO₃ + Natrium-di(2-ethylhexyl)sulfosuccinat, A10 + Rapsölmethylester z.B. Edenor oder Actirob + Na₂CO₃ + Natrium-di(2-ethylhexyl)sulfosuccinat,
   A11 + Solvesso + Na₂CO₃ + Natrium-di(2-ethylhexyl)sulfosuccinat, A11 + Bayol + Na₂CO₃ + Natrium-di(2-ethylhexyl)sulfosuccinat, A11 + Rapsölmethylester z.B. Edenor oder Actirob + Na₂CO₃ + Natrium-di(2-ethylhexyl)sulfosuccinat,
   A12 + Solvesso + Na₂CO₃ + Natrium-di(2-ethylhexyl)sulfosuccinat, A12 + Bayol + Na₂CO₃ + Natrium-di(2-ethylhexyl)sulfosuccinat, A12 + Rapsölmethylester z.B. Edenor oder Actirob + Na₂CO₃ + Natrium-di(2-ethylhexyl)sulfosuccinat,
   A13 + Solvesso + Na₂CO₃ + Natrium-di(2-ethylhexyl)sulfosuccinat, A13 + Bayol + Na₂CO₃ + Natrium-di(2-ethylhexyl)sulfosuccinat, A13 + Rapsölmethylester z.B. Edenor oder Actirob + Na₂CO₃ + Natrium-di(2-ethylhexyl)sulfosuccinat,
   A14 + Solvesso + Na₂CO₃ + Natrium-di(2-ethylhexyl)sulfosuccinat, A14 + Bayol + Na₂CO₃ + Natrium-di(2-ethylhexyl)sulfosuccinat, A14 + Rapsölmethylester z.B. Edenor oder Actirob + Na₂CO₃ + Natrium-di(2-ethylhexyl)sulfosuccinat,
   A1 + Solvesso + K₂CO₃ + Natrium-di(2-ethylhexyl)sulfosuccinat, A1 + Bayol + K₂CO₃ + Natrium-di(2-ethylhexyl)sulfosuccinat, A1 + Rapsölmethylester z.B. Edenor oder Actirob + K₂CO₃ + Natrium-di(2-ethylhexyl)sulfosuccinat,
   A2 + Solvesso + K₂CO₃ + Natrium-di(2-ethylhexyl)sulfosuccinat, A2 + Bayol + K₂CO₃ + Natrium-di(2-ethylhexyl)sulfosuccinat, A2 + Rapsölmethylester z.B. Edenor oder Actirob + K₂CO₃ + Natrium-di(2-ethylhexyl)sulfosuccinat,
   A3 + Solvesso + K₂CO₃ + Natrium-di(2-ethylhexyl)sulfosuccinat, A3 + Bayol + K₂CO₃ + Natrium-di(2-ethylhexyl)sulfosuccinat, A3 + Rapsölmethylester z.B. Edenor oder Actirob + K₂CO₃ + Natrium-di(2-ethylhexyl)sulfosuccinat,
   A4 + Solvesso + K₂CO₃ + Natrium-di(2-ethylhexyl)sulfosuccinat, A4 + Bayol + K₂CO₃ + Natrium-di(2-ethylhexyl)sulfosuccinat, A4 + Rapsölmethylester z.B. Edenor oder Actirob + K₂CO₃ + Natrium-di(2-ethylhexyl)sulfosuccinat,
   A5 + Solvesso + K₂CO₃ + Natrium-di(2-ethylhexyl)sulfosuccinat, A5 + Bayol + K₂CO₃ + Natrium-di(2-ethylhexyl)sulfosuccinat, A5 + Rapsölmethylester z.B. Edenor oder Actirob + K₂CO₃ + Natrium-di(2-ethylhexyl)sulfosuccinat,
   A6 + Solvesso + K₂CO₃ + Natrium-di(2-ethylhexyl)sulfosuccinat, A6 + Bayol + K₂CO₃ + Natrium-di(2-ethylhexyl)sulfosuccinat, A6 + Rapsölmethylester z.B. Edenor oder Actirob + K₂CO₃ + Natrium-di(2-ethylhexyl)sulfosuccinat,
   A7 + Solvesso + K₂CO₃ + Natrium-di(2-ethylhexyl)sulfosuccinat, A7 + Bayol + K₂CO₃ + Natrium-di(2-ethylhexyl)sulfosuccinat, A7 + Rapsölmethylester z.B. Edenor oder Actirob + K₂CO₃ + Natrium-di(2-ethylhexyl)sulfosuccinat,
   A8 + Solvesso + K₂CO₃ + Natrium-di(2-ethylhexyl)sulfosuccinat, A8 + Bayol + K₂CO₃ + Natrium-di(2-ethylhexyl)sulfosuccinat, A8 + Rapsölmethylester z.B. Edenor oder Actirob + K₂CO₃ + Natrium-di(2-ethylhexyl)sulfosuccinat,
   A9 + Solvesso + K₂CO₃ + Natrium-di(2-ethylhexyl)sulfosuccinat, A9 + Bayol + K₂CO₃ + Natrium-di(2-ethylhexyl)sulfosuccinat, A9 + Rapsölmethylester z.B. Edenor oder Actirob + K₂CO₃ + Natrium-di(2-ethylhexyl)sulfosuccinat,
   A10 + Solvesso + K₂CO₃ + Natrium-di(2-ethylhexyl)sulfosuccinat, A10 + Bayol + K₂CO₃ + Natrium-di(2-ethylhexyl)sulfosuccinat, A10 + Rapsölmethylester z.B. Edenor oder Actirob + K₂CO₃ + Natrium-di(2-ethylhexyl)sulfosuccinat,
   A11 + Solvesso + K₂CO₃ + Natrium-di(2-ethylhexyl)sulfosuccinat, A11 + Bayol + K₂CO₃ + Natrium-di(2-ethylhexyl)sulfosuccinat, A11 + Rapsölmethylester z.B. Edenor oder Actirob + K₂CO₃ + Natrium-di(2-ethylhexyl)sulfosuccinat,
   A12 + Solvesso + K₂CO₃ + Natrium-di(2-ethylhexyl)sulfosuccinat, A12 + Bayol + K₂CO₃ + Natrium-di(2-ethylhexyl)sulfosuccinat, A12 + Rapsölmethylester z.B. Edenor oder Actirob + K₂CO₃ + Natrium-di(2-ethylhexyl)sulfosuccinat,
   A13 + Solvesso + K₂CO₃ + Natrium-di(2-ethylhexyl)sulfosuccinat, A13 + Bayol + K₂CO₃ + Natrium-di(2-ethylhexyl)sulfosuccinat, A13 + Rapsölmethylester z.B. Edenor oder Actirob + K₂CO₃ + Natrium-di(2-ethylhexyl)sulfosuccinat,
   A14 + Solvesso + K₂CO₃ + Natrium-di(2-ethylhexyl)sulfosuccinat, A14 + Bayol + K₂CO₃ + Natrium-di(2-ethylhexyl)sulfosuccinat, A14 + Rapsölmethylester z.B. Edenor oder Actirob + K₂CO₃ + Natrium-di(2-ethylhexyl)sulfosuccinat,
   A1 + Solvesso + NaHCO₃ + Natrium-di(2-ethylhexyl)sulfosuccinat, A1 + Bayol + NaHCO₃ + Natrium-di(2-ethylhexyl)sulfosuccinat, A1 + Rapsölmethylester z.B. Edenor oder Actirob + NaHCO₃ + Natrium-di(2-ethylhexyl)sulfosuccinat,
   A2 + Solvesso + NaHCO₃ + Natrium-di(2-ethylhexyl)sulfosuccinat, A2 + Bayol + NaHCO₃ + Natrium-di(2-ethylhexyl)sulfosuccinat, A2 + Rapsölmethylester z.B. Edenor oder Actirob + NaHCO₃ + Natrium-di(2-ethylhexyl)sulfosuccinat,
   A3 + Solvesso + NaHCO₃ + Natrium-di(2-ethylhexyl)sulfosuccinat, A3 + Bayol + NaHCO₃ + Natrium-di(2-ethylhexyl)sulfosuccinat, A3 + Rapsölmethylester z.B. Edenor oder Actirob + NaHCO₃ + Natrium-di(2-ethylhexyl)sulfosuccinat,
   A4 + Solvesso + NaHCO₃ + Natrium-di(2-ethylhexyl)sulfosuccinat, A4 + Bayol + NaHCO₃ + Natrium-di(2-ethylhexyl)sulfosuccinat, A4 + Rapsölmethylester z.B. Edenor oder Actirob + NaHCO₃ + Natrium-di(2-ethylhexyl)sulfosuccinat,
   A5 + Solvesso + NaHCO₃ + Natrium-di(2-ethylhexyl)sulfosuccinat, A5 + Bayol + NaHCO₃ + Natrium-di(2-ethylhexyl)sulfosuccinat, A5 + Rapsölmethylester z.B. Edenor oder Actirob + NaHCO₃ + Natrium-di(2-ethylhexyl)sulfosuccinat,
   A6 + Solvesso + NaHCO₃ + Natrium-di(2-ethylhexyl)sulfosuccinat, A6 + Bayol + NaHCO₃ + Natrium-di(2-ethylhexyl)sulfosuccinat, A6 + Rapsölmethylester z.B. Edenor oder Actirob + NaHCO₃ + Natrium-di(2-ethylhexyl)sulfosuccinat,
   A7 + Solvesso + NaHCO₃ + Natrium-di(2-ethylhexyl)sulfosuccinat, A7 + Bayol + NaHCO₃ + Natrium-di(2-ethylhexyl)sulfosuccinat, A7 + Rapsölmethylester z.B. Edenor oder Actirob + NaHCO₃ + Natrium-di(2-ethylhexyl)sulfosuccinat,
   A8 + Solvesso + NaHCO₃ + Natrium-di(2-ethylhexyl)sulfosuccinat, A8 + Bayol + NaHCO₃ + Natrium-di(2-ethylhexyl)sulfosuccinat, A8 + Rapsölmethylester z.B. Edenor oder Actirob + NaHCO₃ + Natrium-di(2-ethylhexyl)sulfosuccinat,
   A9 + Solvesso + NaHCO₃ + Natrium-di(2-ethylhexyl)sulfosuccinat, A9 + Bayol + NaHCO₃ + Natrium-di(2-ethylhexyl)sulfosuccinat, A9 + Rapsölmethylester z.B. Edenor oder Actirob + NaHCO₃ + Natrium-di(2-ethylhexyl)sulfosuccinat,
   A10 + Solvesso + NaHCO₃ + Natrium-di(2-ethylhexyl)sulfosuccinat, A10 + Bayol + NaHCO₃ + Natrium-di(2-ethylhexyl)sulfosuccinat, A10 + Rapsölmethylester z.B. Edenor oder Actirob + NaHCO₃ + Natrium-di(2-ethylhexyl)sulfosuccinat,
   A11 + Solvesso + NaHCO₃ + Natrium-di(2-ethylhexyl)sulfosuccinat, A11 + Bayol + NaHCO₃ + Natrium-di(2-ethylhexyl)sulfosuccinat, A11 + Rapsölmethylester z.B. Edenor oder Actirob + NaHCO₃ + Natrium-di(2-ethylhexyl)sulfosuccinat,
   A12 + Solvesso + NaHCO₃ + Natrium-di(2-ethylhexyl)sulfosuccinat, A12 + Bayol + NaHCO₃ + Natrium-di(2-ethylhexyl)sulfosuccinat, A12 + Rapsölmethylester z.B. Edenor oder Actirob + NaHCO₃ + Natrium-di(2-ethylhexyl)sulfosuccinat,
   A13 + Solvesso + NaHCO₃ + Natrium-di(2-ethylhexyl)sulfosuccinat, A13 + Bayol + NaHCO₃ + Natrium-di(2-ethylhexyl)sulfosuccinat, A13 + Rapsölmethylester z.B. Edenor oder Actirob + NaHCO₃ + Natrium-di(2-ethylhexyl)sulfosuccinat,
   A14 + Solvesso + NaHCO₃ + Natrium-di(2-ethylhexyl)sulfosuccinat, A14 + Bayol + NaHCO₃ + Natrium-di(2-ethylhexyl)sulfosuccinat, A14 + Rapsölmethylester z.B. Edenor oder Actirob + NaHCO₃ + Natrium-di(2-ethylhexyl)sulfosuccinat;
   A1 + Solvesso + KHCO₃ + Natrium-di(2-ethylhexyl)sulfosuccinat, A1 + Bayol + KHCO₃ + Natrium-di(2-ethylhexyl)sulfosuccinat, A1 + Rapsölmethylester z.B. Edenor oder Actirob + KHCO₃ + Natrium-di(2-ethylhexyl)sulfosuccinat,
   A2 + Solvesso + KHCO₃ + Natrium-di(2-ethylhexyl)sulfosuccinat, A2 + Bayol + KHCO₃ + Natrium-di(2-ethylhexyl)sulfosuccinat, A2 + Rapsölmethylester z.B. Edenor oder Actirob + KHCO₃ + Natrium-di(2-ethylhexyl)sulfosuccinat,
   A3 + Solvesso + KHCO₃ + Natrium-di(2-ethylhexyl)sulfosuccinat, A3 + Bayol + KHCO₃ + Natrium-di(2-ethylhexyl)sulfosuccinat, A3 + Rapsölmethylester z.B. Edenor oder Actirob + KHCO₃ + Natrium-di(2-ethylhexyl)sulfosuccinat,
   A4 + Solvesso + KHCO₃ + Natrium-di(2-ethylhexyl)sulfosuccinat, A4 + Bayol + KHCO₃ + Natrium-di(2-ethylhexyl)sulfosuccinat, A4 + Rapsölmethylester z.B. Edenor oder Actirob + KHCO₃ + Natrium-di(2-ethylhexyl)sulfosuccinat,
   A5 + Solvesso + KHCO₃ + Natrium-di(2-ethylhexyl)sulfosuccinat, A5 + Bayol + KHCO₃ + Natrium-di(2-ethylhexyl)sulfosuccinat, A5 + Rapsölmethylester z.B. Edenor oder Actirob + KHCO₃ + Natrium-di(2-ethylhexyl)sulfosuccinat,
   A6 + Solvesso + KHCO₃ + Natrium-di(2-ethylhexyl)sulfosuccinat, A6 + Bayol + KHCO₃ + Natrium-di(2-ethylhexyl)sulfosuccinat, A6 + Rapsölmethylester z.B. Edenor oder Actirob + KHCO₃ + Natrium-di(2-ethylhexyl)sulfosuccinat,
   A7 + Solvesso + KHCO₃ + Natrium-di(2-ethylhexyl)sulfosuccinat, A7 + Bayol + KHCO₃ + Natrium-di(2-ethylhexyl)sulfosuccinat, A7 + Rapsölmethylester z.B. Edenor oder Actirob + KHCO₃ + Natrium-di(2-ethylhexyl)sulfosuccinat,
   A8 + Solvesso + KHCO₃ + Natrium-di(2-ethylhexyl)sulfosuccinat, A8 + Bayol + KHCO₃ + Natrium-di(2-ethylhexyl)sulfosuccinat, A8 + Rapsölmethylester z.B. Edenor oder Actirob + KHCO₃ + Natrium-di(2-ethylhexyl)sulfosuccinat,
   A9 + Solvesso + KHCO₃ + Natrium-di(2-ethylhexyl)sulfosuccinat, A9 + Bayol + KHCO₃ + Natrium-di(2-ethylhexyl)sulfosuccinat, A9 + Rapsölmethylester z.B. Edenor oder Actirob + KHCO₃ + Natrium-di(2-ethylhexyl)sulfosuccinat,
   A10 + Solvesso + KHCO₃ + Natrium-di(2-ethylhexyl)sulfosuccinat, A10 + Bayol + KHCO₃ + Natrium-di(2-ethylhexyl)sulfosuccinat, A10 + Rapsölmethylester z.B. Edenor oder Actirob + KHCO₃ + Natrium-di(2-ethylhexyl)sulfosuccinat,
   A11 + Solvesso + KHCO₃ + Natrium-di(2-ethylhexyl)sulfosuccinat, A11 + Bayol + KHCO₃ + Natrium-di(2-ethylhexyl)sulfosuccinat, A11 + Rapsölmethylester z.B. Edenor oder Actirob + KHCO₃ + Natrium-di(2-ethylhexyl)sulfosuccinat,
   A12 + Solvesso + KHCO₃ + Natrium-di(2-ethylhexyl)sulfosuccinat, A12 + Bayol + KHCO₃ + Natrium-di(2-ethylhexyl)sulfosuccinat, A12 + Rapsölmethylester z.B. Edenor oder Actirob + KHCO₃ + Natrium-di(2-ethylhexyl)sulfosuccinat,
   A13 + Solvesso + KHCO₃ + Natrium-di(2-ethylhexyl)sulfosuccinat, A13 + Bayol + KHCO₃ + Natrium-di(2-ethylhexyl)sulfosuccinat, A13 + Rapsölmethylester z.B. Edenor oder Actirob + KHCO₃ + Natrium-di(2-ethylhexyl)sulfosuccinat,
   A14 + Solvesso + KHCO₃ + Natrium-di(2-ethylhexyl)sulfosuccinat, A14 + Bayol + KHCO₃ + Natrium-di(2-ethylhexyl)sulfosuccinat, A14 + Rapsölmethylester z.B. Edenor oder Actirob + KHCO₃ + Natrium-di(2-ethylhexyl)sulfosuccinat;
A1 + Solvesso + Na₂CO₃ + S1-1 + Natrium-di(2-ethylhexyl)sulfosuccinat, A1 + Bayol + Na₂CO₃ + S1-1 + Natrium-di(2-ethylhexyl)sulfosuccinat, A1 + Rapsölmethylesfer z.B. Edenor oder Actirob + Na₂CO₃ + S1-1 + Natrium-di(2-ethylhexyl)sulfosuccinat, A2 + Solvesso + Na₂CO₃ + S1-1 + Natrium-di(2-ethylhexyl)sulfosuccinat, A2 + Bayol + Na₂CO₃ + S1-1 + Natrium-di(2-ethylhexyl)sulfosuccinat, A2 + Rapsölmethylester z.B. Edenor oder Actirob + Na₂CO₃ + S1-1 + Natrium-di(2-ethylhexyl)sulfosuccinat, A3 + Solvesso + Na₂CO₃ + S1-1 + Natrium-di(2-ethylhexyl)sulfosuccinat, A3 + Bayol + Na₂CO₃ + S1-1 + Natrium-di(2-ethylhexyl)sulfosuccinat, A3 + Rapsölmethylester z.B. Edenor oder Actirob + Na₂CO₃ + S1-1 + Natrium-di(2-ethylhexyl)sulfosuccinat, A4 + Solvesso + Na₂CO₃ + S1-1 + Natrium-di(2-ethylhexyl)sulfosuccinat, A4 + Bayol + Na₂CO₃ + S1-1 + Natrium-di(2-ethylhexyl)sulfosuccinat, A4 + Rapsölmethylester z.B. Edenor oder Actirob + Na₂CO₃ + S1-1 + Natrium-di(2-ethylhexyl)sulfosuccinat, A5 + Solvesso + Na₂CO₃ + S1-1 + Natrium-di(2-ethylhexyl)sulfosuccinat, A5 + Bayol + Na₂CO₃ + S1-1 + Natrium-di(2-ethylhexyl)sulfosuccinat, A5 + Rapsölmethylester z.B. Edenor oder Actirob + Na₂CO₃ + S1-1 + Natrium-di(2-ethylhexyl)sulfosuccinat, A6 + Solvesso + Na₂CO₃ + S1-1 + Natrium-di(2-ethylhexyl)sulfosuccinat, A6 + Bayol + Na₂CO₃ + S1-1 + Natrium-di(2-ethylhexyl)sulfosuccinat, A6 + Rapsölmethylester z.B. Edenor oder Actirob + Na₂CO₃ + S1-1 + Natrium-di(2-ethylhexyl)sulfosuccinat, A7 + Solvesso + Na₂CO₃ + S1-1 + Natrium-di(2-ethylhexyl)sulfosuccinat, A7 + Bayol + Na₂CO₃ + S1-1 + Natrium-di(2-ethylhexyl)sulfosuccinat, A7 + Rapsölmethylester z.B. Edenor oder Actirob + Na₂CO₃ + S1-1 + Natrium-di(2-ethylhexyl)sulfosuccinat, A8 + Solvesso + Na₂CO₃ + S1-1 + Natrium-di(2-ethylhexyl)sulfosuccinat, A8 + Bayol + Na₂CO₃ + S1-1 + Natrium-di(2-ethylhexyl)sulfosuccinat, A8 + Rapsölmethylester z.B. Edenor oder Actirob + Na₂CO₃ + S1-1 + Natrium-di(2-ethylhexyl)sulfosuccinat, A9 + Solvesso + Na₂CO₃ + S1-1 + Natrium-di(2-ethylhexyl)sulfosuccinat, A9 + Bayol + Na₂CO₃ + S1-1 + Natrium-di(2-ethylhexyl)sulfosuccinat, A9 + Rapsölmethylester z.B. Edenor oder Actirob + Na₂CO₃ + S1-1 + Natrium-di(2-ethylhexyl)sulfosuccinat, A10 + Solvesso + Na₂CO₃ + S1-1 + Natrium-di(2-ethylhexyl)sulfosuccinat, A10 + Bayol + Na₂CO₃ + S1-1 + Natrium-di(2-ethylhexyl)sulfosuccinat, A10 + Rapsölmethylester z.B. Edenor oder Actirob + Na₂CO₃ + S1-1 + Natrium-di(2-ethylhexyl)sulfosuccinat,
   A11 + Solvesso + Na₂CO₃ + S1-1 + Natrium-di(2-ethylhexyl)sulfosuccinat, A11 + Bayol + Na₂CO₃ + S1-1 + Natrium-di(2-ethylhexyl)sulfosuccinat, A11 + Rapsölmethylester z.B. Edenor oder Actirob + Na₂CO₃ + S1-1 + Natrium-di(2-ethylhexyl)sulfosuccinat,
   A12 + Solvesso + Na₂CO₃ + S1-1 + Natrium-di(2-ethylhexyl)sulfosuccinat, A12 + Bayol + Na₂CO₃ + S1-1 + Natrium-di(2-ethylhexyl)sulfosuccinat, A12 + Rapsölmethylester z.B. Edenor oder Actirob + Na₂CO₃ + S1-1 + Natrium-di(2-ethylhexyl)sulfosuccinat,
   A13 + Solvesso + Na₂CO₃ + S1-1 + Natrium-di(2-ethylhexyl)sulfosuccinat, A13 + Bayol + Na₂CO₃ + S1-1 + Natrium-di(2-ethylhexyl)sulfosuccinat, A13 + Rapsölmethylester z.B. Edenor oder Actirob + Na₂CO₃ + S1-1 + Natrium-di(2-ethylhexyl)sulfosuccinat,
   A14 + Solvesso + Na₂CO₃ + S1-1 + Natrium-di(2-ethylhexyl)sulfosuccinat, A14 + Bayol + Na₂CO₃ + S1-1 + Natrium-di(2-ethylhexyl)sulfosuccinat, A14 + Rapsölmethylester z.B. Edenor oder Actirob + Na₂CO₃ + S1-1 + Natrium-di(2-ethylhexyl)sulfosuccinat,
   A1 + Solvesso + K₂CO₃ + S1-1 + Natrium-di(2-ethylhexyl)sulfosuccinat, A1 + Bayol + K₂CO₃ + S1-1 + Natrium-di(2-ethylhexyl)sulfosuccinat, A1 + Rapsölmethylester z.B. Edenor oder Actirob + K₂CO₃ + S1-1 + Natrium-di(2-ethylhexyl)sulfosuccinat,
   A2 + Solvesso + K₂CO₃ + S1-1 + Natrium-di(2-ethylhexyl)sulfosuccinat, A2 + Bayol + K₂CO₃ + S1-1 + Natrium-di(2-ethylhexyl)sulfosuccinat, A2 + Rapsölmethylester z.B. Edenor oder Actirob + K₂CO₃ + S1-1 + Natrium-di(2-ethylhexyl)sulfosuccinat,
   A3 + Solvesso + K₂CO₃ + S1-1 + Natrium-di(2-ethylhexyl)sulfosuccinat, A3 + Bayol + K₂CO₃ + S1-1 + Natrium-di(2-ethylhexyl)sulfosuccinat, A3 + Rapsölmethylester z.B. Edenor oder Actirob + K₂CO₃ + S1-1 + Natrium-di(2-ethylhexyl)sulfosuccinat,
   A4 + Solvesso + K₂CO₃ + S1-1 + Natrium-di(2-ethylhexyl)sulfosuccinat, A4 + Bayol + K₂CO₃ + S1-1 + Natrium-di(2-ethylhexyl)sulfosuccinat, A4 + Rapsölmethylester z.B. Edenor oder Actirob + K₂CO₃ + S1-1 + Natrium-di(2-ethylhexyl)sulfosuccinat,
   A5 + Solvesso + K₂CO₃ + S1-1 + Natrium-di(2-ethylhexyl)sulfosuccinat, A5 + Bayol + K₂CO₃ + S1-1 + Natrium-di(2-ethylhexyl)sulfosuccinat, A5 + Rapsölmethylester z.B. Edenor oder Actirob + K₂CO₃ + S1-1 + Natrium-di(2-ethylhexyl)sulfosuccinat,
   A6 + Solvesso + K₂CO₃ + S1-1 + Natrium-di(2-ethylhexyl)sulfosuccinat, A6 + Bayol + K₂CO₃ + S1-1 + Natrium-di(2-ethylhexyl)sulfosuccinat, A6 + Rapsölmethylester z.B. Edenor oder Actirob + K₂CO₃ + S1-1 + Natrium-di(2-ethylhexyl)sulfosuccinat,
   A7 + Solvesso + K₂CO₃ + S1-1 + Natrium-di(2-ethylhexyl)sulfosuccinat, A7 + Bayol + K₂CO₃ + S1-1 + Natrium-di(2-ethylhexyl)sulfosuccinat, A7 + Rapsölmethylester z.B. Edenor oder Actirob + K₂CO₃ + S1-1 + Natrium-di(2-ethylhexyl)sulfosuccinat,
   A8 + Solvesso + K₂CO₃ + S1-1 + Natrium-di(2-ethylhexyl)sulfosuccinat, A8 + Bayol + K₂CO₃ + S1-1 + Natrium-di(2-ethylhexyl)sulfosuccinat, A8 + Rapsölmethylester z.B. Edenor oder Actirob + K₂CO₃ + S1-1 + Natrium-di(2-ethylhexyl)sulfosuccinat,
   A9 + Solvesso + K₂CO₃ + S1-1 + Natrium-di(2-ethylhexyl)sulfosuccinat, A9 + Bayol + K₂CO₃ + S1-1 + Natrium-di(2-ethylhexyl)sulfosuccinat, A9 + Rapsölmethylester z.B. Edenor oder Actirob + K₂CO₃ + S1-1 + Natrium-di(2-ethylhexyl)sulfosuccinat,
   A10 + Solvesso + K₂CO₃ + S1-1 + Natrium-di(2-ethylhexyl)sulfosuccinat, A10 + Bayol + K₂CO₃ + S1-1 + Natrium-di(2-ethylhexyl)sulfosuccinat, A10 + Rapsölmethylester z.B. Edenor oder Actirob + K₂CO₃ + S1-1 + Natrium-di(2-ethylhexyl)sulfosuccinat,
   A11 + Solvesso + K₂CO₃ + S1-1 + Natrium-di(2-ethylhexyl)sulfosuccinat, A11 + Bayol + K₂CO₃ + S1-1 + Natrium-di(2-ethylhexyl)sulfosuccinat, A11 + Rapsölmethylester z.B. Edenor oder Actirob + K₂CO₃ + S1-1 + Natrium-di(2-ethylhexyl)sulfosuccinat,
   A12 + Solvesso + K₂CO₃ + S1-1 + Natrium-di(2-ethylhexyl)sulfosuccinat, A12 + Bayol + K₂CO₃ + S1-1 + Natrium-di(2-ethylhexyl)sulfosuccinat, A12 + Rapsölmethylester z.B. Edenor oder Actirob + K₂CO₃ + S1-1 + Natrium-di(2-ethylhexyl)sulfosuccinat,
   A13 + Solvesso + K₂CO₃ + S1-1 + Natrium-di(2-ethylhexyl)sulfosuccinat, A13 + Bayol + K₂CO₃ + S1-1 + Natrium-di(2-ethylhexyl)sulfosuccinat, A13 + Rapsölmethylester z.B. Edenor oder Actirob + K₂CO₃ + S1-1 + Natrium-di(2-ethylhexyl)sulfosuccinat,
   A14 + Solvesso + K₂CO₃ + S1-1 + Natrium-di(2-ethylhexyl)sulfosuccinat, A14 + Bayol + K₂CO₃ + S1-1 + Natrium-di(2-ethylhexyl)sulfosuccinat, A14 + Rapsölmethylester z.B. Edenor oder Actirob + K₂CO₃ + S1-1 + Natrium-di(2-ethylhexyl)sulfosuccinat,
   A1 + Solvesso + NaHCO₃ + S1-1 + Natrium-di(2-ethylhexyl)sulfosuccinat, A1 + Bayol + NaHCO₃ + S1-1 + Natrium-di(2-ethylhexyl)sulfosuccinat, A1 + Rapsölmethylester z.B. Edenor oder Actirob + NaHCO₃ + S1-1 + Natrium-di(2-ethylhexyl)sulfosuccinat, A2 + Solvesso + NaHCO₃ + S1-1 + Natrium-di(2-ethylhexyl)sulfosuccinat, A2 + Bayol + NaHCO₃ + S1-1 + Natrium-di(2-ethylhexyl)sulfosuccinat, A2 + Rapsölmethylester z.B. Edenor oder Actirob + NaHCO₃+ S1-1 + Natrium-di(2-ethylhexyl)sulfosuccinat, A3 + Solvesso + NaHCO₃ + S1-1 + Natrium-di(2-ethylhexyl)sulfosuccinat, A3 + Bayol + NaHCO₃ + S1-1 + Natrium-di(2-ethylhexyl)sulfosuccinat, A3 + Rapsölmethylester z.B. Edenor oder Actirob + NaHCO₃ + S1-1 + Natrium-di(2-ethylhexyl)sulfosuccinat, A4 + Solvesso + NaHCO₃ + S1-1 + Natrium-di(2-ethylhexyl)sulfosuccinat, A4 + Bayol + NaHCO₃ + S1-1 + Natrium-di(2-ethylhexyl)sulfosuccinat, A4 + Rapsölmethylester z.B. Edenor oder Actirob + NaHCO₃ + S1-1 + Natrium-di(2-ethylhexyl)sulfosuccinat, A5 + Solvesso + NaHCO₃ + S1-1 + Natrium-di(2-ethylhexyl)sulfosuccinat, A5 + Bayol + NaHCO₃ + S1-1 + Natrium-di(2-ethylhexyl)sulfosuccinat, A5 + Rapsölmethylester z.B. Edenor oder Actirob + NaHCO₃ + S1-1 + Natrium-di(2-ethylhexyl)sulfosuccinat, A6 + Solvesso + NaHCO₃ + S1-1 + Natrium-di(2-ethylhexyl)sulfosuccinat, A6 + Bayol + NaHCO₃ + S1-1 + Natrium-di(2-ethylhexyl)sulfosuccinat, A6 + Rapsölmethylester z.B. Edenor oder Actirob + NaHCO₃ + S1-1 + Natrium-di(2-ethylhexyl)sulfosuccinat, A7 + Solvesso + NaHCO₃ + S1-1 + Natrium-di(2-ethylhexyl)sulfosuccinat, A7 + Bayol + NaHCO₃ + S1-1 + Natrium-di(2-ethylhexyl)sulfosuccinat, A7 + Rapsölmethylester z.B. Edenor oder Actirob + NaHCO₃ + S1-1 + Natrium-di(2-ethylhexyl)sulfosuccinat, A8 + Solvesso + NaHCO₃ + S1-1 + Natrium-di(2-ethylhexyl)sulfosuccinat, A8 + Bayol + NaHCO₃ + S1-1 + Natrium-di(2-ethylhexyl)sulfosuccinat, A8 + Rapsölmethylester z.B. Edenor oder Actirob + NaHCO₃ + S1-1 + Natrium-di(2-ethylhexyl)sulfosuccinat, A9 + Solvesso + NaHCO₃ + S1-1 + Natrium-di(2-ethylhexyl)sulfosuccinat, A9 + Bayol + NaHCO₃ + S1-1 + Natrium-di(2-ethylhexyl)sulfosuccinat, A9 + Rapsölmethylester z.B. Edenor oder Actirob + NaHCO₃ + S1-1 + Natrium-di(2-ethylhexyl)sulfosuccinat, A10 + Solvesso + NaHCO₃ + S1-1 + Natrium-di(2-ethylhexyl)sulfosuccinat, A10 + Bayol + NaHCO₃ + S1-1 + Natrium-di(2-ethylhexyl)sulfosuccinat, A10 + Rapsölmethylester z.B. Edenor oder Actirob + NaHCO₃ + S1-1 + Natrium-di(2-ethylhexyl)sulfosuccinat, A11 + Solvesso + NaHCO₃ + S1-1 + Natrium-di(2-ethylhexyl)sulfosuccinat, A11 + Bayol + NaHCO₃ + S1-1 + Natrium-di(2-ethylhexyl)sulfosuccinat, A11 + Rapsölmethylester z.B. Edenor oder Actirob + NaHCO₃ + S1-1 + Natrium-di(2-ethylhexyl)sulfosuccinat, A12 + Solvesso + NaHCO₃ + S1-1 + Natrium-di(2-ethylhexyl)sulfosuccinat, A12 + Bayol + NaHCO₃ + S1-1 + Natrium-di(2-ethylhexyl)sulfosuccinat, A12 + Rapsölmethylester z.B. Edenor oder Actirob + NaHCO₃ + S1-1 + Natrium-di(2-ethylhexyl)sulfosuccinat, A13 + Solvesso + NaHCO₃ + S1-1 + Natrium-di(2-ethylhexyl)sulfosuccinat, A13 + Bayol + NaHCO₃ + S1-1 + Natrium-di(2-ethylhexyl)sulfosuccinat, A13 + Rapsölmethylester z.B. Edenor oder Actirob + NaHCO₃ + S1-1 + Natrium-di(2-ethylhexyl)sulfosuccinat, A14 + Solvesso + NaHCO₃ + S1-1 + Natrium-di(2-ethylhexyl)sulfosuccinat, A14 + Bayol + NaHCO₃ + S1-1 + Natrium-di(2-ethylhexyl)sulfosuccinat, A14 + Rapsölmethylester z.B. Edenor oder Actirob + NaHCO₃ + S1-1 + Natrium-di(2-ethylhexyl)sulfosuccinat,
   A1 + Solvesso + KHCO₃ + S1-1 + Natrium-di(2-ethylhexyl)sulfosuccinat, A1 + Bayol + KHCO₃ + S1-1 + Natriurn-di(2-ethylhexyl)sulfosuccinat, A1 + Rapsölmethylester z.B. Edenor oder Actirob + KHCO₃ + S1-1 + Natrium-di(2-ethylhexyl)sulfosuccinat, A2 + Solvesso + KHCO₃ + S1-1 + Natrium-di(2-ethylhexyl)sulfosuccinat, A2 + Bayol + KHCO₃ + S1-1 + Natrium-di(2-ethylhexyl)sulfosuccinat, A2 + Rapsölmethylester z.B. Edenor oder Actirob + KHCO₃ + S1-1 + Natrium-di(2-ethylhexyl)sulfosuccinat, A3 + Solvesso + KHCO₃ + S1-1 + Natrium-di(2-ethylhexyl)sulfosuccinat, A3 + Bayol + KHCO₃ + S1-1 + Natrium-di(2-ethylhexyl)sulfosuccinat, A3 + Rapsölmethylester z.B. Edenor oder Actirob + KHCO₃ + S1-1 + Natrium-di(2-ethylhexyl)sulfosuccinat, A4 + Solvesso + KHCO₃ + S1-1 + Natrium-di(2-ethylhexyl)sulfosuccinat, A4 + Bayol + KHCO₃ + S1-1 + Natrium-di(2-ethylhexyl)sulfosuccinat, A4 + Rapsölmethylester z.B. Edenor oder Actirob + KHCO₃ + S1-1 + Natrium-di(2-ethylhexyl)sulfosuccinat, A5 + Solvesso + KHCO₃ + S1-1 + Natrium-di(2-ethylhexyl)sulfosuccinat, A5 + Bayol + KHCO₃ + S1-1 + Natrium-di(2-ethylhexyl)sulfosuccinat, A5 + Rapsölmethylester z.B. Edenor oder Actirob + KHCO₃ + S1-1 + Natrium-di(2-ethylhexyl)sulfosuccinat, A6 + Solvesso + KHCO₃ + S1-1 + Natrium-di(2-ethylhexyl)sulfosuccinat, A6 + Bayol + KHCO₃ + S1-1 + Natrium-di(2-ethylhexyl)sulfosuccinat, A6 + Rapsölmethylester z.B. Edenor oder Actirob + KHCO₃ + S1-1 + Natrium-di(2-ethylhexyl)sulfosuccinat, A7 + Solvesso + KHCO₃ + S1-1 + Natrium-di(2-ethylhexyl)sulfosuccinat, A7 + Bayol + KHCO₃ + S1-1 + Natrium-di(2-ethylhexyl)sulfosuccinat, A7 + Rapsölmethylester z.B. Edenor oder Actirob + KHCO₃ + S1-1 + Natrium-di(2-ethylhexyl)sulfosuccinat, A8 + Solvesso + KHCO₃ + S1-1 + Natrium-di(2-ethylhexyl)sulfosuccinat, A8 + Bayol + KHCO₃ + S1-1 + Natrium-di(2-ethylhexyl)sulfosuccinat, A8 + Rapsölmethylester z.B. Edenor oder Actirob + KHCO₃ + S1-1 + Natrium-di(2-ethylhexyl)sulfosuccinat, A9 + Solvesso + KHCO₃ + S1-1 + Natrium-di(2-ethylhexyl)sulfosuccinat, A9 + Bayol + KHCO₃ + S1-1 + Natrium-di(2-ethylhexyl)sulfosuccinat, A9 + Rapsölmethylester z.B. Edenor oder Actirob + KHCO₃ + S1-1 + Natrium-di(2-ethylhexyl)sulfosuccinat, A10 + Solvesso + KHCO₃ + S1-1 + Natrium-di(2-ethylhexyl)sulfosuccinat, A10 + Bayol + KHCO₃ + S1-1 + Natrium-di(2-ethylhexyl)sulfosuccinat, A10 + Rapsölmethylester z.B. Edenor oder Actirob + KHCO₃ + S1-1 + Natrium-di(2-ethylhexyl)sulfosuccinat, A11 + Solvesso + KHCO₃ + S1-1 + Natrium-di(2-ethylhexyl)sulfosuccinat, A11 + Bayol + KHCO₃ + S1-1 + Natrium-di(2-ethylhexyl)sulfosuccinat, A11 + Rapsölmethylester z.B. Edenor oder Actirob + KHCO₃ + S1-1 + Natrium-di(2-ethylhexyl)sulfosuccinat, A12 + Solvesso + KHCO₃ + S1-1 + Natrium-di(2-ethylhexyl)sulfosuccinat, A12 + Bayol + KHCO₃ + S1-1 + Natrium-di(2-ethylhexyl)sulfosuccinat, A12 + Rapsölmethylester z.B. Edenor oder Actirob + KHCO₃ + S1-1 + Natrium-di(2-ethylhexyl)sulfosuccinat, A13 + Solvesso + KHCO₃ + S1-1 + Natrium-di(2-ethylhexyl)sulfosuccinat, A13 + Bayol + KHCO₃ + S1-1 + Natrium-di(2-ethylhexyl)sulfosuccinat, A13 + Rapsölmethylester z.B. Edenor oder Actirob + KHCO₃ + S1-1 + Natrium-di(2-ethylhexyl)sulfosuccinat, A14 + Solvesso + KHCO₃ + S1-1 + Natrium-di(2-ethylhexyl)sulfosuccinat, A14 + Bayol + KHCO₃ + S1-1 + Natrium-di(2-ethylhexyl)sulfosuccinat, A14 + Rapsölmethylester z.B. Edenor oder Actirob + KHCO₃ + S1-1 + Natrium-di(2-ethylhexyl)sulfosuccinat;
A1 + Solvesso + Na₂CO₃ + S1-9 + Natrium-di(2-ethylhexyl)sulfosuccinat, A1 + Bayol + Na₂CO₃ + S1-9 + Natrium-di(2-ethylhexyl)sulfosuccinat, A1 + Rapsölmethylester z.B. Edenor oder Actirob + Na₂CO₃ + S1-9 + Natrium-di(2-ethylhexyl)sulfosuccinat, A2 + Solvesso + Na₂CO₃ + S1-9 + Natrium-di(2-ethylhexyl)sulfosuccinat, A2 + Bayol + Na₂CO₃ + S1-9 + Natrium-di(2-ethylhexyl)sulfosuccinat, A2 + Rapsölmethylester z.B. Edenor oder Actirob + Na₂CO₃ + S1-9 + Natrium-di(2-ethylhexyl)sulfosuccinat, A3 + Solvesso + Na₂CO₃ + S1-9 + Natrium-di(2-ethylhexyl)sulfosuccinat, A3 + Bayol + Na₂CO₃ + S1-9 + Natrium-di(2-ethylhexyl)sulfosuccinat, A3 + Rapsölmethylester z.B. Edenor oder Actirob + Na₂CO₃ + S1-9 + Natrium-di(2-ethylhexyl)sulfosuccinat, A4 + Solvesso + Na₂CO₃ + S1-9 + Natrium-di(2-ethylhexyl)sulfosuccinat, A4 + Bayol + Na₂CO₃ + S1-9 + Natrium-di(2-ethylhexyl)sulfosuccinat, A4 + Rapsölmethylester z.B. Edenor oder Actirob + Na₂CO₃ + S1-9 + Natrium-di(2-ethylhexyl)sulfosuccinat, A5 + Solvesso + Na₂CO₃ + S1-9 + Natrium-di(2-ethylhexyl)sulfosuccinat, A5 + Bayol + Na₂CO₃ + S1-9 + Natrium-di(2-ethylhexyl)sulfosuccinat, A5 + Rapsölmethylester z.B. Edenor oder Actirob + Na₂CO₃ + S1-9 + Natrium-di(2-ethylhexyl)sulfosuccinat, A6 + Solvesso + Na₂CO₃ + S1-9 + Natrium-di(2-ethylhexyl)sulfosuccinat, A6 + Bayol + Na₂CO₃ + S1-9 + Natrium-di(2-ethylhexyl)sulfosuccinat, A6 + Rapsölmethylester z.B. Edenor oder Actirob + Na₂CO₃ + S1-9 + Natrium-di(2-ethylhexyl)sulfosuccinat, A7 + Solvesso + Na₂CO₃ + S1-9 + Natrium-di(2-ethylhexyl)sulfosuccinat, A7 + Bayol + Na₂CO₃ + S1-9 + Natrium-di(2-ethylhexyl)sulfosuccinat, A7 + Rapsölmethylester z.B. Edenor oder Actirob + Na₂CO₃ + S1-9 + Natrium-di(2-ethylhexyl)sulfosuccinat, A8 + Solvesso + Na₂CO₃ + S1-9 + Natrium-di(2-ethylhexyl)sulfosuccinat, A8 + Bayol + Na₂CO₃ + S1-9 + Natrium-di(2-ethylhexyl)sulfosuccinat, A8 + Rapsölmethylester z.B. Edenor oder Actirob + Na₂CO₃ + S1-9 + Natrium-di(2-ethylhexyl)sulfosuccinat, A9 + Solvesso + Na₂CO₃ + S1-9 + Natrium-di(2-ethylhexyl)sulfosuccinat, A9 + Bayol + Na₂CO₃ + S1-9 + Natrium-di(2-ethylhexyl)sulfosuccinat, A9 + Rapsölmethylester z.B. Edenor oder Actirob + Na₂CO₃ + S1-9 + Natrium-di(2-ethylhexyl)sulfosuccinat, A10 + Solvesso + Na₂CO₃ + S1-9 + Natrium-di(2-ethylhexyl)sulfosuccinat, A10 + Bayol + Na₂CO₃ + S1-9 + Natrium-di(2-ethylhexyl)sulfosuccinat, A10 + Rapsölmethylester z.B. Edenor oder Actirob + Na₂CO₃ + S1-9 + Natrium-di(2-ethylhexyl)sulfosuccinat, A11 + Solvesso + Na₂CO₃ + S1-9 + Natrium-di(2-ethylhexyl)sulfosuccinat, A11 + Bayol + Na₂CO₃ + S1-9 + Natrium-di(2-ethylhexyl)sulfosuccinat, A11 + Rapsölmethylester z.B. Edenor oder Actirob + Na₂CO₃ + S1-9 + Natrium-di(2-ethylhexyl)sulfosuccinat, A12 + Solvesso + Na₂CO₃ + S1-9 + Natrium-di(2-ethylhexyl)sulfosuccinat, A12 + Bayol + Na₂CO₃ + S1-9 + Natrium-di(2-ethylhexyl)sulfosuccinat, A12 + Rapsölmethylester z.B. Edenor oder Actirob + Na₂CO₃ + S1-9 + Natrium-di(2-ethylhexyl)sulfosuccinat, A13 + Solvesso + Na₂CO₃ + S1-9 + Natrium-di(2-ethylhexyl)sulfosuccinat, A13 + Bayol + Na₂CO₃ + S1-9 + Natrium-di(2-ethylhexyl)sulfosuccinat, A13 + Rapsölmethylester z.B. Edenor oder Actirob + Na₂CO₃ + S1-9 + Natrium-di(2-ethylhexyl)sulfosuccinat, A14 + Solvesso + Na₂CO₃ + S1-9 + Natrium-di(2-ethylhexyl)sulfosuccinat, A14 + Bayol + Na₂CO₃ + S1-9 + Natrium-di(2-ethylhexyl)sulfosuccinat, A14 + Rapsölmethylester z.B. Edenor oder Actirob + Na₂CO₃ + S1-9 + Natrium-di(2-ethylhexyl)sulfosuccinat,
   A1 + Solvesso + K₂CO₃ + S1-9 + Natrium-di(2-ethylhexyl)sulfosuccinat, A1 + Bayol + K₂CO₃ + S1-9 + Natrium-di(2-ethylhexyl)sulfosuccinat, A1 + Rapsölmethylester z.B. Edenor oder Actirob + K₂CO₃ + S1-9 + Natrium-di(2-ethylhexyl)sulfosuccinat,
   A2 + Solvesso + K₂CO₃ + S1-9 + Natrium-di(2-ethylhexyl)sulfosuccinat, A2 + Bayol + K₂CO₃ + S1-9 + Natrium-di(2-ethylhexyl)sulfosuccinat, A2 + Rapsölmethylester z.B. Edenor oder Actirob + K₂CO₃ + S1-9 + Natrium-di(2-ethylhexyl)sulfosuccinat,
   A3 + Solvesso + K₂CO₃ + S1-9 + Natrium-di(2-ethylhexyl)sulfosuccinat, A3 + Bayol + K₂CO₃ + S1-9 + Natrium-di(2-ethylhexyl)sulfosuccinat, A3 + Rapsölmethylester z.B. Edenor oder Actirob + K₂CO₃ + S1-9 + Natrium-di(2-ethylhexyl)sulfosuccinat,
   A4 + Solvesso + K₂CO₃ + S1-9 + Natrium-di(2-ethylhexyl)sulfosuccinat, A4 + Bayol + K₂CO₃ + S1-9 + Natrium-di(2-ethylhexyl)sulfosuccinat, A4 + Rapsölmethylester z.B. Edenor oder Actirob + K₂CO₃ + S1-9 + Natrium-di(2-ethylhexyl)sulfosuccinat,
   A5 + Solvesso + K₂CO₃ + S1-9 + Natrium-di(2-ethylhexyl)sulfosuccinat, A5 + Bayol + K₂CO₃ + S1-9 + Natrium-di(2-ethylhexyl)sulfosuccinat, A5 + Rapsölmethylester z.B. Edenor oder Actirob + K₂CO₃ + S1-9 + Natrium-di(2-ethylhexyl)sulfosuccinat,
   A6 + Solvesso + K₂CO₃ + S1-9 + Natrium-di(2-ethylhexyl)sulfosuccinat, A6 + Bayol + K₂CO₃ + S1-9 + Natrium-di(2-ethylhexyl)sulfosuccinat, A6 + Rapsölmethylester z.B. Edenor oder Actirob + K₂CO₃ + S1-9 + Natrium-di(2-ethylhexyl)sulfosuccinat,
   A7 + Solvesso + K₂CO₃ + S1-9 + Natrium-di(2-ethylhexyl)sulfosuccinat, A7 + Bayol + K₂CO₃ + S1-9 + Natrium-di(2-ethylhexyl)sulfosuccinat, A7 + Rapsölmethylester z.B. Edenor oder Actirob + K₂CO₃ + S1-9 + Natrium-di(2-ethylhexyl)sulfosuccinat,
   A8 + Solvesso + K₂CO₃ + S1-9 + Natrium-di(2-ethylhexyl)sulfosuccinat, A8 + Bayol + K₂CO₃ + S1-9 + Natrium-di(2-ethylhexyl)sulfosuccinat, A8 + Rapsölmethylester z.B. Edenor oder Actirob + K₂CO₃ + S1-9 + Natrium-di(2-ethylhexyl)sulfosuccinat,
   A9 + Solvesso + K₂CO₃ + S1-9 + Natrium-di(2-ethylhexyl)sulfosuccinat, A9 + Bayol + K₂CO₃ + S1-9 + Natrium-di(2-ethylhexyl)sulfosuccinat, A9 + Rapsölmethylester z.B. Edenor oder Actirob + K₂CO₃ + S1-9 + Natrium-di(2-ethylhexyl)sulfosuccinat,
   A10 + Solvesso + K₂CO₃ + S1-9 + Natrium-di(2-ethylhexyl)sulfosuccinat, A10 + Bayol + K₂CO₃ + S1-9 + Natrium-di(2-ethylhexyl)sulfosuccinat, A10 + Rapsölmethylester z.B. Edenor oder Actirob + K₂CO₃ + S1-9 + Natrium-di(2-ethylhexyl)sulfosuccinat, A11 + Solvesso + K₂CO₃ + S1-9 + Natrium-di(2-ethylhexyl)sulfosuccinat, A11 + Bayol + K₂CO₃ + S1-9 + Natrium-di(2-ethylhexyl)sulfosuccinat, A11 + Rapsölmethylester z.B. Edenor oder Actirob + K₂CO₃ + S1-9 + Natrium-di(2-ethylhexyl)sulfosuccinat, A12 + Solvesso + K₂CO₃ + S1-9 + Natrium-di(2-ethylhexyl)sulfosuccinat, A12 + Bayol + K₂CO₃ + S1-9 + Natrium-di(2-ethylhexyl)sulfosuccinat, A12 + Rapsölmethylester z.B. Edenor oder Actirob + K₂CO₃ + S1-9 + Natrium-di(2-ethylhexyl)sulfosuccinat, A13 + Solvesso + K₂CO₃ + S1-9 + Natrium-di(2-ethylhexyl)sulfosuccinat, A13 + Bayol + K₂CO₃ + S1-9 + Natrium-di(2-ethylhexyl)sulfosuccinat, A13 + Rapsölmethylester z.B. Edenor oder Actirob + K₂CO₃ + S1-9 + Natrium-di(2-ethylhexyl)sulfosuccinat, A14 + Solvesso + K₂CO₃ + S1-9 + Natrium-di(2-ethylhexyl)sulfosuccinat, A14 + Bayol + K₂CO₃ + S1-9 + Natrium-di(2-ethylhexyl)sulfosuccinat, A14 + Rapsölmethylester z.B. Edenor oder Actirob + K₂CO₃ + S1-9 + Natrium-di(2-ethylhexyl)sulfosuccinat,
   A1 + Solvesso + NaHCO₃ + S1-9 + Natrium-di(2-ethylhexyl)sulfosuccinat, A1 + Bayol + NaHCO₃ + S1-9 + Natrium-di(2-ethylhexyl)sulfosuccinat, A1 + Rapsölmethylester z.B. Edenor oder Actirob + NaHCO₃ + S1-9 + Natrium-di(2-ethylhexyl)sulfosuccinat, A2 + Solvesso + NaHCO₃ + S1-9 + Natrium-di(2-ethylhexyl)sulfosuccinat, A2 + Bayol + NaHCO₃ + S1-9 + Natrium-di(2-ethylhexyl)sulfosuccinat, A2 + Rapsölmethylester z.B. Edenor oder Actirob + NaHCO₃ + S1-9 + Natrium-di(2-ethylhexyl)sulfosuccinat, A3 + Solvesso + NaHCO₃ + S1-9 + Natrium-di(2-ethylhexyl)sulfosuccinat, A3 + Bayol + NaHCO₃ + S1-9 + Natrium-di(2-ethylhexyl)sulfosuccinat, A3 + Rapsölmethylester z.B. Edenor oder Actirob + NaHCO₃ + S1-9 + Natrium-di(2-ethylhexyl)sulfosuccinat, A4 + Solvesso + NaHC0₃ + S1-9 + Natrium-di(2-ethylhexyl)sulfosuccinat, A4 + Bayol + NaHCO₃ + S1-9 + Natrium-di(2-ethylhexyl)sulfosuccinat, A4 + Rapsölmethylester z.B. Edenor oder Actirob + NaHCO₃ + S1-9 + Natrium-di(2-ethylhexyl)sulfosuccinat, A5 + Solvesso + NaHCO₃ + S1-9 + Natrium-di(2-ethylhexyl)sulfosuccinat, A5 + Bayol + NaHCO₃ + S1-9 + Natrium-di(2-ethylhexyl)sulfosuccinat, A5 + Rapsölmethylester z.B. Edenor oder Actirob + NaHCO₃ + S1-9 + Natrium-di(2-ethylhexyl)sulfosuccinat, A6 + Solvesso + NaHCO₃ + S1-9 + Natrium-di(2-ethylhexyl)sulfosuccinat, A6 + Bayol + NaHCO₃ + S1-9 + Natrium-di(2-ethylhexyl)sulfosuccinat, A6 + Rapsölmethylester z.B. Edenor oder Actirob + NaHCO₃ + S1-9 + Natrium-di(2-ethylhexyl)sulfosuccinat, A7 + Solvesso + NaHCO₃ + S1-9 + Natrium-di(2-ethylhexyl)sulfosuccinat, A7 + Bayol + NaHCO₃ + S1-9 + Natrium-di(2-ethylhexyl)sulfosuccinat, A7 + Rapsölmethylester z.B. Edenor oder Actirob + NaHCO₃ + S1-9 + Natrium-di(2-ethylhexyl)sulfosuccinat, A8 + Solvesso + NaHCO₃ + S1-9 + Natrium-di(2-ethylhexyl)sulfosuccinat, A8 + Bayol + NaHCO₃ + S1-9 + Natrium-di(2-ethylhexyl)sulfosuccinat, A8 + Rapsölmethylester z.B. Edenor oder Actirob + NaHCO₃ + S1-9 + Natrium-di(2-ethylhexyl)sulfosuccinat, A9 + Solvesso + NaHCO₃ + S1-9 + Natrium-di(2-ethylhexyl)sulfosuccinat, A9 + Bayol + NaHCO₃ + S1-9 + Natrium-di(2-ethylhexyl)sulfosuccinat, A9 + Rapsölmethylester z.B. Edenor oder Actirob + NaHCO₃ + S1-9 + Natrium-di(2-ethylhexyl)sulfosuccinat, A10 + Solvesso + NaHCO₃ + S1-9 + Natrium-di(2-ethylhexyl)sulfosuccinat, A10 + Bayol + NaHCO₃ + S1-9 + Natrium-di(2-ethylhexyl)sulfosuccinat, A10 + Rapsölmethylester z.B. Edenor oder Actirob + NaHCO₃ + S1-9 + Natrium-di(2-ethylhexyl)sulfosuccinat, A11 + Solvesso + NaHCO₃ + S1-9 + Natrium-di(2-ethylhexyl)sulfosuccinat, A11 + Bayol + NaHCO₃ + S1-9 + Natrium-di(2-ethylhexyl)sulfosuccinat, A11 + Rapsölmethylester z.B. Edenor oder Actirob + NaHCO₃ + S1-9 + Natrium-di(2-ethylhexyl)sulfosuccinat, A12 + Solvesso + NaHCO₃ + S1-9 + Natrium-di(2-ethylhexyl)sulfosuccinat, A12 + Bayol + NaHCO₃ + S1-9 + Natrium-di(2-ethylhexyl)sulfosuccinat, A12 + Rapsölmethylester z.B. Edenor oder Actirob + NaHCO₃ + S1-9 + Natrium-di(2-ethylhexyl)sulfosuccinat, A13 + Solvesso + NaHCO₃ + S1-9 + Natrium-di(2-ethylhexyl)sulfosuccinat, A13 + Bayol + NaHCO₃ + S1-9 + Natrium-di(2-ethylhexyl)sulfosuccinat, A13 + Rapsölmethylester z.B. Edenor oder Actirob + NaHCO₃ + S1-9 + Natrium-di(2-ethylhexyl)sulfosuccinat, A14 + Solvesso + NaHCO₃ + S1-9 + Natrium-di(2-ethylhexyl)sulfosuccinat, A14 + Bayol + NaHCO₃ + S1-9 + Natrium-di(2-ethylhexyl)sulfosuccinat, A14 + Rapsölmethylester z.B. Edenor oder Actirob + NaHCO₃ + S1-9 + Natrium-di(2-ethylhexyl)sulfosuccinat,
   A1 + Solvesso + KHCO₃ + S1-9 + Natrium-di(2-ethylhexyl)sulfosuccinat, A1 + Bayol + KHCO₃ + S1-9 + Natrium-di(2-ethylhexyl)sulfosuccinat, A1 + Rapsölmethylester z.B. Edenor oder Actirob + KHCO₃ + S₁-₉ + Natrium-di(2-ethylhexyl)sulfosuccinat, A2 + Solvesso + KHCO₃ + S1-9 + Natrium-di(2-ethylhexyl)sulfosuccinat, A2 + Bayol + KHCO₃ + S1-9 + Natrium-di(2-ethylhexyl)sulfosuccinat, A2 + Rapsölmethylester z.B. Edenor oder Actirob + KHCO₃ + S1-9 + Natrium-di(2-ethylhexyl)sulfosuccinat, A3 + Solvesso + KHCO₃ + S1-9 + Natrium-di(2-ethylhexyl)sulfosuccinat, A3 + Bayol + KHCO₃ + S1-9 + Natrium-di(2-ethylhexyl)sulfosuccinat, A3 + Rapsölmethylester z.B. Edenor oder Actirob + KHCO₃ + S1-9 + Natrium-di(2-ethylhexyl)sulfosuccinat, A4 + Solvesso + KHCO₃ + S1-9 + Natrium-di(2-ethylhexyl)sulfosuccinat, A4 + Bayol + KHCO₃ + S1-9 + Natrium-di(2-ethylhexyl)sulfosuccinat, A4 + Rapsölmethylester z.B. Edenor oder Actirob + KHCO₃ + S1-9 + Natrium-di(2-ethylhexyl)sulfosuccinat, A5 + Solvesso + KHCO₃ + S1-9 + Natrium-di(2-ethylhexyl)sulfosuccinat, A5 + Bayol + KHCO₃+ S1-9 + Natrium-di(2-ethylhexyl)sulfosuccinat, A5 + Rapsölmethylester z.B. Edenor oder Actirob + KHCO₃ + S1-9 + Natrium-di(2-ethylhexyl)sulfosuccinat, A6 + Solvesso + KHCO₃ + S1-9 + Natrium-di(2-ethylhexyl)sulfosuccinat, A6 + Bayol + KHCO₃ + S1-9 + Natrium-di(2-ethylhexyl)sulfosuccinat, A6 + Rapsölmethylester z.B. Edenor oder Actirob + KHCO₃ + S1-9 + Natrium-di(2-ethylhexyl)sulfosuccinat, A7 + Solvesso + KHCO₃ + S1-9 + Natrium-di(2-ethylhexyl)sulfosuccinat, A7 + Bayol + KHCO₃ + S1-9 + Natrium-di(2-ethylhexyl)sulfosuccinat, A7 + Rapsölmethylester z.B. Edenor oder Actirob + KHCO₃ + S1-9 + Natrium-di(2-ethylhexyl)sulfosuccinat, A8 + Solvesso + KHCO₃ + S1-9 + Natrium-di(2-ethylhexyl)sulfosuccinat, A8 + Bayol + KHCO₃ + S1-9 + Natrium-di(2-ethylhexyl)sulfosuccinat, A8 + Rapsölmethylester z.B. Edenor oder Actirob + KHCO₃ + S1-9 + Natrium-di(2-ethylhexyl)sulfosuccinat, A9 + Solvesso + KHCO₃ + S1-9 + Natrium-di(2-ethylhexyl)sulfosuccinat, A9 + Bayol + KHCO₃ + S1-9 + Natrium-di(2-ethylhexyl)sulfosuccinat, A9 + Rapsölmethylester z.B. Edenor oder Actirob + KHCO₃ + S1-9 + Natrium-di(2-ethylhexyl)sulfosuccinat, A10 + Solvesso + KHCO₃ + S1-9 + Natrium-di(2-ethylhexyl)sulfosuccinat, A10 + Bayol + KHCO₃ + S1-9 + Natrium-di(2-ethylhexyl)sulfosuccinat, A10 + Rapsölmethylester z.B. Edenor oder Actirob + KHCO₃ + S1-9 + Natrium-di(2-ethylhexyl)sulfosuccinat, A11 + Solvesso + KHCO₃ + S1-9 + Natrium-di(2-ethylhexyl)sulfosuccinat, A11 + Bayol + KHCO₃ + S1-9 + Natrium-di(2-ethylhexyl)sulfosuccinat, A11 + Rapsölmethylester z.B. Edenor oder Actirob + KHCO₃+S1-9 + Natrium-di(2-ethylhexyl)sulfosuccinat, A12 + Solvesso + KHCO₃ + S1-9 + Natrium-di(2-ethylhexyl)sulfosuccinat, A12 + Bayol + KHCO₃ + S1-9 + Natrium-di(2-ethylhexyl)sulfosuccinat, A12 + Rapsölmethylester z.B. Edenor oder Actirob + KHCO₃ + S1-9 + Natrium-di(2-ethylhexyl)sulfosuccinat, A13 + Solvesso + KHCO₃ + S1-9 + Natrium-di(2-ethylhexyl)sulfosuccinat, A13 + Bayol + KHCO₃ + S1-9 + Natrium-di(2-ethylhexyl)sulfosuccinat, A13 + Rapsölmethylester z.B. Edenor oder Actirob + KHCO₃ + S1-9 + Natrium-di(2-ethylhexyl)sulfosuccinat, A14 + Solvesso + KHCO₃ + S1-9 + Natrium-di(2-ethylhexyl)sulfosuccinat, A14 + Bayol + KHCO₃ + S1-9 + Natrium-di(2-ethylhexyl)sulfosuccinat, A14 + Rapsölmethylester z.B. Edenor oder Actirob + KHCO₃ + S1-9 + Natrium-di(2-ethylhexyl)sulfosuccinat;
A1 + Solvesso + Na₂CO₃ + S2-1 + Natrium-di(2-ethylhexyl)sulfosuccinat, A1 + Bayol + Na₂CO₃ + S2-1.+ Natrium-di(2-ethylhexyl)sulfosuccinat, A1 + Rapsölmethylester z.B. Edenor oder Actirob + Na₂CO₃ + S2-1 + Natrium-di(2-ethylhexyl)sulfosuccinat, A2 + Solvesso + Na₂CO₃ + S2-1 + Natrium-di(2-ethylhexyl)sulfosuccinat, A2 + Bayol + Na₂CO₃ + S2-1 + Natrium-di(2-ethylhexyl)sulfosuccinat, A2 + Rapsölmethylester z.B. Edenor oder Actirob + Na₂CO₃ + S2-1 + Natrium-di(2-ethylhexyl)sulfosuccinat, A3 + Solvesso + Na₂CO₃ + S2-1 + Natrium-di(2-ethylhexyl)sulfosuccinat, A3 + Bayol + Na₂CO₃ + S2-1 + Natrium-di(2-ethylhexyl)sulfosuccinat, A3 + Rapsölmethylester z.B. Edenor oder Actirob + Na₂CO₃ + S2-1 + Natrium-di(2-ethylhexyl)sulfosuccinat, A4 + Solvesso + Na₂CO₃ + S2-1 + Natrium-di(2-ethylhexyl)sulfosuccinat, A4 + Bayol + Na₂CO₃ + S2-1 + Natrium-di(2-ethylhexyl)sulfosuccinat, A4 + Rapsölmethylester z.B. Edenor oder Actirob + Na₂CO₃ + S2-1 + Natrium-di(2-ethylhexyl)sulfosuccinat, A5 + Solvesso + Na₂CO₃ + S2-1 + Natrium-di(2-ethylhexyl)sulfosuccinat, A5 + Bayol + Na₂CO₃ + S2-1 + Natrium-di(2-ethylhexyl)sulfosuccinat, A5 + Rapsölmethylester z.B. Edenor oder Actirob + Na₂CO₃ + S2-1 + Natrium-di(2-ethylhexyl)sulfosuccinat, A6 + Solvesso + Na₂CO₃ + S2-1 + Natrium-di(2-ethylhexyl)sulfosuccinat, A6 + Bayol + Na₂CO₃ + S2-1 + Natrium-di(2-ethylhexyl)sulfosuccinat, A6 + Rapsölmethylester z.B. Edenor oder Actirob + Na₂CO₃ + S2-1 + Natrium-di(2-ethylhexyl)sulfosuccinat, A7 + Solvesso + Na₂CO₃ + S2-1 + Natrium-di(2-ethylhexyl)sulfosuccinat, A7 + Bayol + Na₂CO₃ + S2-1 + Natrium-di(2-ethylhexyl)sulfosuccinat, A7 + Rapsölmethylester z.B. Edenor oder Actirob + Na₂CO₃ + S2-1 + Natrium-di(2-ethylhexyl)sulfosuccinat, A8 + Solvesso + Na₂CO₃ + S2-1 + Natrium-di(2-ethylhexyl)sulfosuccinat, A8 + Bayol + Na₂CO₃ + S2-1 + Natrium-di(2-ethylhexyl)sulfosuccinat, A8 + Rapsölmethylester z.B. Edenor oder Actirob + Na₂CO₃ + S2-1 + Natrium-di(2-ethylhexyl)sulfosuccinat, A9 + Solvesso + Na₂CO₃ + S2-1 + Natrium-di(2-ethylhexyl)sulfosuccinat, A9 + Bayol + Na₂CO₃ + S2-1 + Natrium-di(2-ethylhexyl)sulfosuccinat, A9 + Rapsölmethylester z.B. Edenor oder Actirob + Na₂CO₃ + S2-1 + Natrium-di(2-ethylhexyl)sulfosuccinat, A10 + Solvesso + Na₂CO₃ + S2-1 + Natrium-di(2-ethylhexyl)sulfosuccinat, A10 + Bayol + Na₂CO₃ + S2-1 + Natrium-di(2-ethylhexyl)sulfosuccinat, A10 + Rapsölmethylester z.B. Edenor oder Actirob + Na₂CO₃ + S2-1 + Natrium-di(2-ethylhexyl)sulfosuccinat, A11 + Solvesso + Na₂CO₃ + S2-1 + Natrium-di(2-ethylhexyl)sulfosuccinat, A11 + Bayol + Na₂CO₃ + S2-1 + Natrium-di(2-ethylhexyl)sulfosuccinat, A11 + Rapsölmethylester z.B. Edenor oder Actirob + Na₂CO₃ + S2-1 + Natrium-di(2-ethylhexyl)sulfosuccinat, A12 + Solvesso + Na₂CO₃ + S2-1 + Natrium-di(2-ethylhexyl)sulfosuccinat, A12 + Bayol + Na₂CO₃ + S2-1 + Natrium-di(2-ethylhexyl)sulfosuccinat, A12 + Rapsölmethylester z.B. Edenor oder Actirob + Na₂CO₃ + S2-1 + Natrium-di(2-ethylhexyl)sulfosuccinat,
   A13 + Solvesso + Na₂CO₃ + S2-1 + Natrium-di(2-ethylhexyl)sulfosuccinat, A13 + Bayol + Na₂CO₃ + S2-1 + Natrium-di(2-ethylhexyl)sulfosuccinat, A13 + Rapsölmethylester z.B. Edenor oder Actirob + Na₂CO₃ + S2-1 + Natrium-di(2-ethylhexyl)sulfosuccinat, A14 + Solvesso + Na₂CO₃ + S2-1 + Natrium-di(2-ethylhexyl)sulfosuccinat, A14 + Bayol + Na₂CO₃ + S2-1 + Natrium-di(2-ethylhexyl)sulfosuccinat, A14 + Rapsölmethylester z.B. Edenor oder Actirob + Na₂CO₃ + S2-1 + Natrium-di(2-ethylhexyl)sulfosuccinat,
   A1 + Solvesso + K₂CO₃ + S2-1 + Natrium-di(2-ethylhexyl)sulfosuccinat, A1 + Bayol + K₂CO₃ + S2-1 + Natrium-di(2-ethylhexyl)sulfosuccinat, A1 + Rapsölmethylester z.B. Edenor ode Actirob + K₂CO₃ + S2-1 + Natrium-di(2-ethylhexyl)sulfosuccinat,
   A2 + Solvesso + K₂CO₃ + S2-1 + Natrium-di(2-ethylhexyl)sulfosuccinat, A2 + Bayol + K₂CO₃ + S2-1 + Natrium-di(2-ethylhexyl)sulfosuccinat, A2 + Rapsölmethylester z.B. Edenor oder Actirob + K₂CO₃ + S2-1 + Natrium-di(2-ethylhexyl)sulfosuccinat,
   A3 + Solvesso + K₂CO₃ + S2-1 + Natrium-di(2-ethylhexyl)sulfosuccinat, A3 + Bayol + K₂CO₃ + S2-1 + Natrium-di(2-ethylhexyl)sulfosuccinat, A3 + Rapsölmethylester z.B. Edenor oder Actirob + K₂CO₃ + S2-1 + Natrium-di(2-ethylhexyl)sulfosuccinat,
   A4 + Solvesso + K₂CO₃ + S2-1 + Natrium-di(2-ethylhexyl)sulfosuccinat, A4 + Bayol + K₂CO₃ + S2-1 + Natrium-di(2-ethylhexyl)sulfosuccinat, A4 + Rapsölmethylester z.B. Edenor oder Actirob + K₂CO₃ + S2-1 + Natrium-di(2-ethylhexyl)sulfosuccinat,
   A5 + Solvesso + K₂CO₃ + S2-1 + Natrium-di(2-ethylhexyl)sulfosuccinat, A5 + Bayol + K₂CO₃ + S2-1 + Natrium-di(2-ethylhexyl)sulfosuccinat, A5 + Rapsölmethylester z.B. Edenor oder Actirob + K₂CO₃ + S2-1 + Natrium-di(2-ethylhexyl)sulfosuccinat,
   A6 + Solvesso + K₂CO₃ + S2-1 + Natrium-di(2-ethylhexyl)sulfosuccinat, A6 + Bayol + K₂CO₃ + S2-1 + Natrium-di(2-ethylhexyl)sulfosuccinat, A6 + Rapsölmethylester z.B. Edenor oder Actirob + K₂CO₃ + S2-1 + Natrium-di(2-ethylhexyl)sulfosuccinat,
   A7 + Solvesso + K₂CO₃ + S2-1 + Natrium-di(2-ethylhexyl)sulfosuccinat, A7 + Bayol + K₂CO₃ + S2-1 + Natrium-di(2-ethylhexyl)sulfosuccinat, A7 + Rapsölmethylester z.B. Edenor oder Actirob + K₂CO₃ + S2-1 + Natrium-di(2-ethylhexyl)sulfosuccinat,
   A8 + Solvesso + K₂CO₃ + S2-1 + Natrium-di(2-ethylhexyl)sulfosuccinat, A8 + Bayol + K₂CO₃ + S2-1 + Natrium-di(2-ethylhexyl)sulfosuccinat, A8 + Rapsölmethylester z.B. Edenor oder Actirob + K₂CO₃ + S2-1 + Natrium-di(2-ethylhexyl)sulfosuccinat,
   A9 + Solvesso + K₂CO₃ + S2-1 + Natrium-di(2-ethylhexyl)sulfosuccinat, A9 + Bayol + K₂CO₃ + S2-1 + Natrium-di(2-ethylhexyl)sulfosuccinat, A9 + Rapsölmethylester z.B. Edenor oder Actirob + K₂CO₃ + S2-1 + Natrium-di(2-ethylhexyl)sulfosuccinat,
   A10 + Solvesso + K₂CO₃ + S2-1 + Natrium-di(2-ethylhexyl)sulfosuccinat, A10 + Bayol + K₂CO₃ + S2-1 + Natrium-di(2-ethylhexyl)sulfosuccinat, A10 + Rapsölmethylester z.B. Edenor oder Actirob + K₂CO₃ + S2-1 + Natrium-di(2-ethylhexyl)sulfosuccinat, A11 + Solvesso + K₂CO₃ + S2-1 + Natrium-di(2-ethylhexyl)sulfosuccinat, A11 + Bayol + K₂CO₃ + S2-1 + Natrium-di(2-ethylhexyl)sulfosuccinat, A11 + Rapsölmethylester z.B. Edenor oder Actirob + K₂CO₃ + S2-1 + Natrium-di(2-ethylhexyl)sulfosuccinat, A12 + Solvesso + K₂CO₃ + S2-1 + Natrium-di(2-ethylhexyl)sulfosuccinat, A12 + Bayol + K₂CO₃ + S2-1 + Natrium-di(2-ethylhexyl)sulfosuccinat, A12 + Rapsölmethylester z.B. Edenor oder Actirob + K₂CO₃ + S2-1 + Natrium-di(2-ethylhexyl)sulfosuccinat, A13 + Solvesso + K₂CO₃ + S2-1 + Natrium-di(2-ethylhexyl)sulfosuccinat, A13 + Bayol + K₂CO₃ + S2-1 + Natrium-di(2-ethylhexyl)sulfosuccinat, A13 + Rapsölmethylester z.B. Edenor oder Actirob + K₂CO₃ + S2-1 + Natrium-di(2-ethylhexyl)sulfosuccinat, A14 + Solvesso + K₂CO₃ + S2-1 + Natrium-di(2-ethylhexyl)sulfosuccinat, A14 + Bayol + K₂CO₃ + S2-1 + Natrium-di(2-ethylhexyl)sulfosuccinat, A14 + Rapsölmethylester z.B. Edenor oder Actirob + K₂CO₃ + S2-1 + Natrium-di(2-ethylhexyl)sulfosuccinat,
   A1 + Solvesso + NaHCO₃ + S2-1 + Natrium-di(2-ethylhexyl)sulfosuccinat, A1 + Bayol + NaHCO₃ + S2-1 + Natrium-di(2-ethylhexyl)sulfosuccinat, A1 + Rapsölmethylester z.B. Edenor oder Actirob + NaHCO₃ + S2-1 + Natrium-di(2-ethylhexyl)sulfosuccinat, A2 + Solvesso + NaHCO₃ + S2-1 + Natrium-di(2-ethylhexyl)sulfosuccinat, A2 + Bayol + NaHCO₃ + S2-1 + Natrium-di(2-ethylhexyl)sulfosuccinat, A2 + Rapsölmethylester z.B. Edenor oder Actirob + NaHCO₃ + S2-1 + Natrium-di(2-ethylhexyl)sulfosuccinat, A3 + Solvesso + NaHCO₃ + S2-1 + Natrium-di(2-ethylhexyl)sulfosuccinat, A3 + Bayol + NaHCO₃ + S2-1 + Natrium-di(2-ethylhexyl)sulfosuccinat, A3 + Rapsölmethylester z.B. Edenor oder Actirob + NaHCO₃ + S2-1 + Natrium-di(2-ethylhexyl)sulfosuccinat, A4 + Solvesso + NaHCO₃ + S2-1 + Natrium-di(2-ethylhexyl)sulfosuccinat, A4 + Bayol + NaHCO₃ + S2-1 + Natrium-di(2-ethylhexyl)sulfosuccinat, A4 + Rapsölmethylester z.B. Edenor oder Actirob + NaHCO₃ + S2-1 + Natrium-di(2-ethylhexyl)sulfosuccinat, A5 + Solvesso + NaHCO₃ + S2-1 + Natrium-di(2-ethylhexyl)sulfosuccinat, A5 + Bayol + NaHCO₃ + S2-1 + Natrium-di(2-ethylhexyl)sulfosuccinat, A5 + Rapsölmethylester z.B. Edenor oder Actirob + NaHCO₃ + S2-1 + Natrium-di(2-ethylhexyl)sulfosuccinat, A6 + Solvesso + NaHCO₃ + S2-1 + Natrium-di(2-ethylhexyl)sulfosuccinat, A6 + Bayol + NaHCO₃ + S2-1 + Natrium-di(2-ethylhexyl)sulfosuccinat, A6 + Rapsölmethylester z.B. Edenor oder Actirob + NaHCO₃ + S2-1 + Natrium-di(2-ethylhexyl)sulfosuccinat, A7 + Solvesso + NaHCO₃ + S2-1 + Natrium-di(2-ethylhexyl)sulfosuccinat, A7 + Bayol + NaHCO₃ + S2-1 + Natrium-di(2-ethylhexyl)sulfosuccinat, A7 + Rapsölmethylester z.B. Edenor oder Actirob + NaHCO₃ + S2-1 + Natrium-di(2-ethylhexyl)sulfosuccinat, A8 + Solvesso + NaHCO₃ + S2-1 + Natrium-di(2-ethylhexyl)sulfosuccinat, A8 + Bayol + NaHCO₃ + S2-1 + Natrium-di(2-ethylhexyl)sulfosuccinat, A8 + Rapsölmethylester z.B. Edenor oder Actirob + NaHCO₃ + S2-1 + Natrium-di(2-ethylhexyl)sulfosuccinat, A9 + Solvesso + NaHCO₃ + S2-1 + Natrium-di(2-ethylhexyl)sulfosuccinat, A9 + Bayol + NaHCO₃ + S2-1 + Natrium-di(2-ethylhexyl)sulfosuccinat, A9 + Rapsölmethylester z.B. Edenor oder Actirob + NaHCO₃ + S2-1 + Natrium-di(2-ethylhexyl)sulfosuccinat, A10 + Solvesso + NaHCO₃ + S2-1 + Natrium-di(2-ethylhexyl)sulfosuccinat, A10 + Bayol + NaHCO₃ + S2-1 + Natrium-di(2-ethylhexyl)sulfosuccinat, A10 + Rapsölmethylester z.B. Edenor oder Actirob + NaHCO₃ + S2-1 + Natrium-di(2-ethylhexyl)sulfosuccinat, A11 + Solvesso + NaHCO₃ + S2-1 + Natrium-di(2-ethylhexyl)sulfosuccinat, A11 + Bayol + NaHCO₃ + S2-1 + Natrium-di(2-ethylhexyl)sulfosuccinat, A11 + Rapsölmethylester z.B. Edenor oder Actirob + NaHCO₃ + S2-1 + Natrium-di(2-ethylhexyl)sulfosuccinat, A12 + Solvesso + NaHCO₃ + S2-1 + Natrium-di(2-ethylhexyl)sulfosuccinat, A12 + Bayol + NaHCO₃ + S2-1 + Natrium-di(2-ethylhexyl)sulfosuccinat, A12 + Rapsölmethylester z.B. Edenor oder Actirob + NaHCO₃ + S2-1 + Natrium-di(2-ethylhexyl)sulfosuccinat, A13 + Solvesso + NaHCO₃ + S2-1 + Natrium-di(2-ethylhexyl)sulfosuccinat, A13 + Bayol + NaHCO₃ + S2-1 + Natrium-di(2-ethylhexyl)sulfosuccinat, A13 + Rapsölmethylester z.B. Edenor oder Actirob + NaHCO₃ + S2-1 + Natrium-di(2-ethylhexyl)sulfosuccinat, A14 + Solvesso + NaHCO₃ + S2-1 + Natrium-di(2-ethylhexyl)sulfosuccinat, A14 + Bayol + NaHCO₃ + S2-1 + Natrium-di(2-ethylhexyl)sulfosuccinat, A14 + Rapsölmethylester z.B. Edenor oder Actirob + NaHCO₃ + S2-1 + Natrium-di(2-ethylhexyl)sulfosuccinat,
   A1 + Solvesso + KHCO₃ + S2-1 + Natrium-di(2-ethylhexyl)sulfosuccinat, A1 + Bayol + KHCO₃ + S2-1 + Natrium-di(2-ethylhexyl)sulfosuccinat, A1 + Rapsölmethylester z.B. Edenor oder Actirob + KHCO₃ + S2-1 + Natrium-di(2-ethylhexyl)sulfosuccinat, A2 + Solvesso + KHCO₃ + S2-1 + Natrium-di(2-ethylhexyl)sulfosuccinat, A2 + Bayol + KHCO₃ + S2-1 + Natrium-di(2-ethylhexyl)sulfosuccinat, A2 + Rapsölmethylester z.B. Edenor oder Actirob + KHCO₃ + S2-1 + Natrium-di(2-ethylhexyl)sulfosuccinat, A3 + Solvesso + KHCO₃ + S2-1 + Natrium-di(2-ethylhexyl)sulfosuccinat, A3 + Bayol + KHCO₃ + S2-1 + Natrium-di(2-ethylhexyl)sulfosuccinat, A3 + Rapsölmethylester z.B. Edenor oder Actirob + KHCO₃ + S2-1 + Natrium-di(2-ethylhexyl)sulfosuccinat, A4 + Solvesso + KHCO₃ + S2-1 + Natrium-di(2-ethylhexyl)sulfosuccinat, A4 + Bayol + KHCO₃ + S2-1 + Natrium-di(2-ethylhexyl)sulfosuccinat, A4 + Rapsölmethylester z.B. Edenor oder Actirob + KHCO₃ + S2-1 + Natrium-di(2-ethylhexyl)sulfosuccinat, A5 + Solvesso + KHCO₃ + S2-1 + Natrium-di(2-ethylhexyl)sulfosuccinat, A5 + Bayol + KHCO₃ + S2-1 + Natrium-di(2-ethylhexyl)sulfosuccinat, A5 + Rapsölmethylester z.B. Edenor oder Actirob + KHCO₃ + S2-1 + Natrium-di(2-ethylhexyl)sulfosuccinat, A6 + Solvesso + KHCO₃ + S2-1 + Natrium-di(2-ethylhexyl)sulfosuccinat, A6 + Bayol + KHCO₃ + S2-1 + Natrium-di(2-ethylhexyl)sulfosuccinat, A6 + Rapsölmethylester z.B. Edenor oder Actirob + KHCO₃ + S2-1 + Natrium-di(2-ethylhexyl)sulfosuccinat, A7 + Solvesso + KHCO₃ + S2-1 + Natrium-di(2-ethylhexyl)sulfosuccinat, A7 + Bayol + KHCO₃ + S2-1 + Natrium-di(2-ethylhexyl)sulfosuccinat, A7 + Rapsölmethylester z.B. Edenor oder Actirob + KHCO₃ + S2-1 + Natrium-di(2-ethylhexyl)sulfosuccinat, A8 + Solvesso + KHCO₃ + S2-1 + Natrium-di(2-ethylhexyl)sulfosuccinat, A8 + Bayol + KHCO₃ + S2-1 + Natrium-di(2-ethylhexyl)sulfosuccinat, A8 + Rapsölmethylester z.B. Edenor oder Actirob + KHCO₃ + S2-1 + Natrium-di(2-ethylhexyl)sulfosuccinat, A9 + Solvesso + KHCO₃ + S2-1 + Natrium-di(2-ethylhexyl)sulfosuccinat, A9 + Bayol + KHCO₃ + S2-1 + Natrium-di(2-ethylhexyl)sulfosuccinat, A9 + Rapsölmethylester z.B. Edenor oder Actirob + KHCO₃ + S2-1 + Natrium-di(2-ethylhexyl)sulfosuccinat, A10 + Solvesso + KHCO₃ + S2-1 + Natrium-di(2-ethylhexyl)sulfosuccinat, A10 + Bayol + KHCO₃ + S2-1 + Natrium-di(2-ethylhexyl)sulfosuccinat, A10 + Rapsölmethylester z.B. Edenor oder Actirob + KHCO₃ + S2-1 + Natrium-di(2-ethylhexyl)sulfosuccinat, A11 + Solvesso + KHCO₃ + S2-1 + Natrium-di(2-ethylhexyl)sulfosuccinat, A11 + Bayol + KHCO₃ + S2-1 + Natrium-di(2-ethylhexyl)sulfosuccinat, A11 + Rapsölmethylester z.B. Edenor oder Actirob + KHCO₃ + S2-1 + Natrium-di(2-ethylhexyl)sulfosuccinat, A12 + Solvesso + KHCO₃ + S2-1 + Natrium-di(2-ethylhexyl)sulfosuccinat, A12 + Bayol + KHCO₃ + S2-1 + Natrium-di(2-ethylhexyl)sulfosuccinat, A12 + Rapsölmethylester z.B. Edenor oder Actirob + KHCO₃ + S2-1 + Natrium-di(2-ethylhexyl)sulfosuccinat, A13 + Solvesso + KHCO₃ + S2-1 + Natrium-di(2-ethylhexyl)sulfosuccinat, A13 + Bayol + KHCO₃ + S2-1 + Natrium-di(2-ethylhexyl)sulfosuccinat, A13 + Rapsölmethylester z.B. Edenor oder Actirob + KHCO₃ + S2-1 + Natrium-di(2-ethylhexyl)sulfosuccinat, A14 + Solvesso + KHCO₃ + S2-1 + Natrium-di(2-ethylhexyl)sulfosuccinat, A14 + Bayol + KHCO₃ + S2-1 + Natrium-di(2-ethylhexyl)sulfosuccinat, A14 + Rapsölmethylester z.B. Edenor oder Actirob + KHCO₃ + S2-1 + Natrium-di(2-ethylhexyl)sulfosuccinat.

In den vorgenannten Kombinationen können auch mehrere Sulfonamide als Komponente a) miteinander kombiniert und gemeinsam zur Bekämpfung von Schadpflanzen in Pflanzenkulturen eingesetzt werden.

So können in einer bevorzugten Ausführungsform als Komponente a) z.B. verschiedene Sulfonamide der Formel (I) und/oder deren Salze miteinander kombiniert werden, z.B.
Mesosulfuron-methyl + Iodosulfuron-methyl,
Mesosulfuron-methyl + Iodosulfuron-methyl-Natrium,
Mesosulfuron-methyl + Foramsulfuron,
Mesosulfuron-methyl + Foramsulfuron-Natrium,
Mesosulfuron-methyl-Natrium + lodosulfuron-methyl,
Mesosulfuron-methyl-Natrium + lodosulfuron-methyl-Natrium,
Mesosulfuron-methyl-Natrium + Foramsulfuron,
Mesosulfuron-methyl-Natrium + Foramsulfuron-Natrium,
Foramsulfuron + lodosulfuron-methyl,
Foramsulfuron + lodosulfuron-methyl-Natrium,
Foramsulfuron-Natrium + lodosulfuron-methyl,
Foramsulfuron-Natrium + lodosulfuron-methyl-Natrium,
Amidosulfuron + lodosulfuron-methyl,
Amidosulfuron + lodosulfuron-methyl-Natrium,
Amidosulfuron-Natrium + lodosulfuron-methyl,
Amidosulfuron-Natrium + lodosulfuron-methyl-Natrium,
Ethoxysulfuron + lodosulfuron-methyl,
Ethoxysulfuron + lodosulfuron-methyl-Natrium,
Ethoxysulfuron-Natrium + lodosulfuron-methyl,
Ethoxysulfuron-Natrium + lodosulfuron-methyl-Natrium,
Propoxycarbazone + Mesosulfuron-methyl,
Propoxycarbazone + Mesosulfuron-methyl-Natrium,
Propoxycarbazone-Natrium + Mesosulfuron-methyl
Propoxycarbazone-Natrium + Mesosulfuron-methyl-Natrium
Propoxycarbazone + lodosulfuron-methyl,
Propoxycarbazone + lodosulfuron-methyl-Natrium,
Propoxycarbazone-Natrium + lodosulfuron-methyl,
Propoxycarbazone-Natrium + Iodosulfuron-methyl-Natrium,
Flucarbazone + Mesosulfuron-methyl,
Flucarbazone + Mesosulfuron-methyl-Natrium,
Flucarbazone -Natrium + Mesosulfuron-methyl
Flucarbazone -Natrium + Mesosulfuron-methyl-Natrium
Flucarbazone + lodosulfuron-methyl,
Flucarbazone + lodosulfuron-methyl-Natrium,
Flucarbazone -Natrium + Iodosulfuron-methyl,
Flucarbazone -Natrium + lodosulfuron-methyl-Natrium.

Die Sulfonamide a) und deren Mischungen, z.B. die vorgenannten Wirkstoffmischungen von Sulfonamiden der Formel (I) und/oder deren Salze, können mit einem oder mehreren Safenem kombiniert werden, insbesondere mit den Safenem Mefenpyr-diethyl (S1-1), Isoxadifen-ethyl (S1-9) und Cloquintocet-mexyl (S2-1).

Die erfindungsgemäßen Flüssigformulierungen können durch bekannte Verfahren, z.B. durch Vermischen der Komponenten hergestellt werden. So können z.B. die Komponenten a) und c) sowie die optional enthaltenen Komponenten d), e) und f) in beliebiger Reihenfolge in dem Lösungsmittel b) gelöst werden. Um die Lösungsprozesse zu beschleunigen kann bei erhöhter Temperatur und unter Einwirkung externer Kräfte, z.B. mit Mischern, gearbeitet werden. Die Einhaltung einer bestimmten Zugabereihenfolge der Komponenten kann je nach Lösungsverhalten der einzelnen Komponenten sinnvoll sein.

Sind nicht alle Komponenten in dem Lösungsmittel b) löslich, werden bevorzugt erst die löslichen Komponenten in dem Lösungsmittel b) gelöst und die nicht löslichen Komponenten in diese Vorlösung eindispergiert. Die entstehende Ölsuspension kann anschließend einer Naßvermahlung unterzogen werden. Zur Herstellung der Formulierung kann es sinnvoll sein entsprechende Vorsuspensionen herzustellen, die lediglich bestimmte Anteile der einzelnen Komponenten enthalten. Die im Lösungsmittel unlöslichen Komponenten können gegebenenfalls vor der Einarbeitung in die Formulierung einer Trockenvermahlung unterzogen werden, hierdurch kann unter Umständen auf eine Naßvermahlung verzichtet werden.

Zur Herstellung der Mischungen können gängige Mischapparate verwendet werden, die gegebenenfalls temperiert werden. Zur Vorvermahlung können z.B. Hochdruckhomogenisatoren oder nach dem Rotor-Stator Prinzip arbeitende Mühlen verwendet werden, wie Ultraturax-Homogenisatoren, z.B. der Fa. IKA, oder Zahnkolloidmühlen, z.B. der Fa. Puck. Für die Feinvermahlung können z.B. diskontinuierliche Perlmühlen, z.B. der Fa. Drais oder kontinuierliche Perlmühlen, der z.B. Fa. Bachofen verwendet werden. Je nach den Eigenschaften der eingesetzten Komponenten, sowie verfahrens- und sicherheitstechnsichen Anforderungen und aus wirtschaftlichen Gründen, kann das Herstellverfahren angepaßt und gegebenenfalls auf eine Vorvermahlung oder auch auf eine Feinvermahlung verzichtet werden.

Die zur Herstellung eingesetzten Komponenten a) bis f) können Wasser als Nebenbestandteil enthalten, welches sich in den erfindungsgemäßen Flüssigformulierungen wiederfindet. Die erfindungsgemäßen Flüssigformulierungen können daher geringe Mengen von Wasser enthalten, im allgemeinen von 0 bis 5 Gew.%. Soweit Wasser enthalten ist, liegt dieses gelöst vor, vorzugsweise in dem organischen Lösungsmittel, das Wasser bildet also keine kontinuierliche Phase.

Zur Anwendung können die erfindungsgemäßen Flüssigformulierungen gegebenenfalls in üblicher Weise, z.B. zu Emulsionen, Suspensionen, Suspoemulsionen oder Lösungen, verdünnt werden, z.B. mittels Wasser. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche flüssigen herbiziden Mittel, auf Basis der erfindungsgemäßen Flüssigformulierungen.

Die erfindungsgemäßen herbiziden Mittel (im nachfolgenden stets auch die erfindungsgemäßen Flüssigformulierungen umfassend) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei können die Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen herbiziden Mitteln ist in der Regel günstig. Als besonderer Vorteil fällt ins Gewicht, daß die in den herbizide Mitteln verwendeten und wirksamen Dosierungen von herbiziden Verbindungen so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs (z.B. Schadpflanzen wie monokotyle oder dikotyle Unkräuter oder unerwünschte Kulturpflanzen), vorzugsweise in Pflanzenkulturen wie Getreide (z.B. Weizen, Gerste, Roggen, Hafer, Reis, Mais, Hirse); Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei ein oder mehrere erfindungsgemäße herbizide Mittel auf die Pflanzen (z.B. Schadpflanzen), Pflanzenteile, das Saatgut (z.B. Pflanzensamen) oder die Fläche auf der die Pflanzen wachsen (z.B. die Anbaufläche) appliziert werden.

Die Pflanzenkulturen können auch gentechnisch verändert oder durch Mutationsselektion erhalten sein und sind bevorzugt tolerant gegenüber Acetolactatsynthase (ALS)-Inhibitoren.

Die Flüssigformulierung der vorliegenden Erfindung weist eine ausgezeichnete chemische Stabilität während der Herstellung und Lagerung auf, sowie eine ausgezeichnete physikalische Stabilität, eine gute Applizierbarkeit und Anwenderfreundlichkeit, sowie eine hohe biologische Effektivität und Selektivität.

Die Erfindung wird in dem nachfolgenden Beispiel erläütert, ohne dass dieses limitierenden Charakter hat. Die in dem Beispiel verwendeten Abkürzungen haben folgende Bedeutung:
- lodosulfuron: = 3-(4-Methoxy-6-methyl-1,3,5-triazin-2-yl)-1-(2-Carboxy-5-iod-phenylsulfonyl)-harnstoff Natriumsalz
- Mefenpyr: = 1-(2,4-Dichlorphenyl)-5-(ethoxycarbonyl)-5-methyl-2-pyrazolin-3-carbonsäureethylester
- 2,4-D isobutylester: = (2,4-dichlorophenoxy)essigsäure Isobutylester
- Bentone^{®} 34: = modifiziertes Schichtsilikat, Elementis
- Morwet^{®} D425: = Naphthalinsulfat/Formaldehyd-Kondensat, Akzo Nobel
- Emulsogen^{®} EL-400: = polyethoxyliertes Rizinusöl mit 40 Einheiten Ethylenoxid, Clariant
- Genapol^{®} V4739: = polyethoxyliertes iso-Tridecanol mit 6 Einheiten Ethylenoxid, methoxy-verkappt, Clariant
- Jeffsol^{®} PC: = Propylencarbonat, Huntsman
- Solvesso^{®} 200: = aromatisches Mineralöl (Siedebereich 219-281 °C), Exxon
- Triton^{®} GR-7M E: = Di(2-Ethylhexyl)sulfosuccinat Natriumsalz in aromatischen Lösungsmittel, Dow Chemicals
- Natriumcarbonat: = Na₂CO₃, Fluka

### Beispiel 1:

### Herstellung einer Flüssigformulierung

Es wurde eine Vormischung hergestellt, wobei alle löslichen Komponenten d), e) und f) in dem Lösungsmittel b) gelöst wurden. Nach Abschluß des Lösungsprozesses wurde der feste ALS-Inhibitor a), das anorganische Salz c) und gegebenenfalls unlöslische Komponenten in die Mischung suspendiert. Die grobe Suspension wurde, nach einer Vorvermahlung, einer Feinvermahlung unterzogen. Die Konzentration an lodosulfuron wurde mittels HPLC nach der Herstellung der Flüssigformulierung sowie nach achtwöchiger Lagerung bei 40°C (8w40°C) bestimmt.

**Tabelle 1: Chemische Stabilität der Komponente a) bei Herstellung und Lagerung (alle Angaben in Gew.%)**

| | Beispiel 1.1 | Beispiel 1.2 |
|---|---|---|
| 2,4-D isobutylester | 19,6 | 19,6 |
| lodosulfuron | 1,0 | 1,0 |
| Mefenpyr | 3,0 | 3,0 |
| Solvesso^{®} 200 | 28,4 | 23,4 |
| Triton^{®} GR-7M E | 25,0 | 25,0 |
| Genapol^{®} V4739 | 20,0 | 20,0 |
| Emulsogen^{®} EL-400 | 3,0 | 3,0 |
| Jeffsol^{®} PC | - | 0,5 |
| Morwet^{®} D425 | - | 2,0 |
| Bentone^{®} 34 | - | 1,5 |
| Natriumcarbonat | - | 1,0 |
| Konzentration an lodosulfuron | | |
| nach der Herstellung | 0,98 | 1,0 |
| nach 8w40°C | 0,44 | 0,89 |

## Patentansprüche

1. Flüssigformulierung, enthaltend
a) ein oder mehrere herbizide Wirkstoffe aus der Gruppe der Sulfonamide,
b) ein oder mehrere organische Lösungsmittel, und
c) ein oder mehrere anorganische Salze.

2. Flüssigformulierung gemäß Anspruch 1, worin als Komponente a) enthalten sind, ein oder mehrere herbizide Wirkstoffe aus der Gruppe der Triazolopyrimidinsulfonamide, Sulfonylaminocarbonyltriazolinone und Sulfonylharnstoffe.

3. Flüssigformulierung gemäß Anspruch 1 oder 2, worin als Komponente b) enthalten sind, ein oder mehrere organische Lösungsmittel, vorzugsweise aus der Gruppe unsubstituierte oder substituierte Kohlenwasserstoffe, polare Lösungsmittel und Fettsäureester.

4. Flüssigformulierung gemäß einem oder mehreren der Ansprüche 1 bis 3, worin als Komponente c) enthalten sind, ein oder mehrere Carbonate, Hydrogencarbonate, Hydroxide, Oxide, Hypochlorite, Sulfite.

5. Flüssigformulierung gemäß einem oder mehreren der Ansprüche 1 bis 4, zusätzlich enthaltend d) einen oder mehrere von a) verschiedene agrochemische Wirkstoffe, e) eines oder mehrere Sulfosuccinate und/oder f) übliche Hilfs- und Zusatzstoffe.

6. Flüssigformulierung gemäß einem oder mehreren der Ansprüche 1 bis 5, worin als Komponente d) enthalten sind, ein oder mehrere Safener, vorzugsweise aus der Gruppe Dichlorphenylpyrazolin-3-carbonsäure und ihre Ester, 5,5-Diphenyl-2-isoxazolin-3-carbonsäure ihre Ester, und 8-Chinolinoxyessigsäure und ihre Ester.

7. Flüssigformulierung gemäß einem oder mehreren der Ansprüche 1 bis 6, worin als Komponente e) enthalten sind, ein oder mehrere Sulfosuccinate, vorzugsweise aus der Gruppe der Mono- und Diester der Sulfobernsteinsäure.

8. Verfahren zur Herstellung einer Flüssigformulierung gemäß einem oder mehreren der Ansprüche 1 bis 7, worin die Komponenten gemischt und gegebenenfalls vermahlt werden.

9. Verfahren zur Bekämpfung von unerwünschtem Pflanzenwuchs, worin eine wirksame Menge einer Flüssigformulierung gemäß einem oder mehreren der Ansprüche 1 bis 7 auf die Pflanzen, Teile der Pflanzen, das Saatgut, oder die Fläche auf der Pflanzen wachsen, appliziert wird.

10. Verwendung einer Flüssigformulierung gemäß einem oder mehreren der Ansprüche 1 bis 7, zur Bekämpfung von unerwünschtem Pflanzenwuchs.

11. Verwendung einer Flüssigformulierung gemäß einem oder mehreren der Ansprüche 1 bis 7, zur Herstellung eines herbiziden Mittels.

12. Verwendung gemäß Anspruch 11, worin das herbizide Mittel eine Emulsion, Suspension, Suspoemulsion oder Lösung ist.

13. Flüssiges herbizides Mittel, erhältlich durch Verdünnen einer Flüssigformulierung gemäß einem oder mehreren der Ansprüche 1 bis 7.

14. Flüssiges herbizides Mittel gemäß Anspruch 13, worin das herbizide Mittel eine Emulsion, Suspension, Suspoemulsion oder Lösung ist.

15. Flüssiges herbizides Mittel, enthaltend
a) ein oder mehrere herbizide Wirkstoffe aus der Gruppe der Sulfonamide,
b) ein oder mehrere organische Lösungsmittel, und
c) ein oder mehrere anorganische Salze.

16. Flüssiges herbizides Mittel gemäß Anspruch 15, zusätzlich enthaltend d) einen oder mehrere von a) verschiedene agrochemische Wirkstoffe, e) eines oder mehrere Sulfosuccinate und/oder f) übliche Hilfs- und Zusatzstoffe.

17. Flüssiges herbizides Mittel gemäß Anspruch 15 oder 16, zusätzlich enthaltend Wasser.

18. Verfahren zur Bekämpfung von unerwünschtem Pflanzenwuchs, worin eine wirksame Menge eines herbiziden Mittels gemäß einem oder mehreren der Ansprüche 13 bis 17 auf die Pflanzen, Teile der Pflanzen, das Saatgut, oder die Fläche auf der Pflanzen wachsen, appliziert wird.

19. Verwendung eines herbiziden Mittels gemäß einem oder mehreren der Ansprüche 13 bis 17, zur Bekämpfung von unerwünschtem Pflanzenwuchs.

## Claims

1. A liquid formulation, comprising
a) one or more herbicidally active compounds from the group of the sulfonamides,
b) one or more organic solvents, and
c) one or more inorganic salts.

2. The liquid formulation as claimed in claim 1 which comprises, as component a), one or more herbicidally active compounds from the group of the triazolopyrimidinesulfonamides, sulfonylaminocarbonyltriazolinones and sulfonylureas.

3. The liquid formulation as claimed in claim 1 or 2 which comprises, as component b), one or more organic solvents, preferably from the group of the unsubstituted or substituted hydrocarbons, polar solvents and fatty acid esters.

4. The liquid formulation as claimed in one or more of claims 1 to 3 which comprises, as component c), one or more carbonates, bicarbonates, hydroxides, oxides, hypochlorites, sulfites.

5. The liquid formulation as claimed in one or more of claims 1 to 4, which additionally comprises d) one or more agrochemically active compounds different from a), e) one or more sulfosuccinates and/or f) customary auxiliaries and additives.

6. The liquid formulation as claimed in one or more of claims 1 to 5 which comprises, as component d), one or more safeners, preferably from the group of dichlorophenylpyrazoline-3-carboxylic acid and its esters, 5,5-diphenyl-2-isoxazoline-3-carboxylic acid and its esters and 8-quinolineoxyacetic acid and its esters.

7. The liquid formulation as claimed in one or more of claims 1 to 6 which comprises, as component e), one or more sulfosuccinates, preferably from the group of the mono- and diesters of sulfosuccinc acid.

8. A process for preparing a liquid formulation as claimed in one or more of claims 1 to 7, which comprises mixing and, if appropriate, grinding the components.

9. A method for controlling unwanted vegetation, which comprises applying an effective amount of a liquid formulation as claimed in one or more of claims 1 to 7 to the plants, to parts of the plants, to the seed or to the area on which plants grow.

10. The use of a liquid formulation as claimed in one or more of claims 1 to 7 for controlling unwanted vegetation.

11. The use of a liquid formulation as claimed in one or more of claims 1 to 7 for preparing a herbicidal composition.

12. The use as claimed in claim 11 wherein the herbicidal composition is an emulsion, a suspension, a suspoemulsion or a solution.

13. A liquid herbicidal composition, obtainable by diluting a liquid formulation as claimed in one or more of claims 1 to 7.

14. The liquid herbicidal composition as claimed in claim 13 wherein the herbicidal composition is an emulsion, a suspension, a suspoemulsion or a solution.

15. A liquid herbicidal composition, comprising
a) one or more herbicidally active compounds from the group of the sulfonamides,
b) one or more organic solvents, and
c) one or more inorganic salts.

16. The liquid herbicidal composition as claimed in claim 15, which additionally comprises d) one or more agrochemically active compounds different from a), e) one or more sulfosuccinates and/or f) customary auxiliaries and additives.

17. The liquid herbicidal composition as claimed in claim 15 or 16, which additionally comprises water.

18. A method for controlling unwanted vegetation which comprises applying an effective amount of a herbicidal composition as claimed in one or more of claims 13 to 17 to the plants, to parts of the plants, to the seed or to the area on which plants grow.

19. The use of a herbicidal composition as claimed in one or more of claims 13 to 17 for controlling unwanted vegetation.

## Revendications

1. Formulation liquide contenant
a) une ou plusieurs substances actives herbicides prises dans le groupe des sulfonamides
b) un ou plusieurs solvants organiques, et
c) un ou plusieurs sels inorganiques.

2. Formulation liquide selon la revendication 1 contenant, en tant que composant a), une ou plusieurs substances actives herbicides prises dans le groupe constitué par les triazolopyrimidinesulfonamides, les sulfonylaminocarbonyltriazolinones et les sulfonylurées.

3. Formulation liquide selon la revendication 1 ou 2 contenant, en tant que composant b), un ou plusieurs solvants organiques, de préférence pris dans le groupe constitué par les hydrocarbures non substitués ou substitués, les solvants polaires et les esters d'acides gras.

4. Formulation liquide selon une ou plusieurs des revendications 1 à 3 contenant, en tant que composant c), un ou plusieurs carbonates, hydrogénocarbonates, hydroxydes, oxydes, hypochlorites, sulfites.

5. Formulation liquide selon une ou plusieurs des revendications 1 à 4, contenant en outre d) une ou plusieurs substances actives agrochimiques différentes de a), e) un ou plusieurs sulfosuccinates et/ou f) additifs et adjuvants usuels.

6. Formulation liquide selon une ou plusieurs des revendications 1 à 5 contenant en tant que composant d), un ou plusieurs safeners, de préférence pris dans le groupe constitué par l'acide dichlorophénylpyrazoline-3-carboxylique et ses esters, l'acide 5,5-diphényl-2-isoxazoline-3-carboxylique et ses esters et l'acide 8-quinoléinoxyacétique et ses esters.

7. Formulation liquide selon une ou plusieurs des revendications 1 à 6 contenant, en tant que composant e), un ou plusieurs sulfosuccinates, de préférence pris dans le groupe constitué par les mono- et diesters de l'acide sulfosuccinique.

8. Procédé pour la préparation d'une formulation liquide selon une ou plusieurs des revendications 1 à 7, dans laquelle les composants sont mélangés et éventuellement broyés.

9. Procédé pour la lutte contre une croissance végétale indésirable, dans lequel une quantité efficace d'une formulation liquide selon une ou plusieurs des revendications 1 à 7 est appliquée aux plantes, aux parties de plantes, à la semence ou à la surface où poussent les plantes.

10. Utilisation d'une formulation liquide selon une ou plusieurs des revendications 1 à 7, pour la lutte contre une croissance végétale indésirable.

11. Utilisation d'une formulation liquide selon une ou plusieurs des revendications 1 à 7, pour la préparation d'un agent herbicide.

12. Utilisation selon la revendication 11, où l'agent herbicide est une émulsion, une suspension, une suspoémulsion ou une solution.

13. Agent herbicide liquide que l'on peut obtenir par dilution d'une formulation liquide selon une ou plusieurs des revendications 1 à 7.

14. Agent herbicide liquide selon la revendication 13, dans lequel l'agent herbicide est une émulsion, une suspension, une suspoémulsion ou une solution.

15. Agent herbicide liquide contenant
a) une ou plusieurs substances actives herbicides prises dans le groupe constitué par les sulfonamides,
b) un ou plusieurs solvants organiques, et
c) un ou plusieurs sels inorganiques.

16. Agent herbicide liquide selon la revendication 15, contenant en outre d) une ou plusieurs substances actives agrochimiques différentes de a), e) un ou plusieurs sulfosuccinates et/ou f) adjuvants et additifs usuels.

17. Agent herbicide liquide selon la revendication 15 ou 16, contenant en outre de l'eau.

18. Procédé pour la lutte contre une croissance végétale indésirable, dans lequel une quantité efficace d'un agent herbicide selon une ou plusieurs des revendications 13 à 17 est appliquée aux plantes, aux parties de plantes, à la semence ou à la surface où poussent les plantes.

19. Utilisation d'un agent herbicide selon une ou plusieurs des revendications 13 à 17 pour la lutte contre une croissance végétale indésirable.
